(19) Europäisches Patentamt

European Patent Office

Office européen des brevets

(11) **EP 1 029 939 A1**

(12) **EUROPEAN PATENT APPLICATION**
published in accordance with Art. 158(3) EPC

(43) Date of publication:
**23.08.2000 Bulletin 2000/34**

(51) Int. Cl.[7]: **C22F 1/08**, C22C 9/04, B21J 1/02

(21) Application number: **98951730.5**

(22) Date of filing: **09.11.1998**

(86) International application number:
**PCT/JP98/05021**

(87) International publication number:
**WO 99/24631 (20.05.1999 Gazette 1999/20)**

(84) Designated Contracting States:
**AT BE CH DE DK ES FI FR GB GR IT LI NL PT SE**

(30) Priority: **10.11.1997 JP 32520897**
**11.11.1997 JP 32699597**
**27.11.1997 JP 34398897**
**06.03.1998 JP 7327298**
**06.03.1998 JP 7327498**
**06.03.1998 JP 7327598**
**06.03.1998 JP 7327698**
**06.03.1998 JP 7327798**
**06.03.1998 JP 7344598**
**06.03.1998 JP 7344798**

(71) Applicants:
• **TOTO LTD.**
**Kitakyushu-shi, Fukuoka-ken 802-8601 (JP)**
• **Kitz Corporation**
**Chiba-shi, Chiba 261-8577 (JP)**

(72) Inventors:
• **NAKAMURA, Katsuaki**
**Kita-kyusyu-shi, Fukuoka 802-8601 (JP)**
• **YOSHIJIMA, Tadashi**
**Kita-kyusyu-shi, Fukuoka 802-8601 (JP)**
• **ASHIE, Nobuyuki**
**Kita-kyusyu-shi, Fukuoka 802-8601 (JP)**
• **YAMAUCHI, Atsushi**
**Kita-kyusyu-shi, Fukuoka 802-8601 (JP)**
• **UCHIO, Kenji**
**Kita-kyusyu-shi, Fukuoka 802-8601 (JP)**

• **MATSUBARA, Ryuji**
**Kita-kyusyu-shi, Fukuoka 802-8601 (JP)**
• **UCHIDA, Toru**
**Kita-kyusyu-shi, Fukuoka 802-8601 (JP)**
• **TANAKA, Yuki**
**Kita-kyusyu-shi, Fukuoka 802-8601 (JP)**
• **SHIRAISHI, Masateru**
**Kita-kyusyu-shi, Fukuoka 802-8601 (JP)**
• **SUGIMOTO, Ryoichi**
**Kita-kyusyu-shi, Fukuoka 802-8601 (JP)**
• **SAKURAI, Hiroyuki**
**Kita-kyusyu-shi, Fukuoka 802-8601 (JP)**
• **NOJIMA, Hiroshi**
**Kita-kyusyu-shi, Fukuoka 802-8601 (JP)**
• **NAKAO, Kenichiro**
**Kita-kyusyu-shi, Fukuoka 802-8601 (JP)**
• **AYUZAWA, Masanobu**
**Chiba-shi, Chiba 261-8577 (JP)**
• **ABE, Hironori**
**Chiba-shi, Chiba 261-8577 (JP)**
• **ITO, Kozo**
**Chiba-shi, Chiba 261-8577 (JP)**
• **HAGIWARA, Koichi**
**Chiba-shi, Chiba 261-8577 (JP)**

(74) Representative: **HOFFMANN - EITLE**
**Patent- und Rechtsanwälte**
**Arabellastrasse 4**
**81925 München (DE)**

(54) **FORGED BRASS PRODUCT AND CUT BRASS PRODUCT HAVING HIGH CORROSION RESISTANCE AND METHOD OF MANUFACTURING THE SAME**

(57)   A method of manufacturing a forged brass product having a high corrosion resistance, wherein a posterior step, such as a conventional planting step can be omitted, comprises a first step of preparing a brass material, a second step of heating the brass material and then forging, preferably hot or cold forging the resultant material, and a third step of controlling a rate of cooling the forged product and thereby regulating at least one of corrosion resistance, SCC resistance, ero- sion resistance, machinability and strength of the cooled forged product.

Printed by Xerox (UK) Business Services
2.16.7 (HRS)/3.6

FIG. 36

(a)

(b)

## Description

### 1. Technical field

This invention relates to a forged brass product and machined brass product having high corrosion resistance and a method of manufacturing the same.

### 2. Background art

When the case where a forged brass product is used as parts for a flow channel is referred to as an example, it has heretofore been necessary to take a measure to corrosion resistance (dezinking corrosion resistance). For example, in the case of a ball for a ball valve, brass balls are molded by forging and their corrosion resistances are ensured by chromium plating.

However, in the prior art technique, there was drawback of poor productivity accompanied by a plating step such as chromium plating.

Also, when the forged brass product is used as parts contacting with water, it is necessary to take a measure to corrosion resistance (dezinking corrosion resistance), and in the brass material for forging which is inferior in corrosion resistance, a thickness of the material is made thick considering a lost portion by corrosion.

On the other hand, when a sufficient thickness cannot be ensured due to scramble for parts of the product, a brass material for forging excellent in corrosion resistance has been used. This material is to ensure corrosion resistance by forging a crystal structure of $\alpha+\beta$ mixed phase and making the same substantially to an $\alpha$ single, phase due to annealing for a long period of time.

When this brass material for forging excellent in corrosion resistance is to be used, a problem arises in poor productivity accompanied by annealing for a long period of time.

Also, for example, when hollow parts which contact with water are to be produced, it may be considered to use a brass material for machining without using a brass material for forging. However, in the conventional brass material for dezinking corrosion material for machining, whereas the dezinking corrosion resistance can be ensured but SCC (Stress Corrosion Cracking) resistance or erosion-corrosion resistance involves an aspect, which cannot be satisfied and there is an insufficient aspect in machinability.

Moreover, it can be considered to use a brass material for casting without using a brass material for forging. However, according to the conventional brass material for casting, dezinking resistance can be ensured but there are insufficient aspects in SCC resistance and erosion-corrosion resistance. In addition, it is also required to effect deburring, machining processing, surface polishing processing, etc., and yet, a nest leakage test is required so that productivity is poor and a manufacturing cost becomes high.

The present invention is to provide a forged brass product which is excellent in corrosion resistance which requires no post-treatment such as a plating process, etc., and to provide a forged product excellent in SCC resistance, an erosion-corrosion resistance, machinability, and strength which also requires no post-treatment, as a first object.

The present invention aimed that these problems are based on the fact that there is no brass material, which shows excellent characteristics during hot and warm processing and also shows excellent characteristics such as machinability required thereafter.

The present invention is to provide a forged brass material, which is excellent in corrosion resistance, SCC resistance erosion-corrosion resistance, machinability and strength as a second object.

Also, similarly, the present invention is to provide a brass machining product excellent in corrosion resistance, SCC resistance erosion-corrosion resistance, machinability and strength in view of the fact that no brass material exists, which shows excellent characteristics during machining processing, and also shows excellent characteristics such as corrosion resistance required thereafter, as a third object.

Moreover, in the present invention, it is the first object to provide a forged brass product excellent in corrosion resistance without effecting annealing for a long period of time, and the fourth object is to provide a brass machining product excellent in corrosion resistance.

### 3. Disclosure of the invention

As the first aspect of the present invention, by producing a forged brass product excellent in corrosion resistance, etc., through a first step of preparing a brass material, a second step of subjecting, after heating, to forging, preferably warm forging or hot forging, and a third step of controlling at least one of corrosion resistance, SCC resistance, erosion-corrosion resistance, machinability and strength after cooling by controlling cooling rate after forging, whereby the conventional post-treatment such as a plating step, etc. can be abbreviated.

For providing a forged brass product excellent in corrosion resistance, etc., it is desired to prepare a brass material with an apparent Zn content of 37 to 46 wt%, and further an average crystal particle size of 15 μm or less, preferably 10 μm or less. Also, to make the crystal particle size fine is a preferred embodiment for heightening corrosion resistance, etc. as described below so that the second and the third steps are preferably carried out under the conditions at which the crystal particle size are not coarsened.

As a preferred embodiment, for obtaining better forging property than the conventional one in the second step, the brass material desirably has a crystal structure at the temperature region of 480 to 750°C in which it is an α+β phase, an areal ratio of a β phase is 30 to 80%, average crystal grain sizes thereof are 15 μm or less, preferably 10 μm or less, and α and β phases are uniformly dispersed. According to such a crystal structure, at the temperature region of 480 to 750°C, at least one of the characteristics wherein there is no breakage even when a 160% strain is given with a strain rate of 0.00083/sec, there is no breakage even when a 50% strain is given with a strain rate of 0.0083/sec, or there is no breakage even when a 30% strain is given with a strain rate of 0.083/sec can be satisfied.

Also, in the third step, by controlling the cooling rate, an areal occupying ratio of the crystal phase after cooling can be controlled. More specifically, when a cooling rate in which the material becomes at 400°C or less is 0.4 K/sec or more, a crystal structure after cooling in which it is an α+β phase, an areal ratio of a β phase is 15% or more, preferably 20% or more, and average crystal grain sizes of an α phase and a β phase are 15 μm or less, preferably 10 μm or less, can be obtained.

And as characteristics after cooling, a characteristic that 0.2% loading endurance or yield stress is 250 N/mm2 or more, a characteristic that a maximum stress at which a sample is not broken is 180 N/mm$^2$ or more when a cylindrical sample is exposed to an ammoniacal atmosphere above a 14% aqueous ammonia solution for 24 hours and then a load is applied, and a characteristic that a machining resistance index using a free-cutting brass bar as a standard measured according to Japanese Industrial Standard JIS C-3604 is 80 or more can be obtained.

Also, when a brass material having an Sn content of 0.7 to 7 wt% is prepared in the first step, a forged brass product excellent in corrosion resistance can be obtained as mentioned hereinbelow.

Here, before explaining corrosion resistance, particularly in the case where the Sn content is 1.7 to 2.2 wt%, by effecting the second step at the temperature region of 300 to 500°C, more preferably 400 to 500°C, a crystal structure after cooling in which it is an α+β+γ phase, an areal ratio of an α phase is 44 to 65%, an areal ratio of a β phase is 10 to 55%, an areal ratio of a γ phase is 1 to 25%, average crystal grain sizes of an α phase, a β phase and a γ phase are 15 μm or less, preferably 10 μm or less, and an α phase, a β phase and a γ phase exist in a dispersed state can be obtained. According to such a crystal structure, at 450°C, at least one of the characteristics wherein there is no breakage even when a 50% strain is given with a strain rate of 0.00083/sec, there is no breakage even when a 25% strain is given with a strain rate of 0.0083/sec, or there is no breakage even when a 30% strain is given with a strain rate of 0.083/sec can be satisfied.

Next, various methods to obtain corrosion resistance are mentioned. (1) First, there is a method in which an Sn concentration in a β phase after cooling is adjusted, preferably an Sn concentration in a β phase after cooling is made 1.5 wt% or more. More specifically, when a cooling rate until the material becomes 400°C or less is 5 to 1000K/sec, after cooling, a crystal structure in which areal ratios of an α+β phase and a β phase after cooling are 20% or more, preferably 25% or more, and average crystal grain sizes of an α phase and a β phase are 15 μm or less, preferably 10 μm or less, and an Sn concentration in the β phase is 1.5 wt% or more could be obtained.

(2) Subsequently, there is a method in which by adjusting an Sn concentration in a γ phase after cooling to make an Sn concentration in a γ phase is made 3.0 wt% or more. More specifically, when a cooling rate until the material becomes 400°C or less is 0.4 to 5 K/sec, after cooling, a crystal structure in which areal ratios of an α+γ phase and a γ phase after cooling are 3 to 30%, preferably 5 to 30%, as well as an average crystal grain size of the α phase is 15 μm or less, preferably 10 μm or less, an average crystal grain size (short diameter) of a γ phase is 8 μm or less, preferably 5 μm or less, and an Sn concentration in the γ phase is 8 wt% or more, and the γ phase is dispersed in the grain boundary of the α phase could be obtained.

(3) In particular, in the case of the three phases of α+β+γ, the β phase is preferably surrounded by the γ phase. More specifically, by making a cooling rate until the material becomes 400° C or less is 0.4 to 10 K/sec, a crystal structure after cooling in which it is an α+β+γ phase, an areal ratio of an α phase is 40 to 94%, areal ratios of β and γ phases are each 3 to 30%, as well as an average crystal grain size of the α and β phase are 15 μm or less, preferably 10 μm or less, an average crystal grain size (short diameter) of a γ phase is 8 μm or less, preferably 5 μm or less, and further an Sn concentration in the γ phase is 8 wt% or more, and the β phase is surrounded by the γ phase could be obtained.

And as the characteristics after cooling, in addition to the above-mentioned characteristics, when a dezinking test according to Japan Brass Makers Association Technical Standard JBMA T-303 is carried out, characteristics satisfying the corrosion resistance of the maximum dezinking depth of 70 μm or less can be obtained. And as a result of the other experiment, characteristics excellent in erosion-corrosion resistance can be obtained.

As the other embodiment for ensuring corrosion resistance, it can be realized by cooling that does not cause coarsening of the crystal grain size whereby making an average crystal grain size after cooling of 15 μm or less, preferably 10 μm or less. When the crystal grain size of the brass material prepared in the first step is already made fine, it is desirable to carry out the second step under the temperature conditions that the crystal grain size does not coarsen.

Here, when the average grain size has already become 15 μm or less, preferably 10 μm or less in the second step, the present applicant has confirmed that an effect of improving forging property can be obtained. That is, when a hot or warm processing is carried out with an apparent Zn content of 27 to 46 wt%, a crystal structure in which a β phase areal-occupying ratio of 30 to 80% which is said to be good in hot ductility can be realized. In addition, by making an average crystal grain size 15 μm or less, preferably 10 μm or less, hot ductility can be markedly improved. (Details are mentioned in already filed PCT/JP97/03152 by the present applicant)

As the preferred embodiment of the present invention, by controlling the cooling rate, machinability after cooling can be also controlled and, and as characteristics after cooling, a machining resistance index using a free-cutting brass bar as a standard measured according to Japanese Industrial Standard JIS C-3604 of 80 or more can be satisfied.

As the embodiment for ensuring a machining resistance, it can be realized, in addition to make an areal-occupying ratio of a β phase 15% or more, by making an areal-occupying ratio of a γ phase after cooling 3% or more and 30% or less and precipitating the γ phase at the grain boundary of the α phase or at the grain boundaries of the α phase and the β phase.

As the other embodiment for ensuring machining resistance, it can be realized by so cooling as to not coarsening the crystal grain size to make an average crystal grain size after cooling of 15 μm or less, preferably 10 μm or less. When the crystal grain size of the brass material prepared in the first step is already made fine, it is desirable to carry out the second step under the temperature conditions that the crystal grain size does not coarsen. In such a case, forging property is also improved as mentioned above.

As the embodiment of the forged brass product excellent in corrosion resistance and machinability, in a crystal structure after cooling, it is an α+β phase, an areal ratio of a β phase is 15% or more, preferably 20% or more, as well as there is a crystal structure in which average crystal grain sizes of an α phase and a β phase are 15 μm or less, preferably 10 μm or less and an Sn concentration in the β phase is 1.5wt% or more.

This crystal structure can be realized by heating to 480°C or higher in the second step and by making a cooling rate in which the material becomes at 400°C or less in the third step 5 to 1000 K/sec.

As the other embodiment of a forged brass product excellent in corrosion resistance and machinability, in a crystal structure after cooling, it is an α+γ phase, an areal ratio of a γ phase is 3 to 30%, preferably 5 to 30%, as well as there is a crystal structure in which an average crystal grain size of an α phase is 15 μm or less, preferably 10 μm or less, an average crystal grain size (short diameter) of a γ phase is 8 μm or less, preferably 5 μm or less, and further an Sn concentration in the γ phase is 8 wt% or more, and the γ phase is dispersed in the grain boundary of the α phase.

This crystal structure can be realized by heating to 480°C or higher in the second step and by making a cooling rate in which the material becomes at 400°C or less in the third step 0.4 to 5 K/sec.

As the still other embodiment of a forged brass product excellent in corrosion resistance and machinability, in a crystal structure after cooling, it is an α+β+γ phase, an areal ratio of an α phase is 40 to 94%, areal ratios of a β phase and a γ phase are both 3 to 30%, as well as there is a crystal structure in which average crystal grain sizes of an α phase and a β phase are 15 μm or less, preferably 10 μm or less, an average crystal grain size (short diameter) of a γ phase is 8 μm or less, preferably 5 μm or less, and further an Sn concentration in the γ phase is 8 wt% or more, and the γ phase is surrounding the β phase.

This crystal structure can be realized by heating to 480°C or higher in the second step and by making a cooling rate in which the material becomes at 400°C or less in the third step 0.4 to 10 K/sec.

As uses of the forged brass product excellent in corrosion resistance or the forged brass product excellent in corrosion resistance and machinability, they are used to water-contacting parts which is contacting with water, preferably to those in which a hollow water-flowing channel is formed by forging or machining of forging, so that its characteristics excellent in corrosion resistance can be effectively utilized. Moreover, by making the crystal structure an areal ratio of a β phase being 30 to 80%, and average crystal grain sizes are 15 μm or less, preferably 10 μm or less, characteristics excellent in hot ductility can be enjoyed.

As the other embodiment of water-contacting parts, in the case of movable parts, it is not an α single phase so that characteristics excellent in strength and abrasion resistance can be effectively utilized, and by making average crystal grain sizes 15 μm or less, preferably 10 μm or less or precipitating a γ phase, strength and abrasion resistance can be more improved.

As the second aspect of the present invention, characteristic feature resides in a forged brass product produced via a first step of preparing a brass material having an apparent Zn content of 37 to 46 wt%, and a second step of applying forging, preferably warm or hot forging after heating the brass material, and the crystal structure in which it is an α+β phase, an areal ratio of a β phase is 15% or more, preferably 20% or more, as well as there is a crystal structure in which average crystal grain sizes of an α phase and a β phase are 15 μm or less, preferably 10 μm or less.

According to such a crystal structure, at least one of characteristics among the characteristics (1) to (3) shown below can be satisfied. (1) A characteristic that 0.2% loading endurance or yield stress is 250 N/mm$^2$ or more, (2) a characteristic that a maximum stress at which a sample is not broken is 180 N/mm$^2$ or more when a cylindrical sample is exposed to an ammoniacal atmosphere above a 14% aqueous ammonia solution for 24 hours and then a load is applied, (3) a characteristic that a machining resistance index using a free-cutting brass bar as a standard measured according to Japanese Industrial Standard JIS C-3604 is 80 or more.

Also, when the brass material prepared in the first step has an average crystal grain size of 15 μm or less, preferably 10 μm or less, in the second step, a crystal structure in which it is an α+β phase, an areal ratio of a β phase is 30 to 80%, average crystal grain sizes thereof are 15 μm or less, preferably 10 μm or less, and α and β phases are uniformly dispersed can be obtained at the temperature region of 480 to 750°C.

And according to such a crystal structure, in the second step, at the temperature region of 480 to 750°C, at least one of the characteristics wherein there is no breakage even when a 160% strain is given with a strain rate of 0.00083/sec, there is no breakage even when a 50% strain is given with a strain rate of 0.0083/sec, or there is no breakage even when a 30% strain is given with a strain rate of 0.083/sec can be satisfied.

In particular, when a brass material with an Sn content of 0.7 to 7 wt% is to be prepared in the first step, a forged brass material excellent in corrosion resistance can be obtained. More specifically, at least one crystal structure of (1) to (3) shown below can be obtained.

(1) a crystal structure wherein it is an α+β phase, an areal ratio of a β phase is 20% or more, average crystal grain sizes of an α phase and a β phase are 15 μm or less, and an Sn concentration in the β phase is 1.5 wt% or more,
(2) a crystal structure wherein it is an α+γ phase, an areal ratio of a γ phase is 3 to 30%, an average crystal grain size of an α phase is 15 μm or less, an average crystal grain size (a short axis) of the γ phase is 8 μm or less, an Sn concentration in the γ phase is 8 wt% or more, and the γ phase is scattered in the grain boundary of the α phase; and
(3) a crystal structure wherein it is an α+β+γ phase, an areal ratio of an α phase is 40 to 94%, areal ratios of a β and γ phases are both 3 to 30%, an average crystal grain size of α and β phase are 15 μm or less, preferably 10 μm or less, an average crystal grain size (a short axis) of the γ phase of 8 μm or less, preferably 5 μm or less, and an Sn concentration in the γ phase is 8 wt% or more and the β phase is surrounded by the γ phase.

According to these crystal structures, first, when a dezinking test according to Japan Brass Makers Association Technical Standard JBMA T-303 is carried out, the corrosion resistance of the maximum dezinking depth of 70 μm or less can be satisfied.

And in addition to corrosion resistance, at least one of characteristics among the characteristics (1) to (3) shown below can be satisfied. (1) A characteristic that 0.2% loading endurance or yield stress is 250 N/mm$^2$ or more, (2) a characteristic that a maximum stress at which a sample is not broken is 180 N/mm$^2$ or more when a cylindrical sample is exposed to an ammoniacal atmosphere above a 14% aqueous ammonia solution for 24 hours and then a load is applied, (3) a characteristic that a machining resistance index using a free-cutting brass bar as a standard measured according to Japanese Industrial Standard JIS C-3604 is 80 or more.

Moreover, when a brass material in which an Sn content is 1.7 to 2.2 wt%, and an average crystal grain size of 15 μm or less, preferably 10 μm or less it to be prepared in the first step, in the second step, at the temperature region of 300 to 500°C, preferably 400 to 500°C, a crystal structure after cooling in which it is an α+β+γ phase, an areal ratio of an α phase is 44 to 65%, an areal ratio of a β phase is 10 to 55%, a γ phase is 1 to 25%, average crystal grain sizes of an α phase, a β phase and a γ phase are 15 μm or less, preferably 10μm or less, and α, β and γ phases exist in a dispersed state can be obtained.

According to such a crystal structure, in the second step, at the temperature of 450°C, at least one of the characteristics wherein there is no breakage even when a 50% strain is given with a strain rate of 0.00083/sec, there is no breakage even when a 25% strain is given with a strain rate of 0.0083/sec, or there is no breakage even when a 30% strain is given with a strain rate of 0.083/sec can be satisfied.

The forged brass product excellent in corrosion resistance as explained above is desirably used in parts for a flowing channel, parts for a water flowing channel or parts for a cooling or heating medium flowing channel for an air conditioner at which a demand for corrosion resistance is high. Also, it may be used as parts for dipping in water such as a protecting tube of a water temperature sensor, etc.

As an embodiment for parts for a flowing channel or parts for a water flowing channel, when it is used as pipe joints such as warm water pipe joints, vinyl chloride pipe joints, etc., a demand for dimensional precision can be matched by practically using the good forging property.

When the pipe joints have a screw portion, it is useful since the aspect of the present invention excellent in machinability can be utilized. Also, as an embodiment, it may be subjected to insert molding to a resin piping.

As the other embodiment for parts for a flowing channel or parts for a water flowing channel, there may be mentioned parts for a flow meter, particularly for parts of a water meter. These have complex shapes for subjecting to commutation at an upper stream of the flow meter, but it is possible to comply with it by the good forging property.

As the other embodiment of parts for a flowing channel or parts for a water flowing channel, they can be used as housing of parts for a pump, or movable parts. As the movable parts, there are impeller, and axis. These are used in a circumstance of a rapid flow rate, and an aspect of the present invention excellent in strength, SCC resistance, and erosion-corrosion resistance can be utilized so that it is useful.

Also, when it is used as water-sealing parts such as a water-sealing ring, an aspect of the present invention excellent in erosion-corrosion resistance can be utilized so that it is useful.

As the still another embodiment of parts for a flowing channel or parts for a water flowing channel, they can be used as housing (a body, a body cap, a bonnet), movable parts (valve axis), sliding member (a valve rod, push shaft) of parts for valve.

Here, in the movable parts, an aspect of the present invention excellent in strength and SCC resistance can be utilized, and in the sliding member, an aspect of the invention excellent in abrasion resistance can be utilized so that it is available. Incidentally, with regard to abrasion resistance, a crystal structure, which precipitates a $\gamma$ phase is more excellent.

As the other example of parts for valve, they can be used as others, flow amount controlling parts such as a constant flow amount valve, etc., and sheet members of a switch valve such as disc, ball, valve seat, etc. In the sheet members of a switch valve, they are used in a circumstance of a rapid flow rate so that an aspect of the present invention excellent in erosion-corrosion resistance can be utilized whereby it is useful.

As the next embodiment of parts for a flowing channel or parts for a water flowing channel, by using them for parts of a water sprayer, particularly for a spray nozzle, further for the parts at the minimum diameter of the spray nozzle, unevenness of spraying or lowering in a sprayed amount due to corrosion can be removed. Incidentally, in the spray nozzle, since it is used in a circumstance of a rapid flow rate, an aspect of the present invention excellent in erosion-corrosion resistance can be utilized so that it is useful.

As the further embodiment of parts for a flowing channel or parts for a water flowing channel, they can be used as parts for sprinkler, and when they are used as movable parts, an aspect of the present invention excellent in strength and SCC resistance can be utilized so that it is useful.

Subsequently, as an embodiment of general parts for a flowing channel, there may be mentioned parts for a fuel flowing channel, and when they are used as parts for a gas fuel flowing channel, they can be used at a burner head or a burner body. Incidentally, when they are used at the burner head, an aspect of the present invention excellent in erosion-corrosion resistance can be utilized at the portion of a rapid flow rate such as a flame hole, etc., so that unevenness in flame due to corrosion can be removed.

Incidentally, as for the fact that a circumstance at which the burner head is used is severe, it is disclosed in known prior art techniques such as Japanese Laid-Open Publication No. 59-122809, Japanese Laid-Open Publication No. 60-20017, etc.

Also, as the other example of parts for a fuel flowing channel, by using them as parts for a vaporized fuel flow channel, particularly, for a vaporizing apparatus, a vaporizing surface, unevenness in vaporization of fuel due to corrosion can be removed. Moreover, for fixing a sheathed heater for heating a vaporizing surface, it has conventionally been known to fix at the time of forging (Japanese Laid-Open Patent Publication No. 63-176913), to fix by cold processing such as press fitting or caulking, etc. (Japanese Laid-Open Patent Publication No. 60-202216, and Japanese Laid-Open Patent Publication No. 60-188713), but a fixing portion which had been fixed by press fitting or caulking is molded by forging so that it is excellent in dimensional accuracy.

As the other example of parts of a fuel flow channel, they can be used as parts of a liquid fuel flow channel. Suitably by using as a fuel spraying apparatus, particularly as a fuel spraying nozzle, further at the minimum diameter portion of a fuel spraying nozzle, it is not necessary to prepare a nozzle and the minimum diameter portion separately as disclosed in the conventional Japanese Laid-Open Publication No. 60-226611 whereby spray unevenness or lowering in a spray amount due to corrosion can be removed. Incidentally, an aspect of the present invention excellent in machinability and erosion-corrosion resistance can be utilized so that it is useful.

Subsequently, as uses of general forged brass product excellent in corrosion resistance, by using as a liquid fuel dipping parts, particularly dipping parts such as gasoline, etc., an aspect of reducing oxidation of a fuel of the present invention can be utilized so that it is useful. For explaining this, it would be useful to recite known techniques as disclosed in Japanese Laid-Open Publication No. 55-117056, Japanese Laid-Open Publication No. 56-83557, Japanese Laid-Open Publication No. 58-113568, and Japanese Laid-Open Publication No. 61-125472.

That is, an effect of metals against oxidation stability of a liquid fuel containing a hydrocarbon such as gasoline, etc., it is an order of Sn, Al, Cr, Ni, Zn, Mn, Co, Fe and Cu. In the present invention, oxidation stability can be improved since Zn and Sn are added to a Cu-based alloy having low oxidation stability.

As the other uses of the forged brass products excellent in corrosion resistance, by using them as a patter for golf, an aspect of the present invention excellent in strength can be utilized, and when they are used as a knob or a handle of a door, an aspect of the present invention excellent in strength or SCC resistance can be utilized so that it is useful.

Also, when they are used as a lock parts such as a key, a lock hole, etc., or outer parts for a wrist watch, aspects of the present invention each excellent in machinability and strength can be utilized so that it is useful.

Next, as uses of a forged brass material excellent in strength, machinability, SCC resistance, abrasion resistance other than corrosion resistance, if they are used as writing implements, an aspect of the present invention excellent in machinability and strength can be utilized, and in addition, they can be used as parts of watches. That is, it is a precision machine so that machinability is required for all parts, strength and SCC resistance are required for outer parts, and strength and abrasion resistance are required for movable parts. Incidentally, with regard to abrasion resistance, a crystal structure in which a $\gamma$ phase is precipitated is more excellent.

Also, as uses of a forged brass material excellent in machinability or abrasion resistance, they may be used as gear parts.

As the third aspect of the present invention, characteristic feature resides in producing a forged brass product through the first step of preparing a brass material satisfying at least one crystal structure among the crystal structures of (1) to (3) shown below, and the second step of applying a machining processing to the brass material.

> (1) a crystal structure wherein it is an $\alpha+\beta$ phase, an areal ratio of a $\beta$ phase is 15% or more, preferably 20% or more, and average crystal grain sizes of $\alpha$ and $\beta$ phases are 15 $\mu$m or less, preferably 10 $\mu$m or less,
> (2) a crystal structure wherein it is an $\alpha+\gamma$ phase, an areal ratio of a $\gamma$ phase is 3 to 30%, preferably 5 to 30%, an average crystal grain size of an $\alpha$ phase is 15 $\mu$m or less, preferably 10 $\mu$m or less, an average crystal grain size (a short axis) of the $\gamma$ phase of 8 $\mu$m or less, preferably 5 $\mu$m or less, and the $\gamma$ phase is scattered in the grain boundary of the $\alpha$ phase; and
> (3) a crystal structure wherein it is an $\alpha+\beta+\gamma$ phase, an areal ratio of an $\alpha$ phase is 40 to 94%, areal ratios of a $\beta$ and $\gamma$ phases are both 3 to 30%, an average crystal grain size of $\alpha$ and $\beta$ phase are 15 $\mu$m or less, preferably 10 $\mu$m or less, and an average crystal grain size (a short axis) of the $\gamma$ phase of 8 $\mu$m or less, preferably 5 $\mu$m or less.

According to these crystal structures, the following machinability of (1) can be satisfied and the strength of (2) and SCC resistance of (3) can be satisfied. (1) A characteristic that a machining resistance index using a free-cutting brass bar as a standard measured according to Japanese Industrial Standard JIS C-3604 is 80 or more, (2) a characteristic that 0.2% loading endurance or yield stress is 250 N/mm$^2$ or

more, (3) a characteristic that a maximum stress at which a sample is not broken is 180 N/mm$^2$ or more when a cylindrical sample is exposed to an ammoniacal atmosphere above a 14% aqueous ammonia solution for 24 hours and then a load is applied

As uses of such brass machining products, they can be used as a patter for golf, and in such a case, an aspect of the present invention excellent in strength can be utilized so that it is useful.

As the other uses, when they are used as a knob or a handle of a door, an aspect of the present invention excellent in strength or SCC resistance can be utilized and when they are used as key parts, an aspect of the present invention excellent in strength can be utilized so that it is useful.

Also, when they are used as parts of watches, an aspect of the present invention excellent in strength or SCC resistance can be utilized so that it is useful. This is because strength and SCC resistance are required for the outer parts, and strength and abrasion resistance are required for movable parts. Incidentally, with regard to abrasion resistance, a crystal structure in which a $\gamma$ phase is precipitated is more excellent.

Moreover, when they are used as writing implements, an aspect of the present invention excellent in strength can be utilized, and when they are used as gear parts, an aspect of the present invention excellent in strength and wear resistance can be utilized so that it is useful.

The present invention has characteristic features residing in producing a forged brass product through the first step of preparing a brass material satisfying at least one crystal structure among the crystal structures of (1) to (3) shown below, and the second step of applying a machining processing to the brass material.

> (1) a crystal structure wherein it is an $\alpha+\beta$ phase, an areal ratio of a $\beta$ phase is 20% or more, average crystal grain sizes of an $\alpha$ phase and a $\beta$ phase are 15 $\mu$m or less, and an Sn concentration in the $\beta$ phase is 1.5 wt% or more,
> (2) a crystal structure wherein it is an $\alpha+\gamma$ phase, an areal ratio of a $\gamma$ phase is 3 to 30%, an average crystal grain size of an $\alpha$ phase is 15 $\mu$m or less, an average crystal grain size (a short axis) of the $\gamma$ phase is 8 $\mu$m or less, an Sn concentration in the $\gamma$ phase is 8 wt% or more, and the $\gamma$ phase is scattered in the grain boundary of the $\alpha$ phase; and
> (3) a crystal structure wherein it is an $\alpha+\beta+\gamma$ phase, an areal ratio of an $\alpha$ phase is 40 to 94%, areal ratios of a $\beta$ and $\gamma$ phases are both 3 to 30%, average crystal grain sizes of $\alpha$ and $\beta$ phase are 15 $\mu$m or less, preferably 10 $\mu$m or less, an average crystal grain size (a short axis) of the $\gamma$ phase of 8 $\mu$m or less, preferably 5 $\mu$m or less, and an Sn concentration in the $\gamma$ phase is 8 wt% or more and the $\beta$ phase

is surrounded by the γ phase.

And according to these crystal structures, the characteristics of (1) and (2) shown below can be satisfied and the characteristic of (3) or (4) can be satisfied. (1) A characteristic that a machining resistance index using a free-cutting brass bar as a standard measured according to Japanese Industrial Standard JIS C-3604 is 80 or more, (2) when a dezinking test according to Japan Brass Makers Association Technical Standard JBMA T-303 is carried out, characteristics satisfying the corrosion resistance of the maximum dezinking depth of 70 μm or less, (3) a characteristic that 0.2% loading endurance or yield stress is 250 N/mm$^2$ or more, (4) a characteristic that a maximum stress at which a sample is not broken is 180 N/mm$^2$ or more when a cylindrical sample is exposed to an ammoniacal atmosphere above a 14% aqueous ammonia solution for 24 hours and then a load is applied.

The forged brass product excellent in corrosion resistance as explained above is desirably used in parts for a flowing channel, parts for a water flowing channel or parts for a cooling or heating medium flowing channel for an air conditioner at which a demand for corrosion resistance is high. Also, it may be used as parts for dipping in water such as a protecting tube of a water temperature sensor, etc.

As an embodiment of parts for a flowing channel or parts for a water flowing channel, when it is used as pipe joints such as warm water pipe joints, vinyl chloride pipe joints, etc., a demand for dimensional precision can be matched by practically using the good forging property.

When the pipe joints have a screw portion, high machinability is required so that the present invention is particularly useful. Also, as an embodiment, it may be subjected to insert molding to a resin piping.

As the other embodiment of parts for a flowing channel or parts for a water flowing channel, there may be mentioned parts for a flow meter, particularly for parts of a water meter. These have complex shapes for subjecting to commutation at an upper stream of the flow meter, but it is possible to comply with it by the good forging property.

As the other embodiment of parts for a flowing channel or parts for a water flowing channel, they can be used as housing of parts for a pump, or movable parts. As the movable parts, there are impeller, and axis. These are used in a circumstance of a rapid flow rate, and an aspect of the present invention excellent in strength, SCC resistance, and erosion-corrosion resistance can be utilized so that it is useful.

Also, when it is used as water-sealing parts such as a water-sealing ring, an aspect of the present invention excellent in erosion-corrosion resistance can be utilized so that it is useful.

As the still another embodiment of parts for a flowing channel or parts for a water flowing channel, they can be used as housing (a body, a body cap, a bonnet), movable parts (valve axis), sliding member (a valve rod, push shaft) of parts for valve. Here, in the movable party, an aspect of the present invention excellent in strength and SCC resistance can be utilized, and in the sliding member, an aspect of the invention excellent in abrasion resistance can be utilized so that it is available. Incidentally, with regard to abrasion resistance, a crystal structure which precipitates a γ phase is more excellent.

As the other example of parts for valve, they can be used as others, flow amount controlling parts such as a constant flow amount valve, etc., and sheet members of a switch valve such as disc, ball, valve seat, etc. In the sheet members of a switch valve, they are used in a circumstance of a rapid flow rate so that an aspect of the present invention excellent in erosion-corrosion resistance can be utilized whereby it is useful.

As the next embodiment of parts for a flowing channel or parts for a water flowing channel, by using them for parts of a water sprayer, particularly for a spray nozzle, further for the parts at the minimum diameter of the spray nozzle, unevenness of spraying or lowering in a sprayed amount due to corrosion can be removed. Incidentally, in the spray nozzle, since it is used in a circumstance of a rapid flow rate, an aspect of the present invention excellent in erosion-corrosion resistance can be utilized so that it is useful.

As the further embodiment of parts for a flowing channel or parts for a water flowing channel, they can be used as parts for sprinkler, and when they are used as movable parts, an aspect of the present invention excellent in strength and SCC resistance can be utilized so that it is useful.

Subsequently, as a general embodiment of parts for a flowing channel, there may be mentioned parts for a fuel flowing channel, and when they are used as parts for a gas fuel flowing channel, they can be used at a burner head or a burner body. Incidentally, when they are used at the burner head, an aspect of the present invention excellent in erosion-corrosion resistance can be utilized at the portion of a rapid flow rate such as a flame hole, etc., so that unevenness in flame due to corrosion can be removed.

Also, as the other example of parts for a fuel flowing channel, by using them as parts for a vaporized fuel flow channel, particularly for a vaporizing apparatus, a vaporizing surface, unevenness in vaporization of fuel due to corrosion can be removed.

As the other example of parts for a fuel flowing channel, they can be used as parts for a liquid fuel flowing channel, and suitably using for a fuel spraying apparatus, particularly for a fuel spraying nozzle, further for the minimum diameter portion of the fuel spraying nozzle, spray unevenness or decrease in a spray amount due to corrosion can be removed. Incidentally, the spray nozzle is used under the circumstance of a rapid flow rate so that an aspect of the present invention excellent in erosion-corrosion resistance can be utilized whereby it is useful.

Subsequently, as general uses of a machining brass product excellent in corrosion resistance, there may be mentioned parts for air flow channel. When it is used as parts for a tire valve, it is used under circumstances exposed to outside so that an aspect of the present invention excellent in strength can be utilized whereby it is useful.

Also, when it is used as parts for heat exchange with air for cooling, it is used under the circumstance of a rapid flow rate so that an aspect of the present invention excellent in erosion-corrosion resistance can be utilized whereby it is useful. In particular, when it is used as parts for a radiator such as a radiator fin, radiator plate, etc., an aspect of the present invention excellent in erosion-corrosion resistance can be utilized so that it is useful.

As the other uses of general machining brass product excellent in corrosion resistance, by using them for dipping parts such as parts dipping in a liquid fuel, particularly gasoline, etc., an aspect of the present invention of reducing oxidation of a fuel so that it is useful. That is, Zn or Sn, which has high oxidation stability is added to a Cu-base alloy having low oxidation stability so that oxidation stability can be improved.

The present invention can provide a machining brass product excellent in corrosion resistance by producing a machining brass product excellent in corrosion resistance via a first step of preparing a brass material having an apparent Zn content of 3 to 46 wt% and an Sn content of 0.5 to 7.0 wt%, and a second step of applying the brass material to machining processing.

As the characteristics at the first step, when a dezinking test according to Japan Brass Makers Association Technical Standard JBMA T-303 is carried out, characteristics satisfying the corrosion resistance of the maximum dezinking depth of 100 $\mu$m or less when the maximum dezinking depth direction is parallel to the processing direction, or the maximum dezinking depth of 70 $\mu$m or less when the maximum dezinking depth direction is perpendicular to the processing direction, and a machining resistance index using a free-cutting brass bar as a standard measured according to Japanese Industrial Standard JIS C-3604 is 80 or more can be satisfied.

As an embodiment for ensuring machinability, there is a crystal structure after cooling in which it is an $\alpha+\beta$ phase, an areal ratio of a $\beta$ phase is 15% or more, preferably 20% or more, and average crystal grain sizes of an $\alpha$ phase and a $\beta$ phase are 15 $\mu$m or less, preferably 10 $\mu$m or less.

As the other embodiment for ensuring machinability, there is a crystal structure in which it is an $\alpha+\gamma$ phase, an areal ratio of a $\gamma$ phase is 3 to 30%, preferably 5 to 30%, as well as an average crystal grain size of the $\alpha$ phase is 15 $\mu$m or less, preferably 10 $\mu$m or less, an average crystal grain size (short diameter) of a $\gamma$ phase is 8 $\mu$m or less, preferably 5 $\mu$m or less, and further an Sn concentration in the $\gamma$ phase is 8 wt% or more, and the $\gamma$ phase is dispersed in the grain boundary of the $\alpha$ phase.

As the still further embodiment for ensuring machinability, there is a crystal structure in which it is an $\alpha+\beta+\gamma$ phase, an areal ratio of an $\alpha$ phase is 40 to 94%, areal ratios of $\beta$ and $\gamma$ phases are each 3 to 30%, as well as average crystal grain sizes of the $\alpha$ and $\beta$ phases are 15 $\mu$m or less, preferably 10 $\mu$m or less, an average crystal grain size (short diameter) of a $\gamma$ phase is 8 $\mu$m or less, preferably 5 $\mu$m or less, and further an Sn concentration in the $\gamma$ phase is 8 wt% or more, and the $\beta$ phase is surrounded by the $\gamma$ phase.

As uses of the machining brass product excellent in corrosion resistance as mentioned above, by using them as water-contacting parts which contact with water, preferably those in which a hollow water flow channel is formed by machining, a characteristic excellent in corrosion resistance can be effectively utilized.

In the present invention, by producing a flow channel constituting member made of brass via a first step of preparing a brass material having an apparent Zn content of 37 to 46 wt% and an Sn content of 0.5 to 7.0 wt%, a second step of applying warm or hot forging to the brass material to form a hollow portion, a third step of adjusting a machinability and corrosion resistance after cooling thereof by controlling the cooling rate after the warm or hot forging, and a fourth step of penetrating said hollow portion by machining processing, productivity can be improved while ensuring machinability and corrosion resistance after forging.

Incidentally, in the second step, a hollow portion is formed by forging. Such a hollow portion can generally be formed by insertion of punch, etc., and a deformation resistance is required to be small. Also, when a hollow portion is to be formed at an elongated portion by forging, a tensile stress is loaded at the elongated portion so that high ductility against a tensile stress is required.

In the present invention, by making a crystal structure in which an areal ratio of a $\beta$ phase is 30 to 80% of an $\alpha+\beta$ phase and an average crystal grain size thereof is 15 $\mu$m or less, preferably 10 $\mu$m or less, it becomes possible to satisfy the above requirement. Even when a hollow portion, particularly a hollow portion is to be formed at an elongated portion by forging, crack of a product can be removed. (Details are mentioned in already filed PCT/JP97/03152 by the present applicant)

As the characteristics after cooling, it can satisfy when a dezinking test according to Japan Brass Makers Association Technical Standard JBMA T-303 is carried out, the corrosion resistance of the maximum dezinking depth is 70 $\mu$m or less, and a machining resistance index using a free-cutting brass bar as a standard measured according to Japanese Industrial Standard JIS C-3604 is 80 or more.

And as an embodiment for ensuring machinability, it can be carried out by adjusting an areal ratio of a β phase, and as an embodiment for ensuring corrosion resistance, it can be carried out by adjusting an Sn concentration in the β phase.

More specifically, it may be a crystal structure after cooling in which it is an α+β phase, an areal ratio of a β phase is 15% or more, preferably 20% or more, average crystal grain sizes of α and β phases are 15 μm or less, preferably 10 μm or less, and an Sn concentration in the β phase is 1.5 wt% or more.

The crystal structure can be realized by heating 480°C or more at the second step and making a cooling rate in which the material becomes at 400°C or less in the third step 5 to 1000 K/sec.

As the other embodiment for ensuring corrosion resistance, it can be carried out by so adjusting the β phase to surround the γ phase and adjusting an Sn concentration in the γ phase.

More specifically, a crystal structure after cooing satisfies that it is an α+β+γ phase, an areal ratio of an α phase is 40 to 94%, areal ratios of β and γ phases are each 3 to 30%, as well as average crystal grain sizes of the α and β phases are 15 μm or less, preferably 10 μm or less, an average crystal grain size (short diameter) of a γ phase is 8 μm or less, preferably 5 μm or less, and further an Sn concentration in the γ phase is 8 wt% or more, and the β phase is surrounded by the γ phase.

The crystal structure can be realized by heating to 480°C or more at the second step and making a cooling rate in which the material becomes at 400°C or less in the above-mentioned third step 0.4 to 10 K/sec.

As the other embodiment for ensuring machinability and corrosion resistance, it can be carried out by so adjusting to make an α+γ phase, adjusting an Sn concentration in the γ phase to ensure corrosion resistance and adjusting grain boundaries of an α phase and the γ phase to ensure machinability.

More specifically, a crystal structure after cooling satisfies that it is an α+γ phase, an areal ratio of a γ phase is 3 to 30%, preferably 5 to 30%, as well as an average crystal grain size of the α phase is 15 μm or less, preferably 10 μm or less, an average crystal grain size (short diameter) of a γ phase is 8 μm or less, preferably 5 μm or less, and an Sn concentration in the γ phase is 8 wt% or more, and the γ phase is dispersed in the grain boundary of the α phase.

The crystal structure can be realized by heating to 480°C or more at the second step and making a cooling rate in which the material becomes at 400°C or less in the third step 0.4 to 5 K/sec.

As an embodiment of machining processing at the fourth step, a plural number of hollow portions formed at the second step may be penetrated, or may be penetrated between the hollow portion formed at the second step and the hollow portion formed by the machining processing in the above-mentioned fourth step.

As an embodiment of the hollow portion after penetration, a flow channel inlet hole, a flow channel outlet hole, a switch valve inserting hole may be constituted. More specifically, an axis of the flow channel inlet hole and an axis of the above-mentioned switch valve inserting hole may be substantially coincide to each other, and an axis of the flow channel inlet hole and an axis of the flow channel outlet hole may be substantially crossed.

In the present invention, particularly at an inner wall of a switch valve inserting hole, a valve seat hole to which the switch valve body is to be seated, which is to be inserted into the above-mentioned switch valve inserting hole may be formed. That is, the crystal structures of the present invention after cooling are all excellent in erosion-corrosion resistance so that other members such as an embedding sheet member, etc., are not required in the valve seat hole as in the conventional one.

In the present invention, in an air conditioning apparatus provided with a flow channel which transports a heating medium and a heat exchanger during the flow channel, dimensional accuracy becomes good by using a brass member molded by forging as a constitutional member of the flow channel.

In the present invention, in a pipe joint, dimensional accuracy becomes good by having a brass member molded by forging and having an apparent Zn content of 37 to 46 wt% and a crystal structure in which an average particle size is 15 μm.

In the present invention, in a sprinkler apparatus having a water feeding channel, a sprinkler head at the end of the water feeding channel, and a controlling means which controls spreading water from the sprinkler head, dimensional accuracy becomes good by using members made of brass molded by forging as the water feeding channel or the sprinkler head.

In the present invention, in a hot water heating apparatus which has a flow channel which circulates hot water therein, and is subjected to heating by heat dissipation of hot water during the flow channel, dimensional accuracy can be improved by using members made of brass by forging as constitutional parts for the flow channel.

In the present invention, in a hot water feeding apparatus having a feeding-water connecting portion to be connected to a water feeding tube, a hot water feeding connecting portion to be connected to a hot water feeding tube, a water channel which passes from the feeding-water connecting portion through the above hot water feeding connecting portion, and a heating portion provided during the water channel, said flow channel of the hot water feeding apparatus comprises the water-contacting parts made of brass, forging property of the water channel constituting can be improved and dimensional accuracy becomes good by using members made of brass having an apparent Zn content of 37 to 46 wt% and a crystal structure in which an average particle size is 15 μm.

In the present invention, in a water feeding apparatus having a header to which water is fed, and a plural number of water feeding tubes (including hot water feeding tubes) for water-feeding to various places of a room by being connected to the header, by making the header that is made of brass and the material is molded by forging, a water feeding apparatus which has good surface roughness as compared with castings and having no inconvenience in connecting with the header and the other piping.

In the present invention, in a solar water heating apparatus having a feeding water connecting portion to be connected to a water-feeding tube, a hot water feeding connecting portion to be connected to a hot water feeding tube, a water channel running from said feeding water connecting portion to said hot water feeding connecting portion, and a heating portion by solar heat provided between the water channel, dimensional accuracy becomes good by using members made of brass as constitutional materials of the water channel.

More specifically, by using a member made of brass having an apparent Zn content of 37 to 46 wt% and a crystal structure in which an average particle size is 15 μm, the present applicant has confirmed that a crystal structure in which an areal ratio of a β phase is 30 to 80%, and an average crystal grain size is 15 μm or less, and ductility which can satisfy at least one of characteristics wherein there is no breakage even when a 160% strain is given with a strain rate of 0.00083/sec, there is no breakage even when a 50% strain is given with a strain rate of 0.0083/sec, or there is no breakage even when a 30% strain is given with a strain rate of 0.083/sec can be realized.

Here, the term "an apparent Zn content" is used in the meaning of "$\{(B+t \cdot Q)/(A+B+t \cdot Q)\} \times 100$" wherein A is a Cu content [wt%], B is a Zn content [wt%], t is a Zn equivalent of the third element (e.g., Sn), and Q is a content of the third element [wt%]. Also, for improvement of machinability, a small amount of Pb may be contained.

The member made of brass as mentioned above is preferably those forged at a temperature of 650°C or lower. According to this, dezinking or attachment of an oxidized film caused at a high temperature forging at 700°C or higher can be controlled and a polishing process after forging can be omitted.

More suitably, by making an Sn content 1.5 to 4.0 wt%, at 300 to 550°C, a crystal structure in which a ratio of an α phase is 44 to 65%, a ratio of a β phase is 10 to 55%, a ratio of a γ phase is 1 to 25%, and an average crystal grain size is 15 μm or less, and ductility which can satisfy at least one of characteristics wherein there is no breakage even when a 50% strain is given with a strain rate of 0.00083/sec, there is no breakage even when a 25% strain is given with a strain rate of 0.0083/sec, or there is no breakage even when a 30% strain is given with a strain rate of 0.083/sec can be realized.

And when such a crystal structure is used, even when the material is forged at the temperature of 550°C or lower, high ductility can be obtained, and also, dezinking or attachment of an oxidized film can be further reduced.

In the other aspect of the present invention, by containing a β phase in a crystal structure of a member made of a brass material, machinability can be improved, and Sn is contained in the β phase, dezinking corrosion resistance can be improved. Incidentally, it is made of brass, strength is more excellent than that of bronze.

Here, those conventionally know as dezinking brass bar excellent in dezinking resistance are made a single phase of an α phase excellent in dezinking resistance, so that it was inferior in machinability. In the present invention, it is a characteristic feature that the β phase, which is not precipitated as little as possible due to poor dezinking corrosion resistance is effectively utilized.

More specifically, it can satisfy (1) a characteristic that a machining resistance index using a free-cutting brass bar as a standard measured according to Japanese Industrial Standard JIS C-3604 is 80 or more, and (2) when a dezinking test according to Japan Brass Makers Association Technical Standard JBMA T-303 is carried out, characteristics satisfying the corrosion resistance of the maximum dezinking depth of 100 μm or less when the maximum dezinking depth direction is parallel to the processing direction, or the maximum dezinking depth of 70 μm or less when the maximum dezinking depth direction is perpendicular to the processing direction.

Incidentally, with regard to an Sn content in the β phase and an areal ratio of the β phase, they can be controlled by controlling a cooling rate.

Also, in a member made of brass in which machinability is improved by containing α and γ phases in the crystal structure and due to the difference in hardness of the crystals in the grain boundaries of these phases, and dezinking corrosion resistance is improved by containing Sn in the γ phase, it is a characteristic feature that the γ phase, which is not precipitated as little as possible due to brittleness is effectively utilized. This can also satisfy the, above-mentioned characteristics of (1) and (2).

In the still further aspect of the present invention, the member made of brass has a crystal structure in which there are two phases of α+β phases, an areal ratio of the β phase is 15% or more, and average crystal grain size of α and β phases is 15 μm or less, and excellent in machinability and SCC resistance.

Here, machinability can be ensured by the β phase, and with regard to SCC resistance, details are not yet clarified, but it can be considered that it is ensured based on the action due to a different phase interface of α+β and fine average crystal grain size.

More specifically, in addition to the above-mentioned characteristics of (1), it can satisfy (3) a characteristic that a maximum stress at which a sample is not broken is 180 N/mm2 or more when a cylindrical sample is exposed to an ammoniacal atmosphere above a 14% aqueous ammonia solution for 24 hours and then a load is applied.

Moreover, by making an Sn concentration in the β phase 1.5 wt% or ore, the dezinking corrosion resistance shown in the above-mentioned (2) can be obtained. And erosion-corrosion resistance can be also satisfied.

Also, in the member made of brass, by having a crystal structure in which there are two phases of α+γ phases, an areal ratio of a γ phase are 3 to 30%, an average crystal grain size of an α phase is 15 μm or less, an average crystal grain size (a short axis) of the γ phase of 8 μm or less, and the γ phase is scattered in the grain boundary of the α phase, while ensuring machinability of the above-mentioned (1) by the α and γ phase grain boundaries, SCC resistance of the above-mentioned (3) can be ensured.

Moreover, by making an Sn concentration in the γ phase 8 wt% or more, dezinking corrosion resistance shown in the above-mentioned (2) can be obtained. And erosion-corrosion resistance can be also satisfied.

Also, in the member made of brass, by having a crystal structure in which there are three phases of α+β+γ phases, an areal ratio of an α phase is 44 to 65%, an areal ratio of a β phase is 10 to 55%, an areal ratio of a γ phase is 1 to 25%, average crystal grain sizes of α, β and γ phases are 15 μm or less, and α, β and γ phases exist in a dispersed state, while ensuring machinability of the above-mentioned (1) by the β phase and the α and γ phase grain boundaries, SCC resistance of the above-mentioned (3) can be ensured.

Moreover, by making an Sn concentration in the γ phase 8 wt% or more, dezinking corrosion resistance shown in the above-mentioned (2) can be obtained. And erosion-corrosion resistance can be also satisfied.

In the present invention, by making the member made of brass an apparent Zn content of 37 to 46 wt%, an Sn content of 0.5 to 7 wt%, the crystal structure of 2 phase or more, a water channel constituting member having characteristics excellent in dezinking corrosion resistance, machinability and further erosion-corrosion resistance can be provided. Here, the reason why the apparent Zn content is made 37 to 46 wt% is that if it is within the range, the above-mentioned α+β phases, α+γ phases and α+β+γ phases can be optionally selected. More specifically, by utilizing the fact that in a deformation temperature range of the crystal in this range, it is a β single phase at a high temperature range, it is α+β phases below the above temperature range, and it is α+γ phases further below the above temperature range, when a cooling rate from a high temperature range is controlled, the above-mentioned three kinds of crystal structures can be selected. Incidentally, as the member made of brass as explained above, various kinds of connecting members are suitable.

Incidentally, as the pipe joint as explained above, a hose joint is suitable.

Incidentally, as the member made of brass as explained above, in addition to a sprinkler head, a water-feeding channel constituting member such as various kinds of connecting members, etc. are suitable.

Incidentally, as the member made of brass as explained above, in addition to the various kinds of piping members, valve materials such as a pressure reducing valve, an escape valve, etc. are suitable.

That is, in a pressure reducing valve having a valve box which has a water outlet and inlet port, a closing member for closing an opening portion of the valve box, a valve rod and a controlling spring, and a water passing pressure at the above-mentioned water outlet port is made constant by moving said valve rod using the controlling spring, it is suitable to apply the material to at least one of said valve box, closing member and valve rod. Also, in an escape valve having a valve box which has a water inlet port, a closing member for closing an opening portion of the valve box, a valve axis and a controlling spring, and increase in pressure of said water inlet port is escaped to outside by moving said valve axis against said controlling spring when an inner pressure is increased, it is suitable to apply the material to at least one of said valve box, the closing member and the valve axis.

Incidentally, the uses of a header made of brass as explained above can be applied, in addition to a water feeding apparatus, to a water flow channel constituting member such as a floor heating apparatus as well as a flow channel constituting member other than water such as a cooling medium, etc. of an air conditioner.

4. Brief description of the drawings

Fig. 1 is a manufacturing step of a forged brass product according to the embodiment of the present invention.

Fig. 2 is a shape of test piece of a high temperature tensile test of the same embodiment.

Fig. 3 is test conditions of a high temperature tensile test of the same embodiment.

Fig. 4 is test results (relationship between temperature and elongation) of a high temperature tensile test of the same embodiment and the conventional example.

Fig. 5 is an explaining drawing of a cutting test of the same embodiment.

Fig. 6 is an explaining drawing of a stress corrosion crack resistance (SCC resistance) test of the same embodiment.

Fig. 7 is an explaining drawing of an erosion-corrosion test of the same embodiment.

Fig. 8 is erosion-corrosion test results of the same embodiment.

Fig. 9 is a thermistor sensor according to the same embodiment.

Fig. 10 is a warm water-piping joint according to the same embodiment.

Fig. 11 is a vinyl chloride pipe joint according to the same embodiment.

Fig. 12 is a waterworks meter (a single box) according to the same embodiment.

Fig. 13 is a waterworks meter (a complex box) according to the same embodiment.

Fig. 14 is a pump for seawater according to the same embodiment.

Fig. 15 is a centrifugal pump according to the same embodiment.

Fig. 16 is a pressure-reducing valve according to the same embodiment.

Fig. 17 is an escape valve according to the same embodiment.

Fig. 18 is an air conditioner valve according to the same embodiment.

Fig. 19 is a sprinkler (sprayer) parts according to the same embodiment.

Fig. 20 is a gas burner according to the same embodiment.

Fig. 21 is a vaporizing system combustor according to the same embodiment.

Fig. 22 is another vaporizing system combustor according to the same embodiment.

Fig. 23 is a fuel spray nozzle of a fuel spray apparatus according to the same embodiment.

Fig. 24 is a vaporizing apparatus of gasoline according to the same embodiment.

Fig. 25 is a patter for golf according to the same embodiment.

Fig. 26 is a knob, handle for a door according to the same embodiment.

Fig. 27 is key parts according to the same embodiment.

Fig. 28 is writing implements according to the same embodiment.

Fig. 29 is a wristwatch according to the same embodiment.

Fig. 30 is a synchronizer ring for an automobile according to the same embodiment.

Fig. 31 is a gas burner according to the same embodiment.

Fig. 32 is a radiator according to the same embodiment.

Fig. 33 is a tire valve for an automobile or a bicycle according to the same embodiment.

Fig. 34 is a mechanical pensile according to the same embodiment.

Fig. 35 is a ball-point pen according to the same embodiment.

Fig. 36 is a manufacturing step of a conventional forged brass product excellent in corrosion resistance and a manufacturing step of the present embodiment.

Fig. 37 is a shower apparatus as an application example of a product of a forged brass product according to the same embodiment.

Fig. 38 is a change in a shape of housing according to the same embodiment.

Fig. 39 is a branch fitment as an application example of a product of a forged brass product according to the same embodiment.

Fig. 40 is a change in a shape of housing according to the same embodiment.

Fig. 41 is a water-feed controlling apparatus as an application example of a product of a forged brass product according to the same embodiment.

Fig. 42 is a change in a shape of movable lever according to the same embodiment.

Fig. 43 is a water-feeding hose as an application example of a product of a forged brass product according to the same embodiment.

Fig. 44 is a change in a shape of connecting fitment according to the same embodiment.

Fig. 45 is a sectional view showing waterstop plug for tap water as one example of an angle type valve.

In Fig. 46, (a) is a manufacturing step drawing of an angle type valve made of brass by the conventional forging, and (b) is a manufacturing step drawing of an angle type valve made of brass by the present embodiment.

Fig. 47 is a schematic drawing showing forging processing.

In Fig. 48, (a) is an appearance view of the body after forging processing, and (b) is a sectional view thereof.

In Fig. 49, (a) is an appearance view of the body after machining processing, and (b) is a sectional view thereof.

Fig. 50 is an air-conditioning apparatus according to the embodiment of the present invention.

Fig. 51 is a drawing showing flare nuts 495a, 495b, 503a, and 503b according to the same embodiment.

Fig. 52 is a drawing showing an outdoor apparatus 508 according to the same embodiment.

Fig. 53 is a drawing showing uses to be utilized of a pipe joint according to the embodiment of the present invention.

Fig. 54 is an explaining drawing of a hose joint 518 according to the same embodiment.

Fig. 55 is a sprinkler apparatus according to the embodiment of the present invention.

Fig. 56 is a drawing showing a sprinkler head according to the present embodiment.

Fig. 57 is a drawing showing another example of a sprinkler head according to the embodiment of the present invention.

Fig. 58 is a warm water heating apparatus according to the embodiment of the present invention.

Fig. 59 is a header according to the same embodiment.

Fig. 60 is a hot water feeding apparatus according to the embodiment of the present invention.

Fig. 61 is a drawing showing a hot water feeding connecting part member 663a according to the same embodiment.

Fig. 62 is a drawing showing another hot water feeding apparatus according to the same embodiment.

Fig. 63 is a drawing showing an escape valve according to the same embodiment.

Fig. 64 is a drawing showing a pressure reducing valve according to the same embodiment.

Fig. 65 is a water feeding apparatus according to the embodiment of the present invention.

Fig. 66 is a water-feeding header according to the same embodiment.

Fig. 67 is a solar water heating apparatus according to the embodiment of the present invention.

Fig. 68 is an appearance view of a piping unit 756 according to the same embodiment.

Fig. 69 is a drawing showing another example of a solar water heating apparatus according to the same embodiment.

Fig. 70 is an appearance view of a piping unit 776 according to the same embodiment.

5. Best mode for carrying out the invention

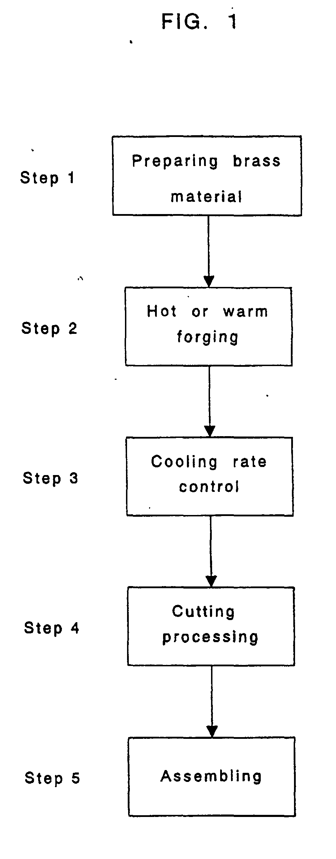

The embodiments of the present invention are described in detail below. Fig. 1 shows a manufacturing process of a forged brass product according to the present embodiment, and firstly in Step 1, a brass material having an apparent Zn content of 37 to 46 wt%, containing Sn in an amount of 0.9 to 7 wt% and an average crystal grain size of 10 μm or less is prepared.

Here, the term "an apparent Zn content" is used in the meaning of "$\{(B+t \cdot Q)/(A+B+t \cdot Q)\} \times 100$" wherein A is a Cu content [wt%], B is a Zn content [wt%], t is a Zn equivalent of the third element (e.g., Sn), and Q is a content of the third element [wt%]. Also, for improvement of machinability, a small amount of Pb may be contained.

Next, in Step 2, the material is heated to a hot or warm processing temperature region so as to not coarsen the crystal grain size, and hot or warm forging is carried out. Crystal structure and characteristics thereof at this time are shown.

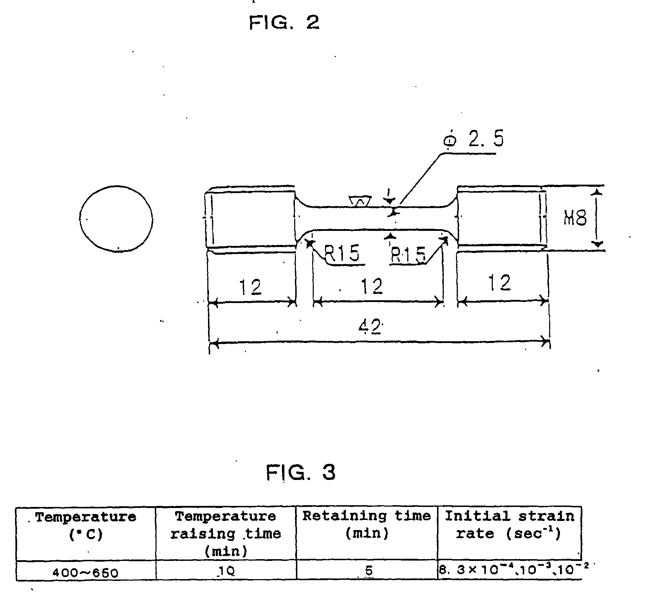

[Crystal structure 1] At the temperature region of hot or warm processing, a crystal structure in which it is an $\alpha+\beta$ phase, an areal ratio of a $\beta$ phase is 30 to 80%, average crystal grain sizes thereof are 15 μm or less, preferably 10 μm or less, and $\alpha$ and $\beta$ phases are uniformly dispersed can be obtained. According to this crystal structure, at the temperature region of hot or warm processing, preferably 480 to 750°C, at least one of the characteristics wherein there is no breakage even when a 160% strain is given with a strain rate of 0.00083/sec, there is no breakage even when a 50% strain is given with a strain rate of 0.0083/sec, or there is no breakage even when a 30% strain is given with a strain rate of 0.083/sec can be satisfied. Incidentally, a shape and a size (a distance between the marked points: 12 mm, outer diameter: ∅ 2.5 mm) of the test piece with regard to these characteristics are shown in Fig. 2, and the test conditions are shown in Fig. 3. Used tensile testing machine is a mechanical one, heating is carried out by an electric heater and an atmosphere is made in air. Incidentally, this crystal structure 1 can be obtained even when 0.9 to 7 wt% of Sn is not contained.

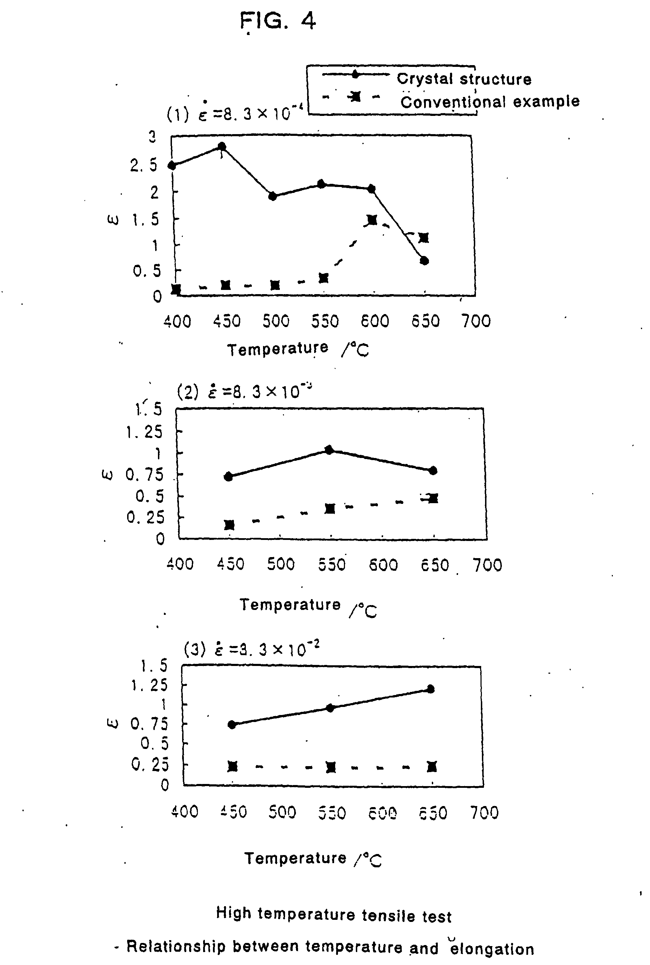

[Crystal structure 2] At the temperature region of hot or warm processing, or a temperature region of 300 to 500°C, preferably 400 to 500°C, a crystal structure after cooling in which it is an $\alpha+\beta+\gamma$ phase, an areal ratio of an $\alpha$ phase is 44 to 65%, an areal ratio of a $\beta$ phase is 10 to 55%, an areal ratio of a $\gamma$ phase is 1 to 25%, average crystal grain sizes of an $\alpha$, $\beta$ and $\gamma$ phases are 15 μm or less, preferably 10 μm or less, and an $\alpha$ phase, a $\beta$ phase and a $\gamma$ phase exist in a dispersed state can be obtained. According to such a crystal structure, at 450°C, at least one of the characteristics wherein there is no breakage even when a 50% strain is given with a strain rate of 0.00083/sec, there is no breakage even when a 25% strain is given with a strain rate of 0.0083/sec, or there is no breakage even when a 30% strain is given with a strain rate of 0.083/sec can be satisfied. Fig. 4 shows a relationship between the temperature and elongation, and it can be understood the crystal structure 2 shows high elongation as compared with the conventional example at 450°C. Here, as the conventional example, a material which has a crystal structure of an $\alpha+\beta$ and $\beta$ 〈25%, average grain size〉of 15 μm was used.

Incidentally, the test method with regard to this characteristics is the same as those shown in Fig. 2 and Fig. 3, and the crystal structure 2 was obtained by containing 1. to 2.2 wt% of Sn.

Returning to Fig. 1, in Step 3, by controlling the cooling rate after sintering, optional crystal structure is obtained, but not to coarsen the crystal grain size, a cooling rate until the material becomes 400° C or less is made 0.4 K/sec or more.

Specific example of the crystal structure obtained by the results of Step 3 is shown below.

[Crystal structure 3] A crystal structure in which it is an $\alpha+\beta$ phase, an areal ratio of a $\beta$ phase is 15% or more, preferably 20% or more, and average crystal grain sizes of $\alpha$ and $\beta$ phases are 15 μm or less, preferably 10 μm or less can be obtained. According to this crystal structure, all the characteristics of (1) a characteristic that a maximum stress at which a sample is not broken is 180 N/mm2 or more when a cylindrical sample is exposed to an ammoniacal atmosphere above a 14% aqueous ammonia solution for 24 hours and then a load is applied, (2) a characteristic that a machining resistance index using a free-cutting brass bar as a standard measured according to Japanese Industrial Standard JIS C-3604 is 80 or more and (3) a characteristic that 0.2% loading endurance or yield stress is 250 N/mm2 or more can be satisfied. Incidentally, this crystal structure 3 can be obtained even when 0.9 to 7 wt% of Sn is not contained.

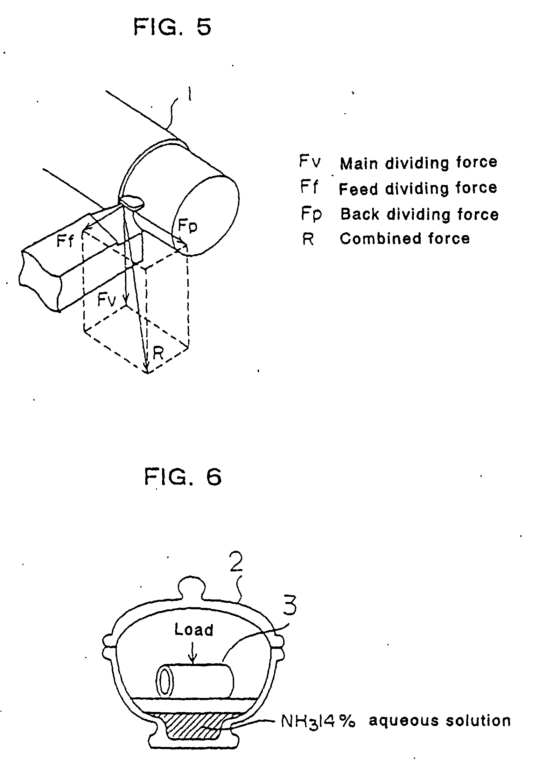

Among the characteristics as mentioned above, when the machining resistance index of (1) is explained in detail by using Fig. 5. In the cutting test, while cutting a circumferential surface of a round rod-like shaped Sample 1 by a lathe with two different cutting rates of 100 [m/min] and 400 [m/min], a main dividing force Fv was measured. The machining resistance index is a percentage of the main dividing force based on the main dividing force of the free-cutting brass bar which is said to be most excellent in machinability. (machining resistance indexes of respective cutting rates are averaged.)

Next SCC resistance test of (2) is, as shown in Fig. 6, to examine occurrence of crack after exposing a cylindrical sample 3 in a NH3 vapor atmosphere for 24 hours under the condition of perpendicularly loading in a glass desiccator 2.

Other examples of the specific crystal structure obtained by the results of Step 3 are as shown below.

[Crystal structure 4] When a cooling rate until the sample becomes 400° C or less is 5 to 1000 K/sec, after cooling, a crystal structure in which it is an α+β phase, an areal ratio of a β phase is 20% or more, preferably 25% or more, and average crystal grain sizes of α and β phases are 15 μm or less, preferably 10 μm or less, and an Sn concentration in the β phase is 1.5 wt% or more can be obtained.

[Crystal structure 5] When a cooling rate until the sample becomes 400° C or less is 0.4 to 5 K/sec, after cooling, a crystal structure in which it is an α+γ phase, an areal ratio of a γ phase is 3 to 30%, preferably 5 to 30%, as well as an average crystal grain size of the α phase is 15 μm or less, preferably 10 μm or less, an average crystal grain size (short diameter) of a γ phase is 8 μm or less, preferably 5 μm or less, and further an Sn concentration in the γ phase is 8 wt% or more, and the γ phase is dispersed in the grain boundary of the α phase can be obtained.

[Crystal structure 6] when a cooling rate until the sample becomes 400° C or less is 0.4 to 10 K/sec, after cooling, a crystal structure in which it is an α+β+γ phase, an areal ratio of an α phase is 40 to 94%, areal ratios of β and γ phases are each 3 to 30%, as well as an average crystal grain size of the α and β phase are 15 μm or less, preferably 10 μm or less, an average crystal grain size (short diameter) of a γ phase is 8 μm or less, preferably 5 μm or less, and further an Sn concentration in the γ phase is 8 wt% or more, and the β phase is surrounded by the γ phase can be obtained.

According to the crystal structures 4 to 6 as mentioned above, not only the same characteristics as in the crystal structure 3 can be obtained but also it can satisfy the corrosion resistance of the maximum dezinking depth of 70 μm or less when a dezinking test according to Japan Brass Makers Association Technical Standard JBMA T-303 is carried out.

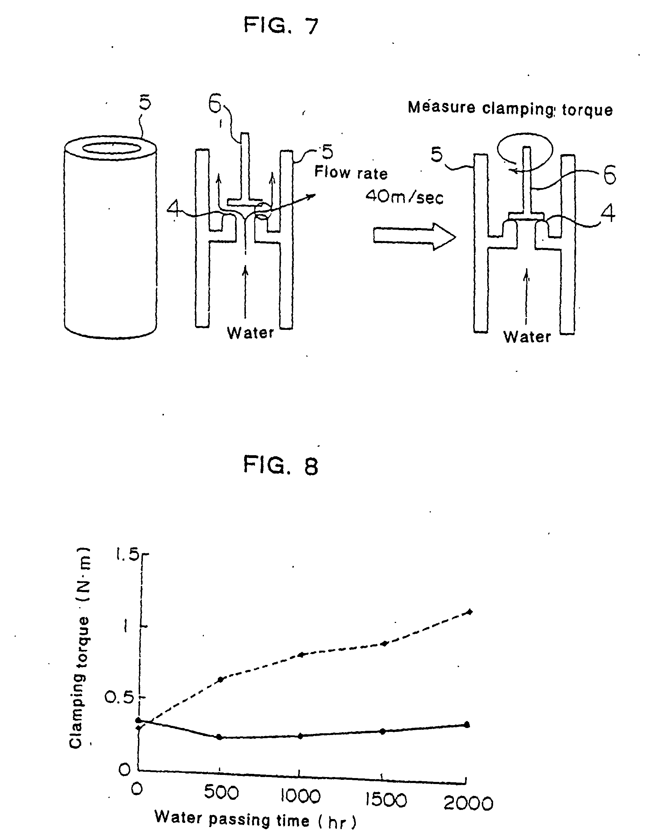

Also, according to the crystal structures 4 to 6, good characteristics are shown in erosion-corrosion resistance. Fig. 7 shows the method of the erosion-corrosion resistance test. In the erosion-corrosion resistance test, as shown in Fig. 7, by using a cylindrical sample 5 having an orifice 4 inside thereof, and after flowing water through the orifice 4 with a flowing rate of 40 m/sec for a predetermined time, a clamping torque to a resin stopper 6 required for sealing the orifice 4 under a water pressure of 4.9x105 Pa (5 Kg/cm2) was measured.

Test results of Fig. 7 are as shown in Fig. 8, and the brass materials of the crystals structures 4 to 6 gave good results as compared with the conventional example. Incidentally, as the conventional example, that containing Sn amount of less than 0.5 wt% was used.

Returning to Fig. 1, subsequently in step 4, to the forged brass product of the above crystal structures 4 to 6 are applied machining processing such as cutting processing, and it shows at this time good machinability as mentioned above.

And, finally, assembling to the product depending on the uses is carried out in the step 5, various kinds of uses are as mentioned below. Incidentally, in the following explanation, a member "made of brass" is all to be passed through the manufacturing step of Fig. 1.

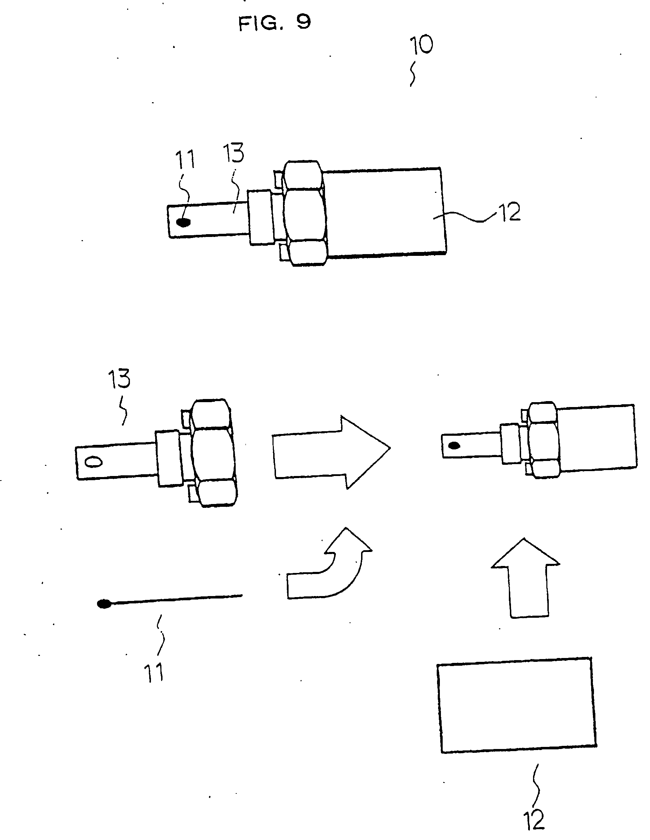

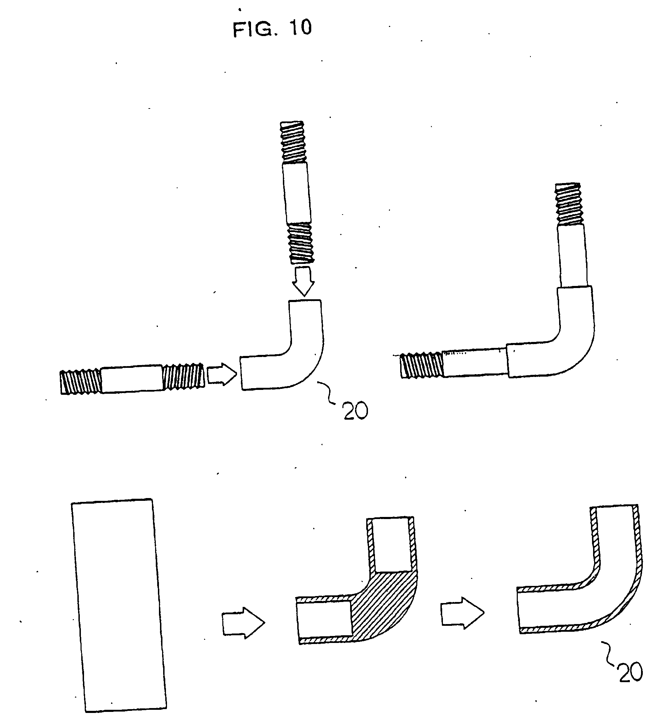

Fig. 9 shows a thermistor sensor 10 for detecting a water temperature of cooling water such as an automobile, etc., and the thermistor 10 is formed by a thermistor body 11, a connector 12 and a protecting tube 13 made of brass. Also, Fig. 10 is a joint for a warm water-pipe 20 made of brass.

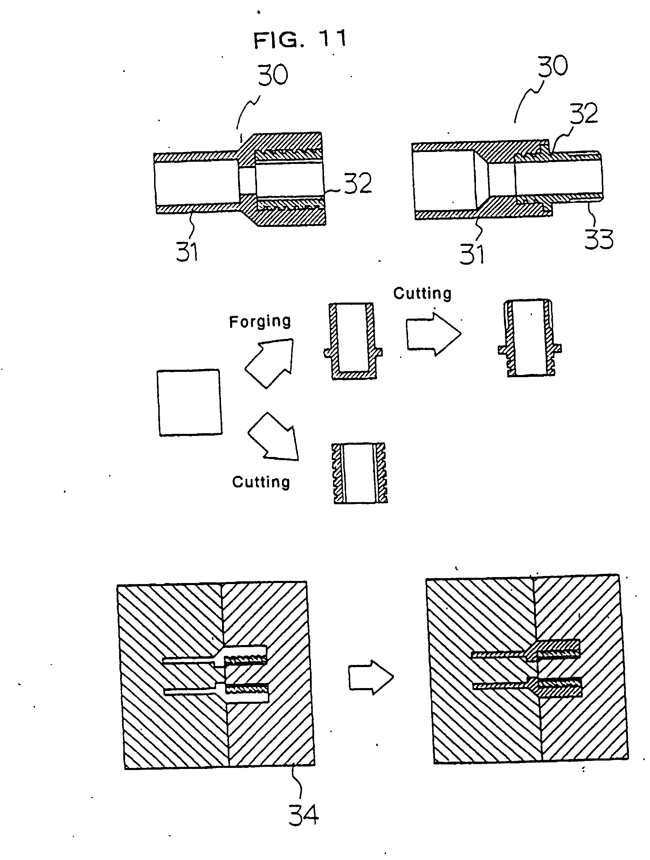

Fig. 11 shows a vinyl chloride pipe joint 30, and the vinyl chloride pipe joint 30 is formed by a vinyl chloride tube 31 and a joint 32 made of brass to be subjected to insert molding into the vinyl chloride tube 31. The joint 32 made of brass further has a screw portion 33.

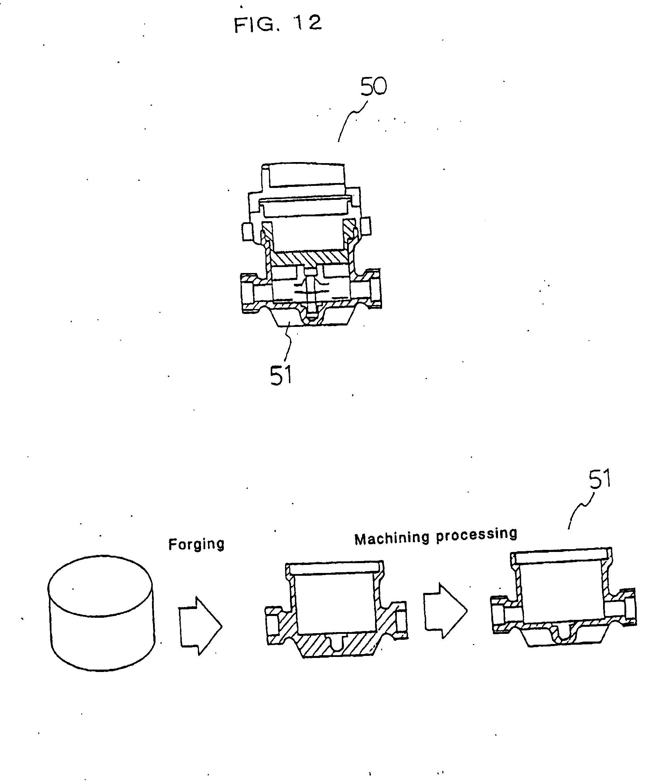

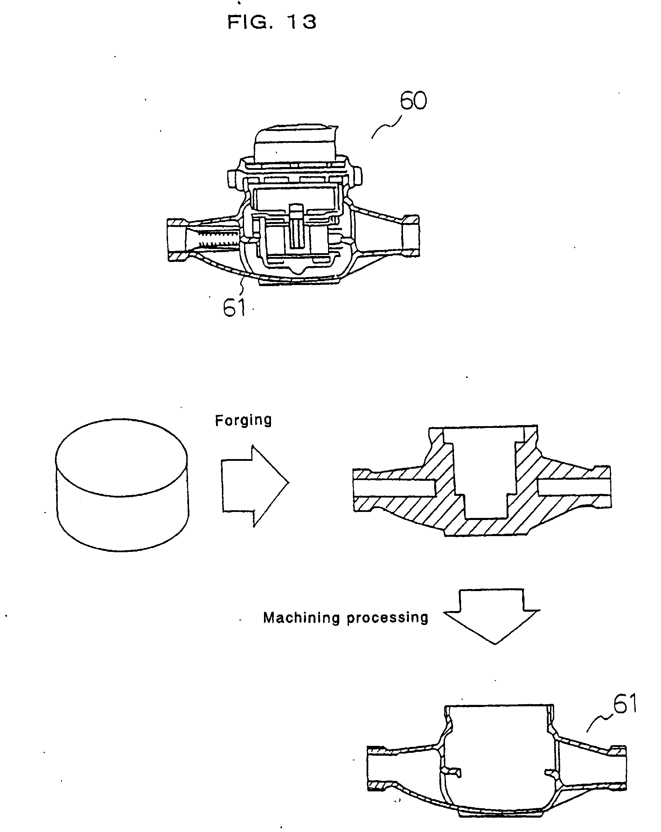

Fig. 12 shows a waterworks meter (a single box) 50 and Fig. 13 shows a waterworks meter (a complex box) 60, and these waterworks meters 50 and 60 are each has under cases 51 and 61 made of brass.

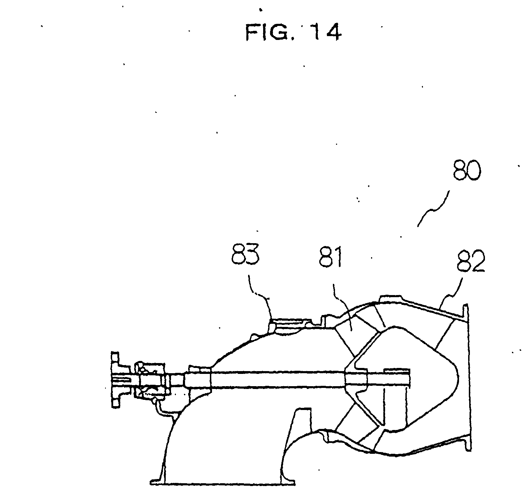

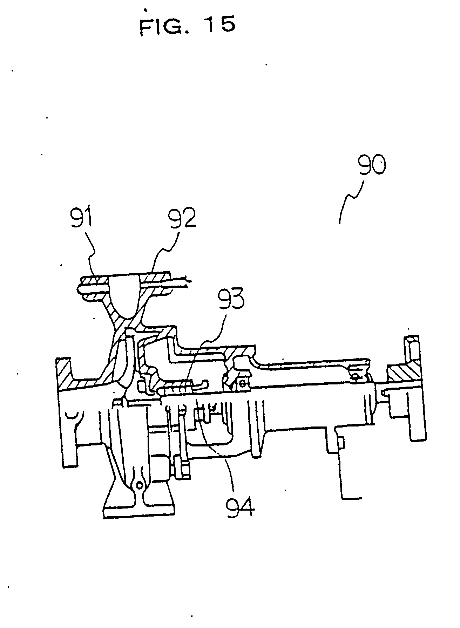

Fig. 14 shows a pump 80 for seawater and the pump 80 for seawater has an impeller 81 made of brass, a casing 82 made of brass and a suction casing 83 made of brass. Also, Fig. 15 is a centrifugal pump 90 and the centrifugal pump 90 has an impeller 91 made of brass, a casing 92 made of brass, a water sealing ring 93 and a sleeve 94 made of brass.

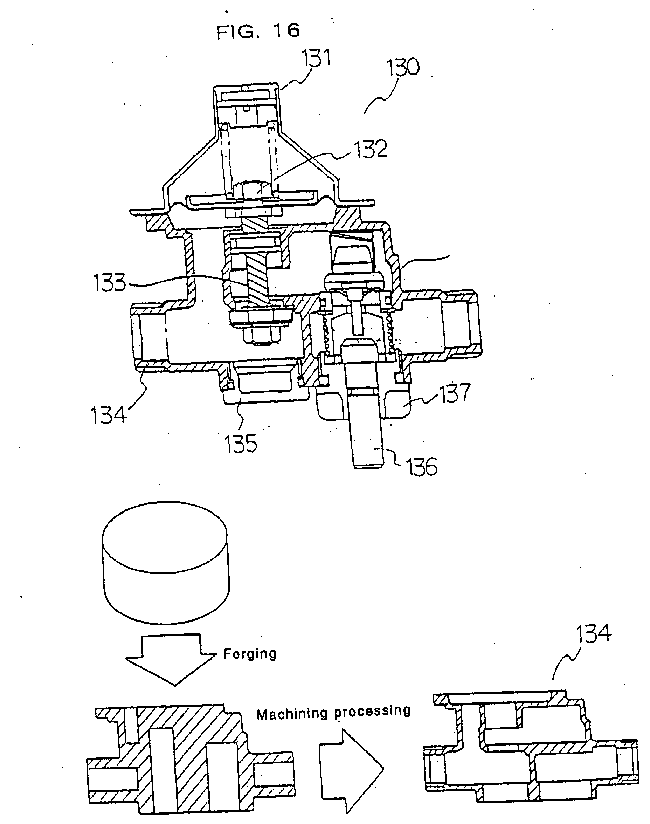

Fig. 16 shows a pressure-reducing valve 130, and the pressure-reducing valve 130 has a controlling screw 131 made of brass, a hexagon nut 132 made of brass, a valve rod 133 made of brass, a valve box 134 made of brass, a valve body cap 135 made of brass, a push shaft 136 made of brass, and a strainer cap 137 made of brass.

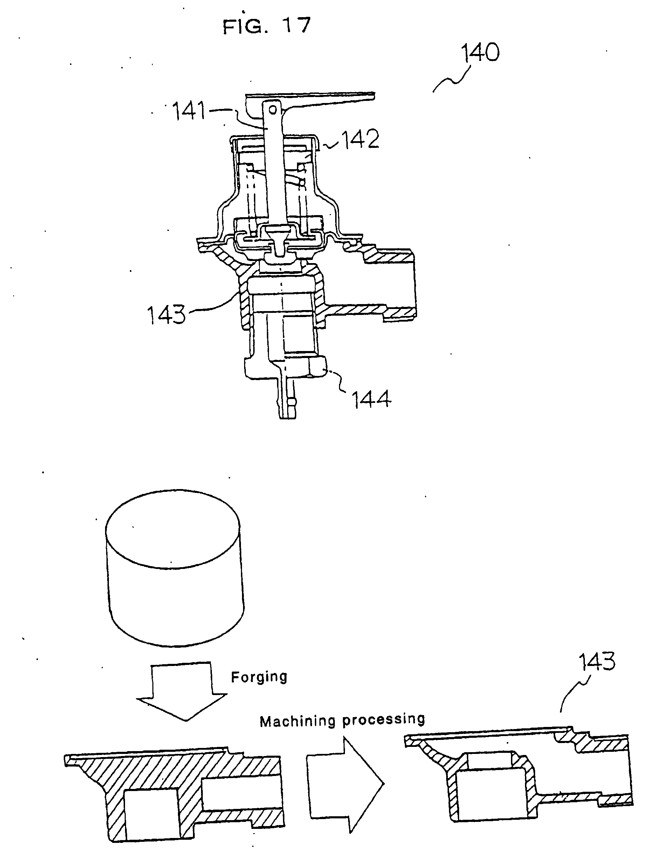

Fig. 17 shows an escape valve 140, and the escape valve 140 has a valve axis 141 made of brass, a controlling screw 142 made of brass, a valve box 143 made of brass, and a joint 144 made of brass.

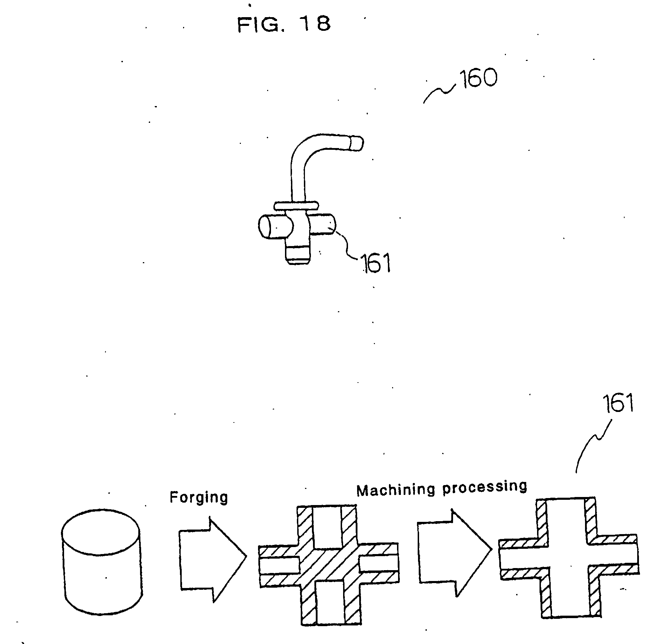

Fig. 18 shows an air conditioner valve 160 for a cooling and heating medium, and the air conditioner valve 160 has a housing 161 made of brass.

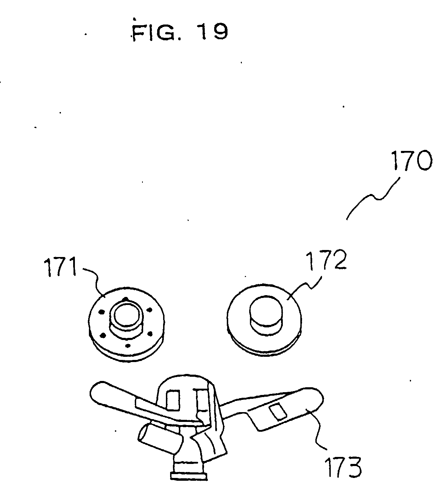

Fig. 19 shows a sprinkler (sprayer) parts 170, and the sprinkler (sprayer) parts 170 has parts 171, 172 and 173 made of brass.

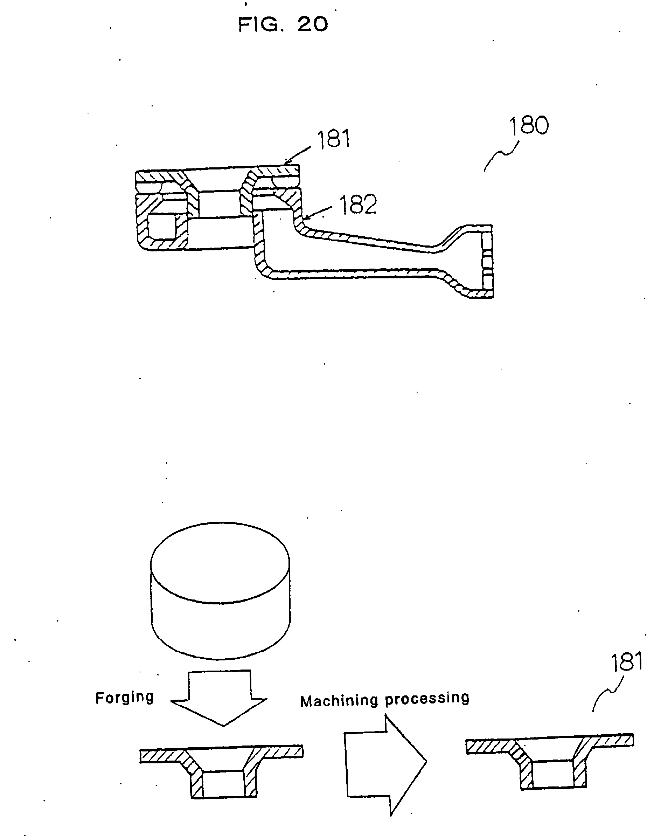

Fig. 20 shows a gas burner 180, and the gas burner 180 has a burner head 181 made of brass and a burner body 182 made of brass.

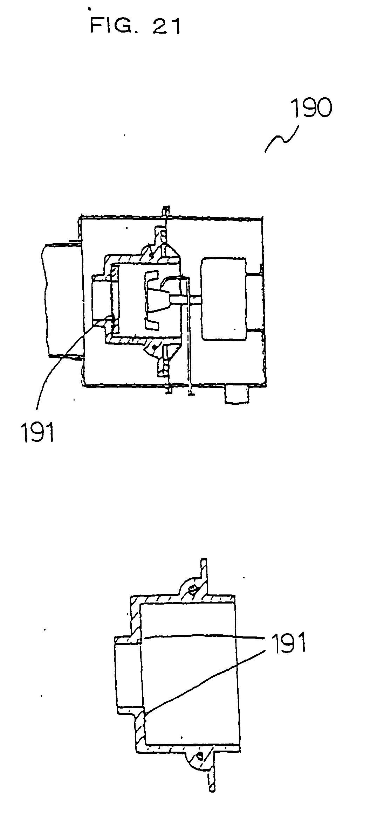

Fig. 21 shows is a vaporizing system combustor 190, the vaporizing system combustor 190 has a burner 191 made of brass.

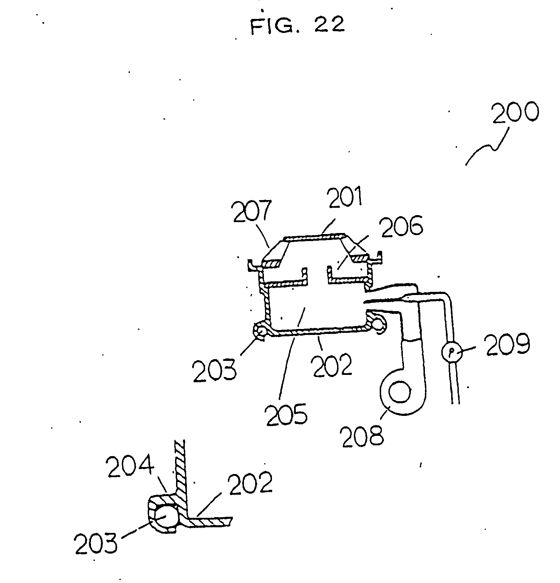

Fig. 22 shows another vaporizing system combustor 200, the vaporizing system combustor 200 has a burner head 201 made of brass, and a vaporizing cylinder 202 made of brass, and to the vaporizing cylinder 202 made of brass was fixed a sheathed heater 203 by caulking.

Incidentally, 204 is a thermo conductive filler, 205 is a vaporizing room, 206 is a mixing room, 207 is a flame port, 208 is a burning fan, and 209 is a oil feeding pump.

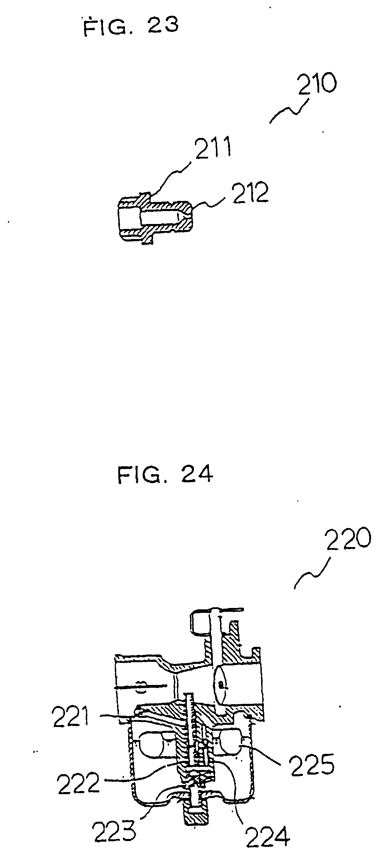

Fig. 23 shows a fuel spray nozzle 210 of a fuel spray apparatus, and the fuel spray nozzle 210 is integrally formed by a body 211 made of brass and a minimum diameter portion 212 made of brass.

Fig. 24 shows a vaporizing apparatus 220 of gasoline, and the vaporizing apparatus 220 has an air bleed 221 made of brass, a main nozzle 222 made of brass, a main jet 223 made of brass, a slow jet 224 made of brass, and a float 225 made of brass. Among these, the main jet 223 made of brass and the float 225 made of brass are dipped states in gasoline.

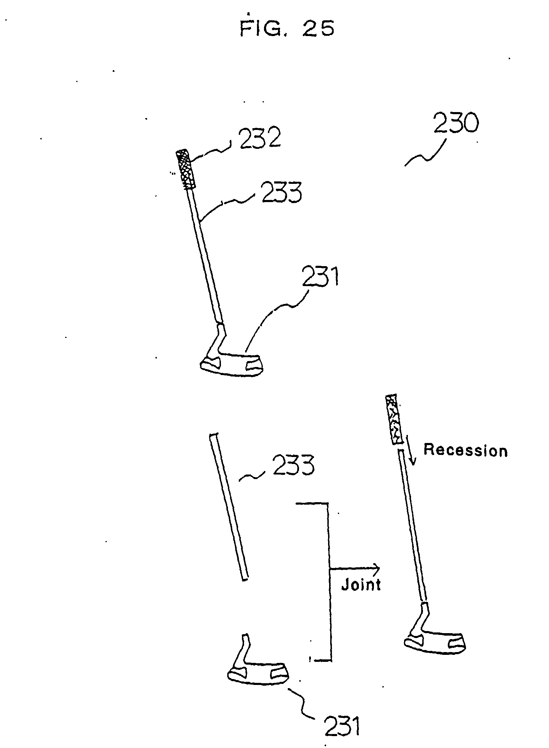

Fig. 25 shows a patter 230 for golf, and the patter 230 for golf has a member 231 made of brass. Incidentally, 232 is a grip and 233 is a shaft.

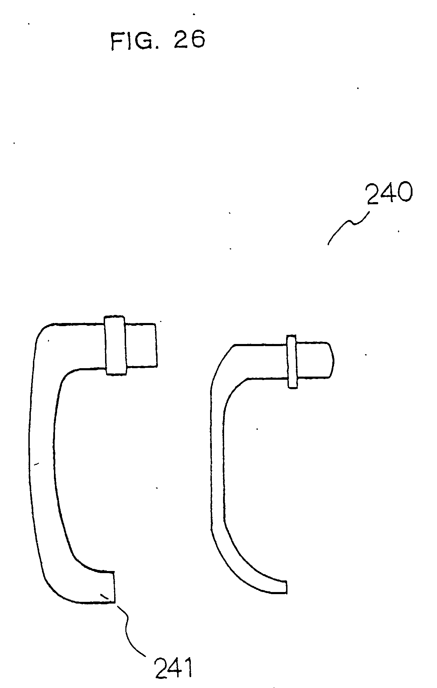

Fig. 26 shows a knob and handle 240 for a door, and the knob and handle 240 have a member 241 made of brass.

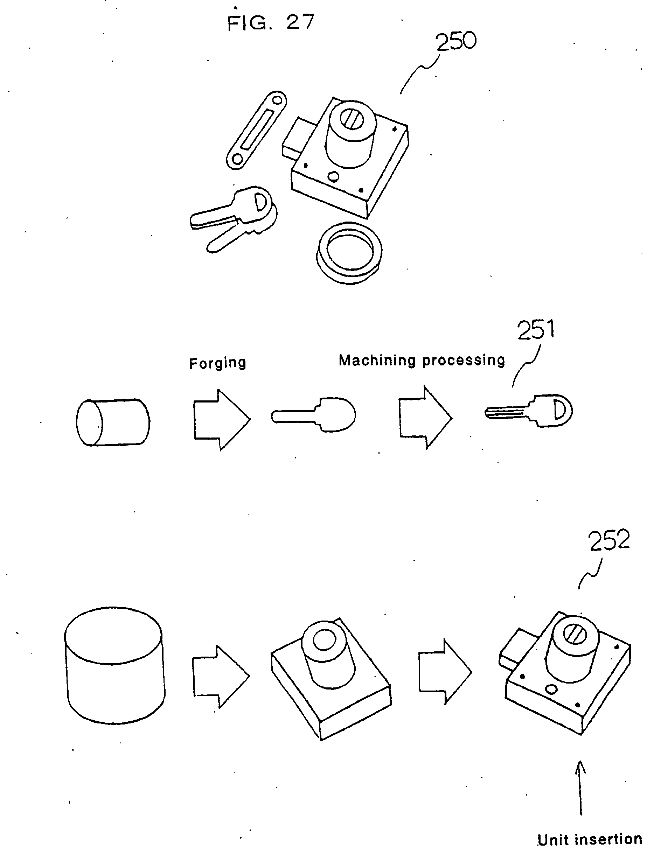

Fig. 27 shows key parts 250, and the key parts 250 has a key 261 made of brass and a key hole unit flame 252 made of brass.

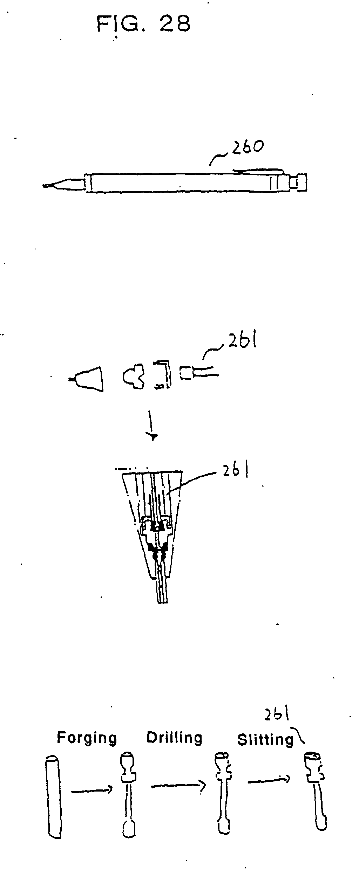

Fig. 28 shows writing implements 260, and the writing implements 260 has a member 261 made of brass.

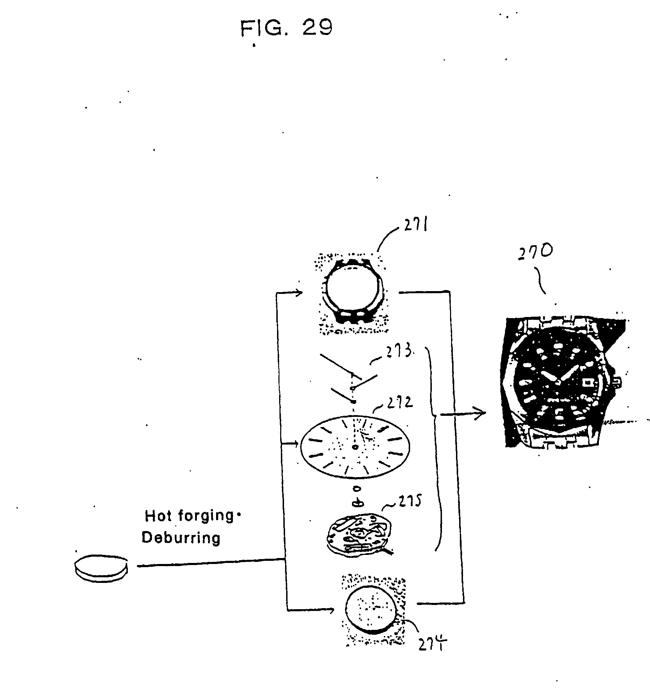

Fig. 29 shows a wrist watch 270, and the wrist watch 270 has a case 271 made of brass, a dial plate 272 made of brass, a hand 273 made of brass, a back case 274 made of brass and a movement 275 made of brass.

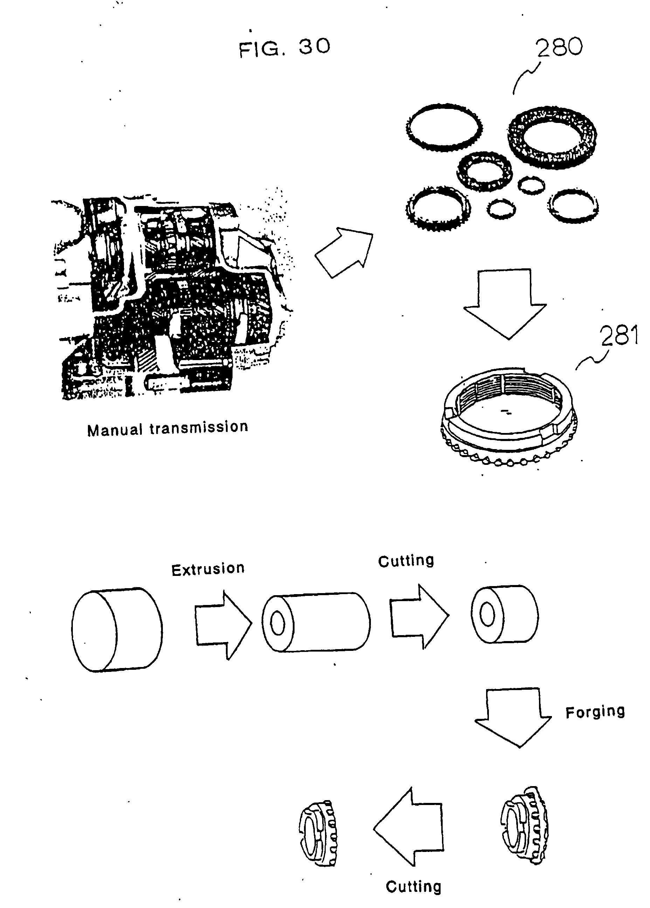

Fig. 30 shows a synchronizer ring 280 for an automobile, and the synchronizer ring 280 has a gear 281 made of brass.

Next, the second embodiment of the present invention is explained. That is, in the embodiment of Fig. 1, the crystal structures 4 to 6 are made to be obtained after forging of the step 2, but the second embodiment in which a brass material with the crystal structures 4 to 6 is prepared in the step 1, and steps 2 and 3 are omitted to proceed with the step 4 of machining processing such as a cutting processing and the step 5 of assembling to product with the respective uses is also possible

Incidentally, in this second embodiment, the crystal structures 4 to 6 are not limited to those obtained after forging so that it is made a material which satisfies the corrosion resistance of the maximum dezinking depth of 100 μm or less when the maximum dezinking depth direction is parallel to the processing direction, or the maximum dezinking depth of 70 μm or less when the maximum dezinking depth direction is perpendicular to the processing direction, when a dezinking test according to Japan Brass Makers Association Technical Standard JBMA T-303 is carried out.

Various uses according to the second embodiment are shown below. Incidentally, uses shown in Figs. 9 to 36 can be applied to the second embodiment which does not subject to forging.

Incidentally, in the following drawings, and in the explanations of Figs. 9 to 30, a member "made of brass" is all to be passed through the manufacturing step of the second embodiment.

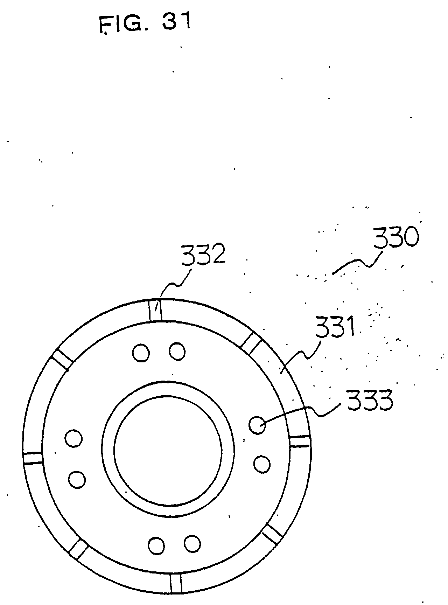

Fig. 31 shows a gas burner 330, and the gas burner 330 has a burner head 331 made of brass and to the burner head 331 made of brass are formed flame holes 332 and 333 by machining processing.

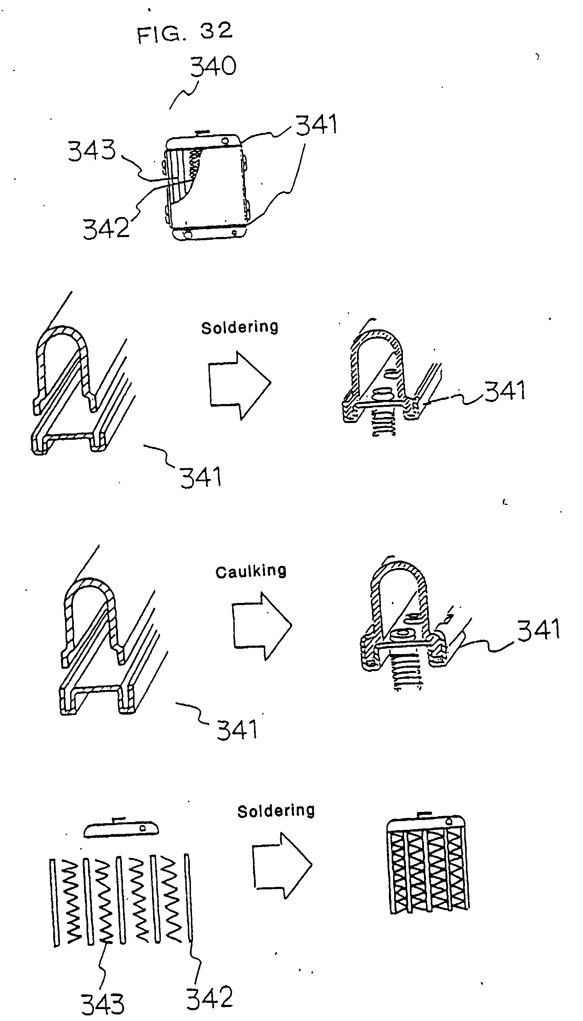

Fig. 32 shows a radiator 340, and the radiator 340 has a radiator plate 341 made of brass, a radiator fin 342 made of brass and a radiator tube 343 made of brass.

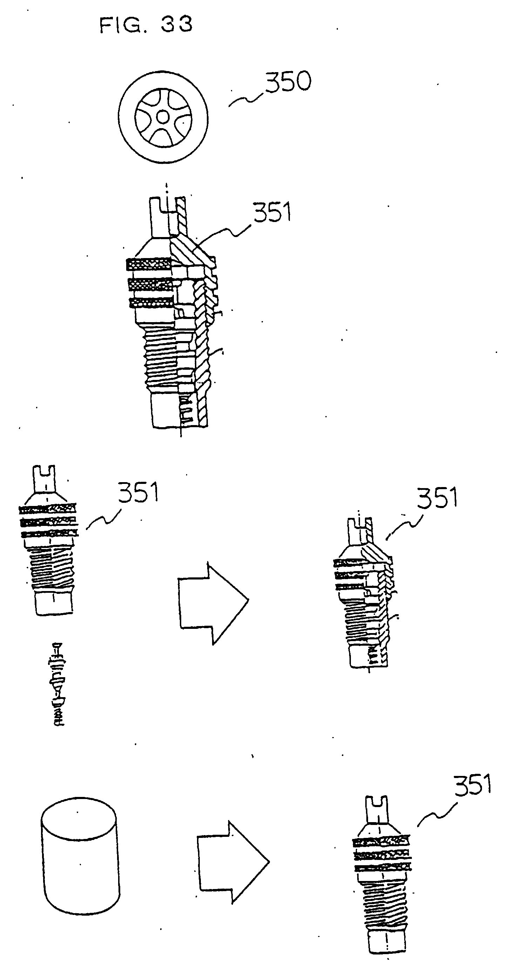

Fig. 33 shows a tire valve 350 for an automobile or a bicycle, and the tire valve 350 has a body 351 made of brass.

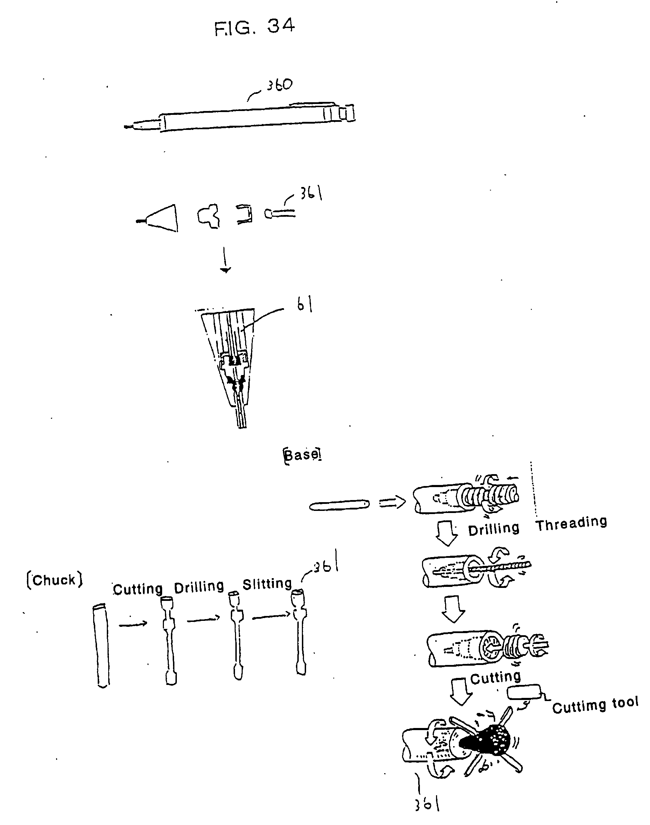

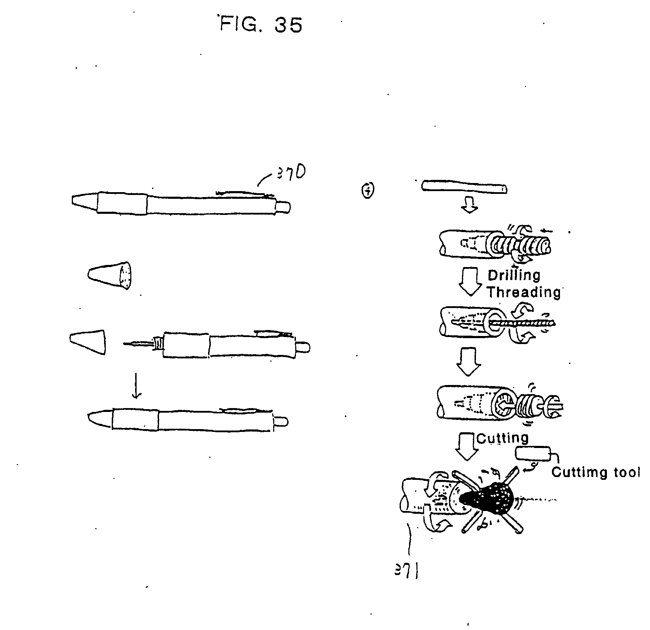

Figs. 34 and 35 show a mechanical pensile 360 and a ball-point pen 370, respectively, and the mechanical pensile 360 and the ball-point pen 370 has members 361 and 371 made of brass, respectively.

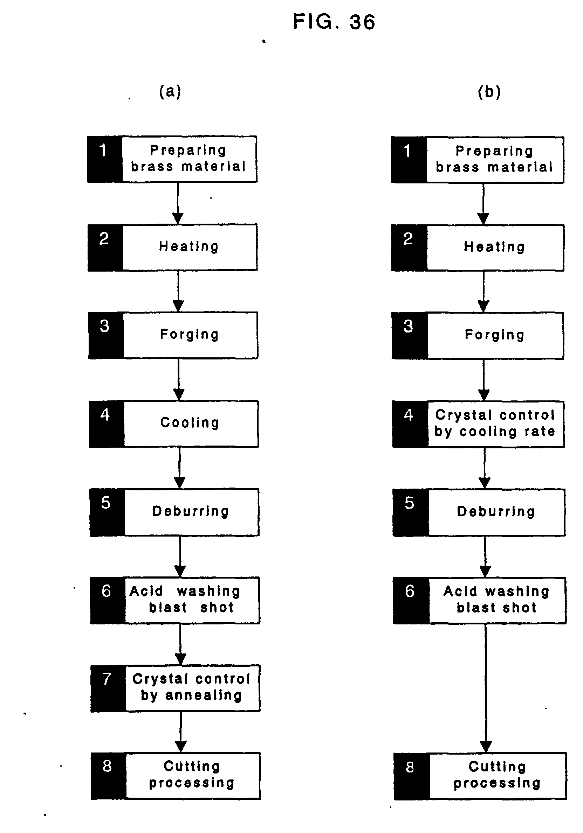

The embodiment of the present invention is described in detail below. Fig. 36 shows a manufacturing step of a conventional forged brass product excellent in corrosion resistance [conventional example] (a) and a manufacturing step of the present embodiment [Example] (b).

In the conventional example (a), a brass material prepared in the step 1 is heated in the step 2, and forged in an $\alpha+\beta$ mixed phase in the step 3. And after cooling to normal temperature in the step 4, through deburring in the step 5 and acid washing or shot blast in the step 6, annealing for making the crystal structure an $\alpha$ single phase is carried out. Thereafter, machining processing such as cutting, etc. is carried out in the step 8, manufacturing of a part is finished.

Here, problem arises in the annealing of the step 7. That is, the $\alpha$ single phase brass obtained by the results of step 7 is excellent in corrosion resistance but inferior in machinability.

To solve the problem, there is a method of exchanging the order of the step 7 and the step 8, but there is a case where an oxidized film is formed at the time of annealing. In such a case, there are problems in which precise shape or finishing quality after machining processing is impaired at the time of removing the oxidized film.

Next, when Example (b) is explained, in the step 1, a brass material having an apparent Zn content of 37 to 46 wt% and an Sn content of 0.5 to 7.0 wt% is prepared. This brass material has obtained a crystal structure having an average crystal grain size of <15 $\mu$m in the previous step.

Next, in the step 2, the prepared brass material is heated to 480 to 750° C and in the step 3, forging is carried out to the $\alpha+\beta$ mixed phase in which an areal ratio of the $\beta$ phase is 30 to 80%, but in the steps 2 and 3, it is necessary to take care not to coarsen the crystal grain size. This is because it not only affects to machinability and corrosion resistance in the later steps but also markedly lowers forging property when the average crystal grain size exceeds 15 $\mu$m.

When the forging is completed, cooling in the step 4 is to be carried out. In Example (b), the role performed by the step 7 of the conventional example (a) is possessed by the step 4. That is, a crystal structure excellent in corrosion resistance can be realized in the step, and the point different from the conventional example (a) is not due to the $\alpha$ single phase as shown in the following Examples 1 to 3.

[Example 1] By making a cooling rate 5 to 1000 K/sec, after cooling, a crystal structure in which it is an $\alpha+\beta$ phase, an areal ratio of the $\beta$ phase is 20% or more, and average crystal grain sizes of $\alpha$ and $\beta$ phases are 10 $\mu$m or less and an Sn concentration in the $\beta$ phase is 1.5 wt% or more can be obtained. By ensuring the Sn concentration in the $\beta$ phase, corrosion resistance of the $\beta$ phase can be ensured and by ensuring an areal ratio of the $\beta$ phase, machinability can be ensured. Also,

[Example 2] by making a cooling rate 0.4 to 5 K/sec, after cooling, a crystal structure in which it is an $\alpha+\gamma$ phase, an areal ratio of the $\gamma$ phase is 5 to 30%, an average crystal grain size of the $\alpha$ phase is 10 $\mu$m or less, an average crystal grain size (short diameter) of a $\gamma$ phase is 5 $\mu$m or less, an Sn concentration in the $\gamma$ phase is 8 wt% or more, and the $\gamma$ phase is dispersed in the grain boundary of the $\alpha$ phase can be obtained. By ensuring the Sn concentration in the $\gamma$ phase, corrosion resistance of the $\gamma$ phase can be ensured and by the difference in hardness at the grain boundary of the hard $\gamma$ phase and the soft $\alpha$ phase, machinability can be ensured.

[Example 3] By making a cooling rate 0.4 to 10 K/sec, after cooling, a crystal structure in which it is an $\alpha+\beta+\gamma$ phase, an areal ratio of the $\alpha$ phase is 40 to 94%, areal ratios of $\beta$ and $\gamma$ phases are both 3 to 30%, an average crystal grain size of the $\alpha$ and $\beta$ phase are 10 $\mu$m or less, an average crystal grain size (short diameter) of a $\gamma$ phase is 5 $\mu$m or less, an Sn concentration in the $\gamma$ phase is 8 wt% or more, and the $\beta$ phase is surrounded by the $\gamma$ phase can be obtained. By ensuring the Sn concentration in the $\gamma$ phase, corrosion resistance of the $\gamma$ phase can be ensured, and due to the presence of the $\beta$ phase and the difference in hardness at the grain boundary of the hard $\gamma$ phase and the soft $\alpha$ and $\beta$ phases, machinability can be ensured.

As shown above, Examples 1 to 3 each show good characteristics in both of corrosion resistance and machinability. More specifically, firstly as good corrosion resistance, when a dezinking test according to Japan Brass Makers Association Technical Standard JBMA T-303 is carried out, it can satisfy the corrosion resistance of the maximum dezinking depth of 70 $\mu$m or less.

Also, as a good machinability, it satisfies a machining resistance index of 80 or more. With regard to this point, when it is explained in detail by referring to Fig. 5, in the cutting test, while cutting a circumferential surface of a round rod-like shaped sample by a lathe with two different cutting rates of 100 [m/min] and 400 [m/min], a main dividing force Fv was measured. The machining resistance indexes of the examples are each a percentage of the main dividing force of the examples based on the main dividing force of the free-cutting brass bar which is said to be most excellent in machinability. (machining resistance indexes of respective cutting rates are averaged.)

Returning to Fig. 36, in Example (b), subsequent to the above step 4, deburring of the step 5 and acid washing and shot blast of the step 6 are carried out, but different from the conventional example (a), it is to carry out machining processing such as cutting, etc. at the step 8 without effecting annealing of the step 7.

That is, a crystal structure excellent in corrosion resistance has already been obtained during cooling of the step 4 so that the step 7 of the conventional example (a) is not required, and machinability is also improved in the step 8 as compared with the case where the $\alpha$ single phase of the conventional example (a) is subjected to machining processing.

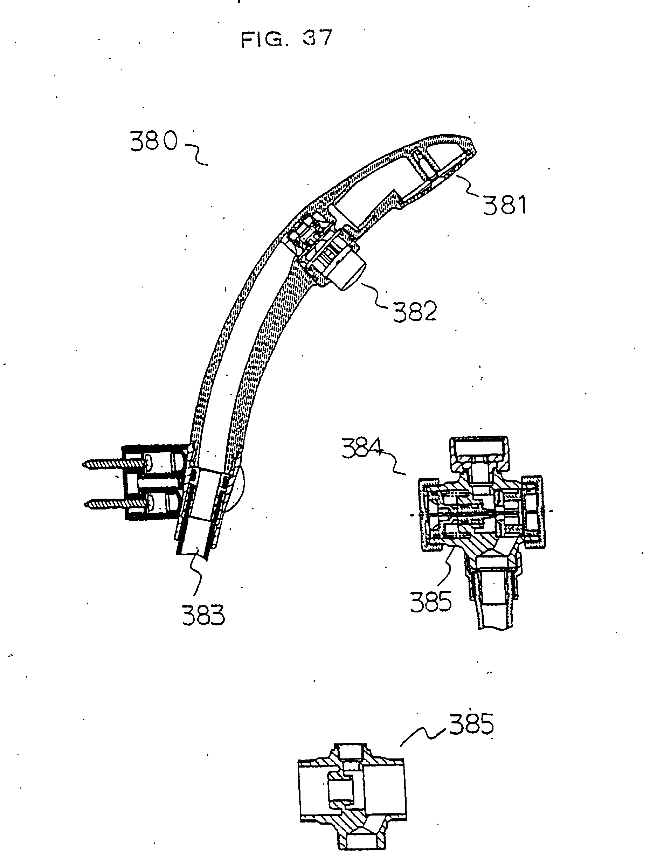

Next, a product application example of the forged brass product according to Example (b) is shown below. First, Fig. 37 is a shower apparatus 380, and the shower apparatus 380 has a water spreading portion 381, an operation switch valve portion 382, a flow channel portion 383 and a pressure response-move valve portion 384, and by subjecting to open and close the operation switch valve portion 382 by manual operation, start and stop of spreading water from the water spreading portion 381 are controlled. The pressure response-move valve portion 384 shuts by sensing increase in an inner pressure of the flow channel portion 383 when the operation switch valve portion 382 is shut, whereby increase in an inner pressure of the flow channel portion 383 can be prevented. (Details are mentioned in already filed PCT/JP96/03189 by the present applicant)

Of these, as a housing 385 of the pressure response-move valve portion 384, a forged brass product according to Example (b) has been used. In such a housing 385, when thickness of all the parts is made large in view of corrosion loss due to ensure corrosion resistance or padding is carried out to the outer surface, appearance becomes bad or attachment of a connecting fitment becomes difficult. When padding is carried out to the inner surface, it causes a pressure loss to lead lack of a flow amount. Thus, it cannot help providing a thin portion in thickness and a material excellent in corrosion resistance cannot help using the portion.

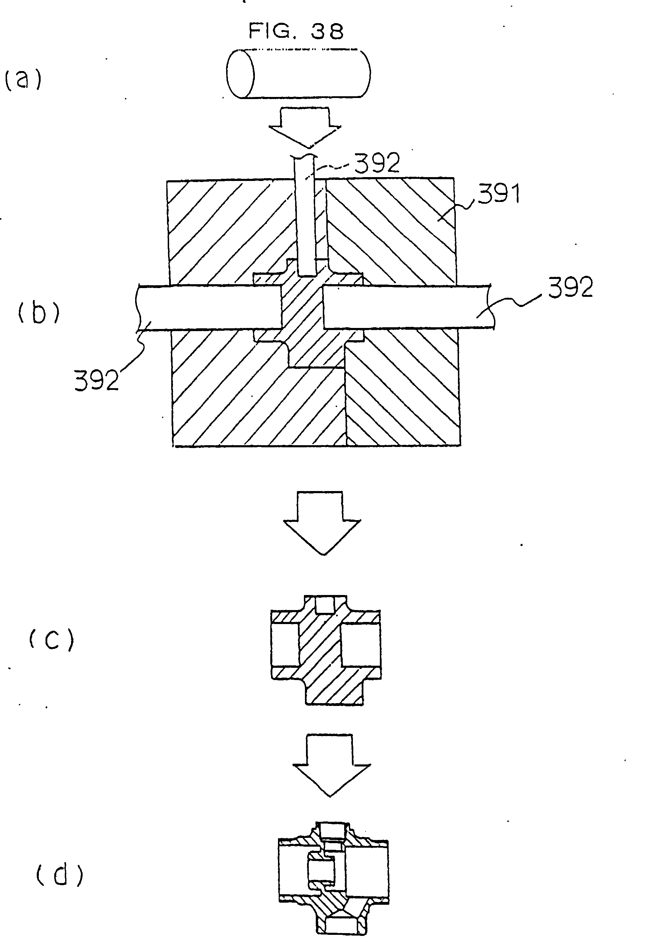

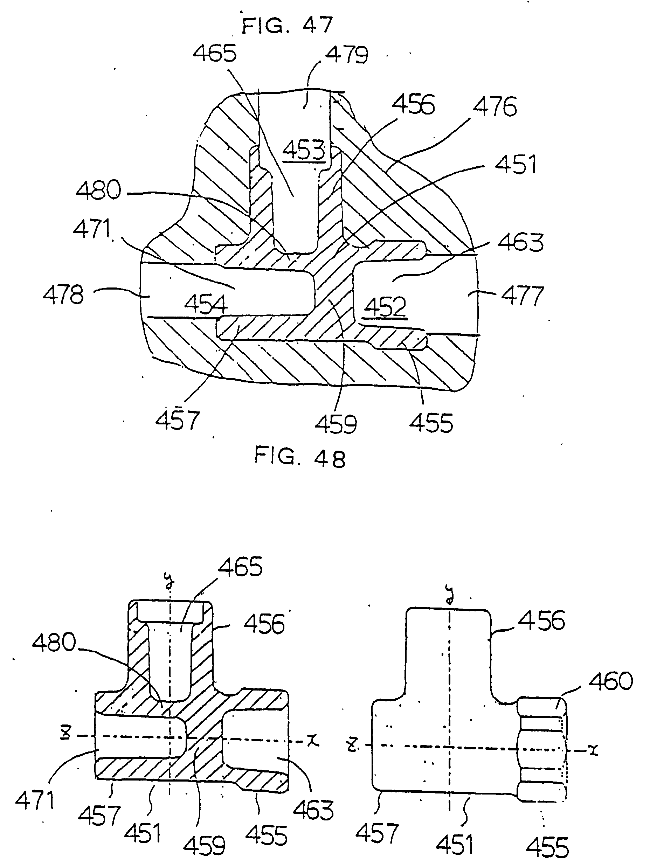

Fig. 48 is to explain a change in a shape of the housing 385. The housing 385 is a rod shaped material of Fig. 38(a) in the step 1, but in the step 3 after the step 2, as shown in Fig. 38(b), it is placed in a mold 391, and then subjected to plastic deformed by insertion of a punch 392 from three directions. (Hollow forging)

And after obtaining the crystal structures of Examples 1 to 3 according to the cooling rate controlling as mentioned in the above step 4, deburring of the step 5 and acid washing and shot blast of the step 6 are carried out to reach the shape of Fig. 38(c). When the machining processing of the step 8 is applied to, it becomes a shape having penetrated holes to four directions.

Thus, the housing 385 is subjected to machining processing after forging and is a material which is used at the portion requiring corrosion resistance, so that it is suitable to use a forged product excellent in both of machinability and corrosion resistance as in Examples 1 to 3.

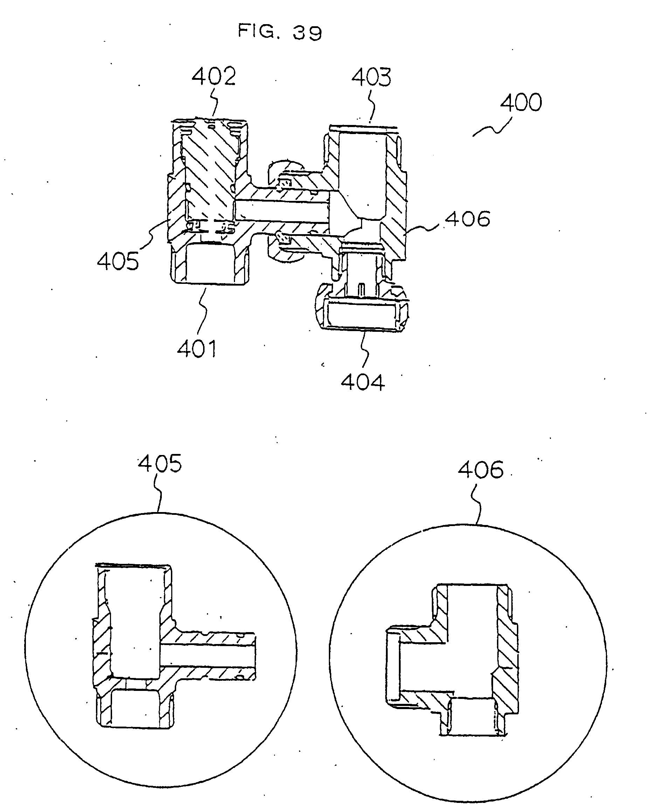

Subsequently, Fig. 39 is a branch fitment 400 as the other product application example of a forged brass product according to Example (b), and the branch fitment 400 has a water inlet flow channel 401, a flow amount adjusting valve portion 402, a first water outlet flow channel 403, and a second water outlet flow channel 404.

The first water outlet flow channel 403 and the second water outlet flow channel 404 are each connected to a washing tank such as a stool, etc., and a hot water storing tank such as a sanitary washing apparatus, etc., not shown, and by manually adjusting the flow amount adjusting valve portion 402, water feeding pressures to the washing tank and the hot water storing tank are regulated.

The branch fitment 400 also constitutes a flow channel by connecting an upper stream side housing 405 and a down stream side housing 406, and as the upper stream side housing 405 and the down stream side housing 406, forged brass products are used. In such housings 405 and 406, when thickness of all the parts is made large in view of corrosion loss due to ensure corrosion resistance or padding is carried out to the outer surface, appearance becomes bad or attachment of a connecting fitment becomes difficult. When padding is carried out to the inner surface, it causes a pressure loss to lead lack of a flow amount. Thus, it cannot help providing a thin portion in thickness and a material excellent in corrosion resistance cannot help using the portion.

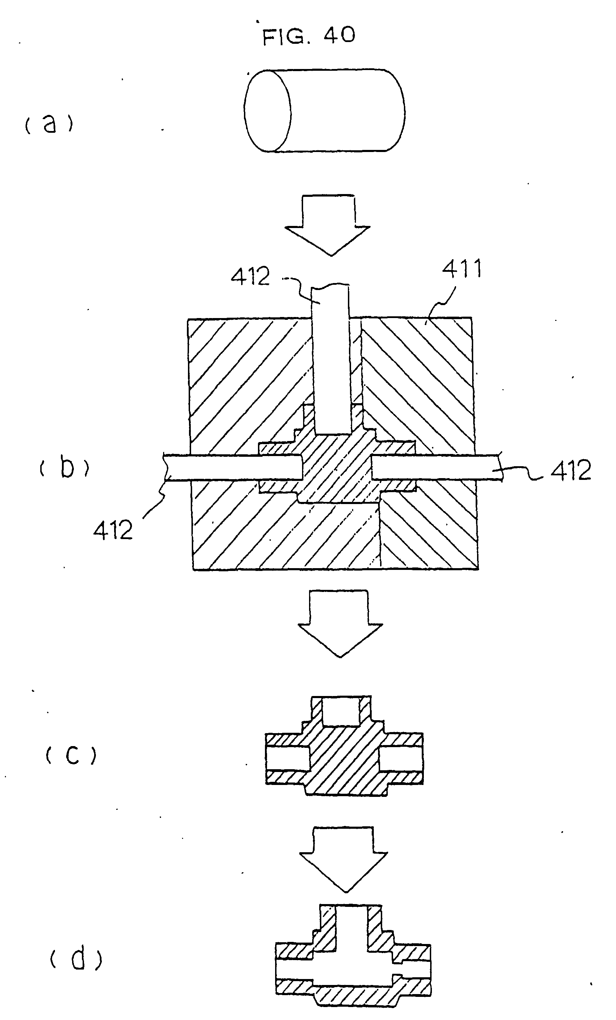

Fig. 40 is to explain a change in a shape of the respective housings 405 and 406. The respective housings 405 and 406 are rod shaped materials of Fig. 40(a) in the step 1, but in the step 3 after the step 2, as shown in Fig. 40(b), it is placed in a mold 411, and then subjected to plastic deformed by insertion of a punch 412 from three directions. (Hollow forging)

And after obtaining the crystal structures of Examples 1 to 3 according to the cooling rate controlling as mentioned in the above step 4, deburring of the step 5 and acid washing and shot blast of the step 6 are carried out to reach the shape of Fig. 40(c). When the machining processing of the step 8 is applied to, it becomes a shape as shown in Fig. 40(d).

Thus, the housings 405 and 406 are subjected to machining processing after forging and further is a material which is used at the portion requiring corrosion resistance, so that it is suitable to use a forged product excellent in both of machinability and corrosion resistance as in Examples 1 to 3.

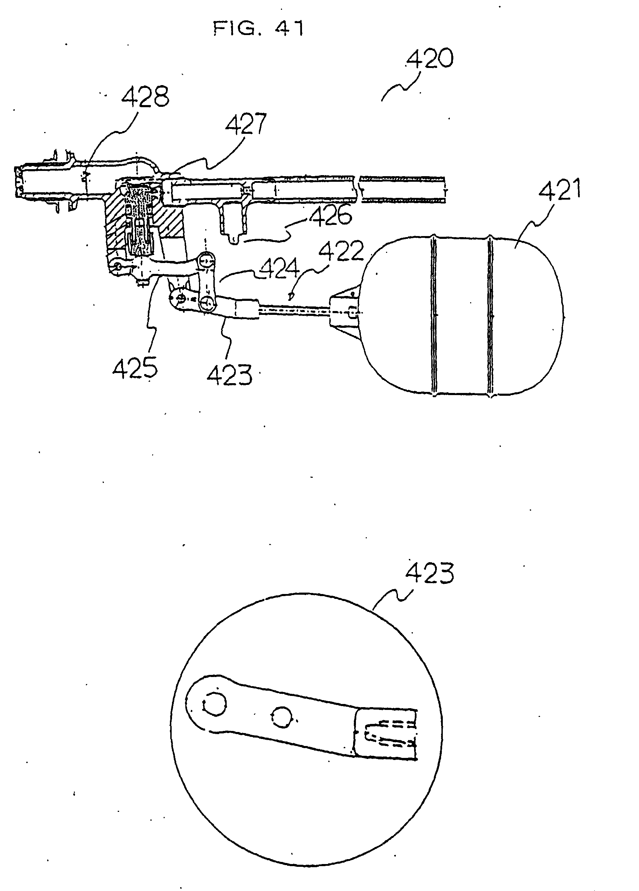

Fig. 41 shows a water-feed controlling apparatus 420 as the other production application example of a forged brass product according to Example (b), and the water-feed controlling apparatus 420 is to control a water level of a washing tank, etc. of a stool and has a floating ball 421, a link 422 fixed to the floating ball 421, a movable lever 423, movable plate materials 424 and 425, a water outlet port 426, a switch valve portion 427 and a water inlet flow channel 428.

When a water level of the washing tank, etc., is reached to a set water level, the floating ball 421 is positioned as shown in the figure and the switch valve portion 427 is closed but when the water level is lowered, as the floating ball 421 moves to downward, the movable lever 423 looks downward. The movement is transported by the movable plate materials 424 and 425 to open the switch valve portion 427, water spreading from the water outlet port 426 is started. Then, the water level is elevated so that the floating ball 421 is also elevated to return the position as shown in the figure to stop spreading water.

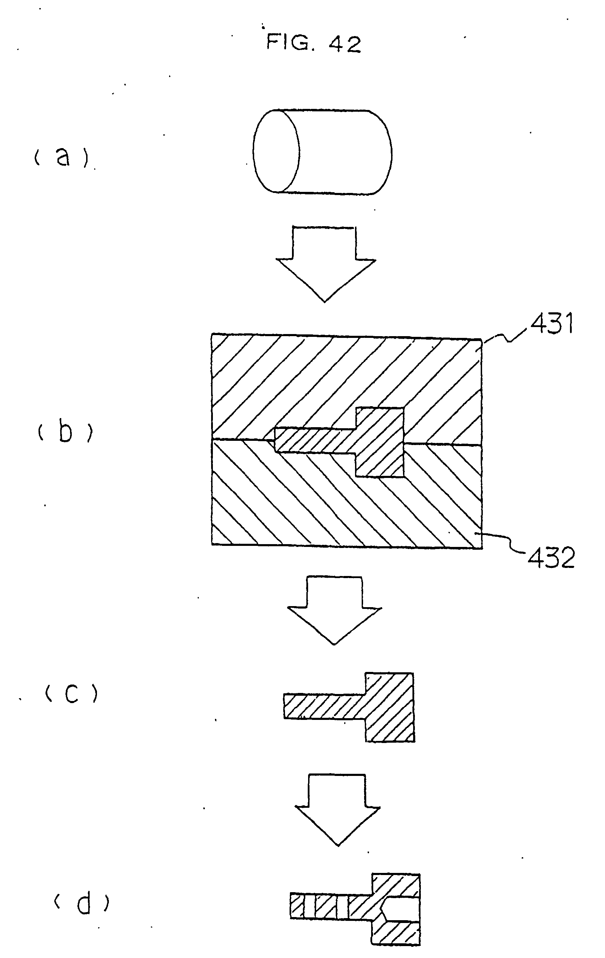

Among these procedures, as the movable lever 423, the forged brass product according to Example (b) is used, and a change in shape is explained in Fig. 42. The movable lever 423 is a rod shaped material of Fig. 42(a) in the step 1, but in the step 3 after the step 2, as shown in Fig. 42(b), it is sandwiched between molds 431 and 432, whereby subjecting to plastic deformation. (Mold forging)

And after obtaining the crystal structures of Examples 1 to 3 according to the cooling rate controlling as mentioned in the above step 4, deburring of the step 5 and acid washing and shot blast of the step 6 are carried out to become the shape as shown in Fig. 42(c).

Thus, the movable lever 423 is subjected to machining processing after forging and is a material which is used at the portion requiring corrosion resistance, so that it is suitable to use a forged product excellent in both of machinability and corrosion resistance as in Examples 1 to 3. Moreover, Examples 1 to 3 are not an $\alpha$ single phase and are fine in an average crystal grain size and (particularly in Examples 2 and 3, by precipitating a $\gamma$ phase, they are more) excellent in strength and abrasion resistance so that it is more suitable to use them as a movable member such as a movable lever 24.

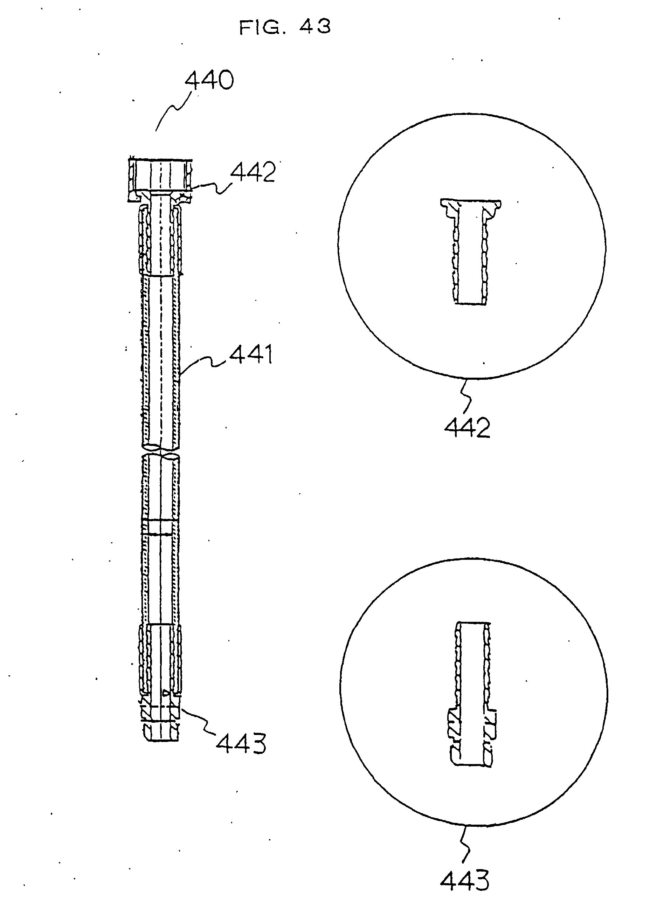

Fig. 43 is the other embodiment according to the present invention, and shows a water-feeding hose 440 as a product application example of a forged brass product excellent in corrosion resistance. The water-feeding hose 440 has a flexible hose 441 and connecting fitments 442 and 443.

As the connecting fitments 442 and 443, the forged brass products excellent in corrosion resistance of Examples 1 to 3 are used. In such connecting fitments 442 and 443, when thickness of all the parts is made large in view of corrosion loss due to ensure corrosion resistance or padding is carried out to the outer surface, appearance becomes bad or attachment of a flexible hose 441, etc., becomes difficult. When padding is carried out to the inner surface, it causes a pressure loss to lead lack of a flow amount. Thus, it cannot help providing a thin portion in thickness and a material excellent in corrosion resistance cannot help using the portion.

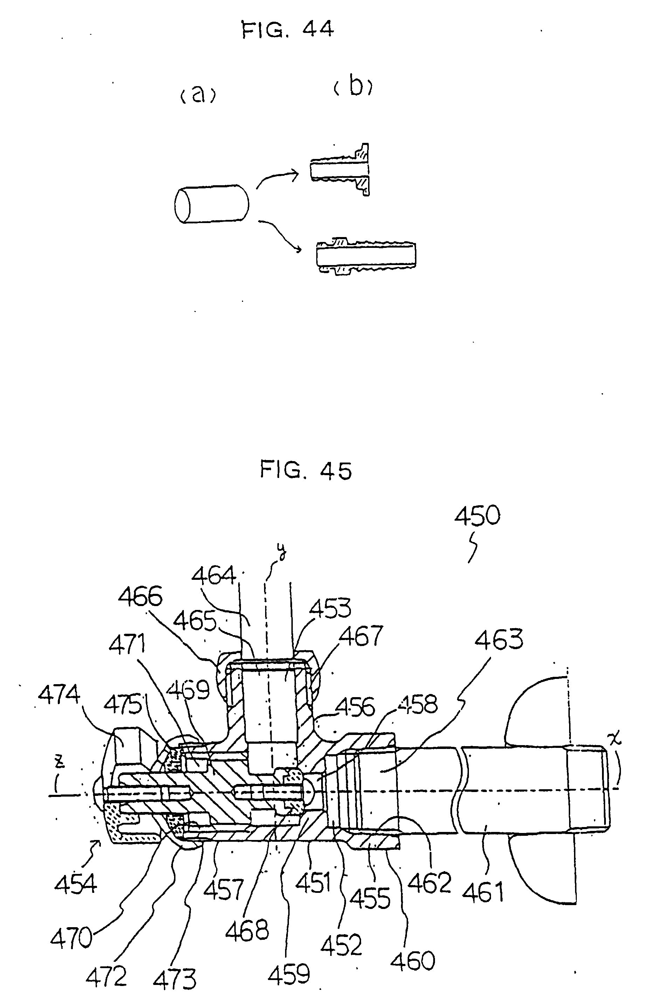

Fig. 44 is to explain the change in a shape, and the connecting fitments 442 and 443 are obtained by preparing a rod material previously having crystal structures of Examples 1 to 3 in the first step shown in Fig. 44(a), and subjecting to machining processing in the second step shown in Fig. 44(b) to obtain a hollow shape.

As mentioned above, the connecting fitments 442 and 443 are used at the portion required to have corrosion resistance after machining processing, so that a machining product excellent in corrosion resistance as in Examples 1 to 3 is suitable.

Also, in addition to those as explained above, it is suitable for use as a valve seat portion of a switch valve of a water stopper fitment. This is because, a flow rate at the valve seat portion is fast and it is a position to which a clamping force is applied so that a material excellent in erosion-corrosion resistance as in the present embodiment is suitable.

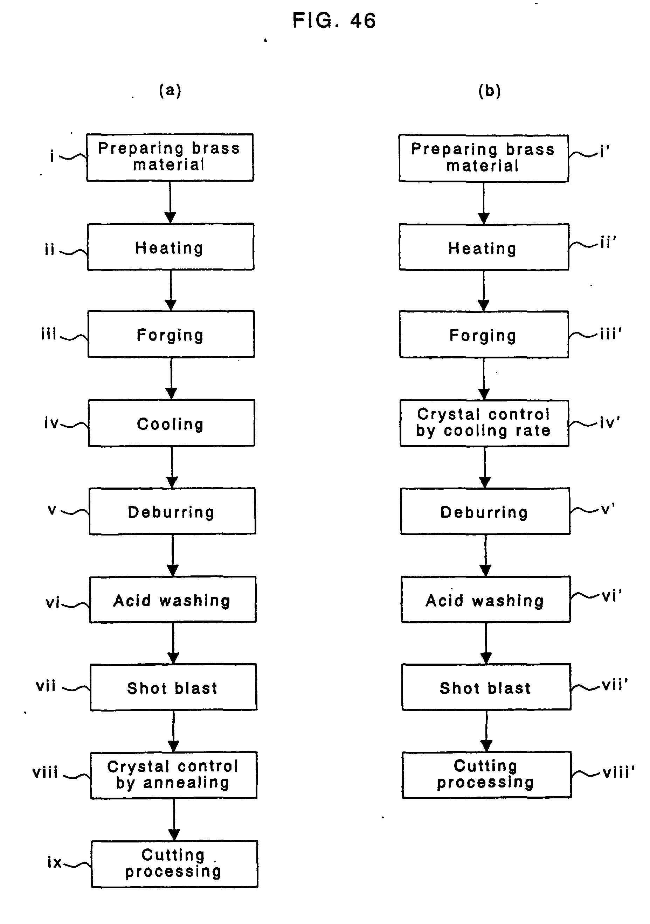

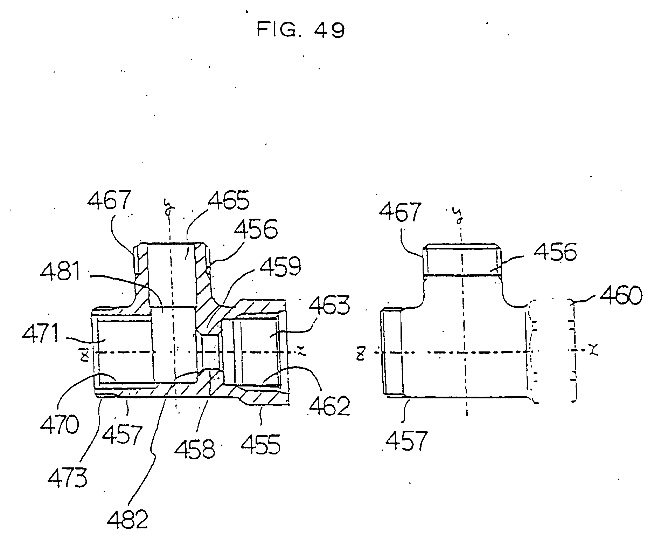

The embodiment of the present invention is explained in detail below. Fig. 45 is a sectional view showing waterstop plug for tap water as one example of an angle type valve, Fig. 46(a) shows a manufacturing step drawing of an angle type valve made of brass by the conventional forging, Fig. 46(b) shows a manufacturing step drawing of an angle type valve made of brass by the present embodiment, Fig. 47 is a schematic drawing showing forging processing, Fig. 48(a) is an appearance view of the body after forging processing, Fig. 48(b) shows a sectional view thereof, Fig. 49(a) is an appearance view of the body after machining processing, and Fig. 49(b) shows a sectional view thereof.

In Fig. 45, in a water stopper 450, the body 451 is formed to a substantially T-letter shaped combining three cylindrical portions 455, 456 and 457, in which an axis (x) to an inlet 452 direction and an axis (y) to an outlet 453 direction are substantially crossed, and the axis (x) of the inlet 452 direction and an axis (z) of an operation direction of a switch valve 454 are substantially coincide to each other, and a separating wall 459 to which a valve seat hole 458 is opened is provided at the position leaned to the inlet 452 side from the axis center of the outlet 453 direction.

At an outer peripheral of the cylindrical portion 455 of an inlet side, a hexagonal portion 460 for a tool hanging such as a spanner is formed and at an inner peripheral of the same, an inlet hole portion 463 to which female screw 462 is provided by carving for connecting to a water-feeding tube 461 is formed.

At an outer peripheral of the cylindrical portion 466 of an outlet side, an outlet hole portion 465 for putting in a copper tube 464 to be connected to a ball tap (not shown in the figure) is formed and at an outer peripheral of the same, a male screw 467 for a bag nut 466 for fixing the copper tube 464 is provided by carving.

At the inner peripheral of a switch valve side cylindrical portion 457, a switch valve hole portion 471 to which a female screw 470 which is fit to a spindle 469 to which a seal packing 468 is attached at the top end is provided by carving is provided, and a male screw 473 to which a cap nut 472 is attached is provided by carving at the outer peripheral thereof.

Incidentally, 474 is a handle for the switch valve 454, and 475 is a cap nut packing.

In Fig. 46(a), in conventional, a brass material prepared in the first step (i) is heated in the second step (ii), and in the third step (iii), the material is forged in an $\alpha+\beta$ mixed phase. And after cooling to normal temperature in the fourth step (iv), deburring in the fifth step (v), acid washing in the sixth step (vi), shot blast in the seventh step (vii) and annealing for making the crystal structure an α single phase in the eighth step (viii) are carried out. Thereafter, at the ninth step (ix), machining processing such as cutting, etc., is carried out to complete manufacturing of an angle type valve body (1).

Here, problem arises in the annealing of the eighth step (viii). That is, the α single phase brass obtained by the results of the eighth step (viii) is excellent in corrosion resistance but inferior in machinability.

To solve the problem, there is a method of exchanging the order of the eighth step (viii) and the ninth step (ix), but there is a case where an oxidized film is formed at the time of annealing. In such a case, there are problems in which precise shape or finishing quality after machining processing is impaired at the time of removing the oxidized film.

Next, when Example of the present invention shown in Fig. 46(b) is explained, in the first step (i') which is the first step, a brass material having an apparent Zn content of 37 to 46 wt% and an Sn content of 0.5 to 7.0 wt% is prepared. This brass material has obtained a crystal structure having an average crystal grain size of <15 μm in the previous step.

Next, in the heating and forging step which is the second step, the brass material prepared in the second step (ii') is heated to 480 to 750°C and in the third step (iii'), warm or hot forging is carried out to the α+β mixed phase in which an areal ratio of the β phase is 30 to 80%, but in the second steps (ii') and the third step (iii'), it is necessary to take care not to coarsen the crystal grain size. This is because it not only affects to machinability and corrosion resistance in the later steps but also markedly lowers forging property when the average crystal grain size exceeds 15 μm.

When the forging is completed, cooling in the fourth step (iv') is to be carried out. In Example (b), the role performed by the eighth step (viii) of the conventional example (a) is possessed by the fourth step (iv). That is, a crystal structure excellent in corrosion resistance can be realized in the step, and the point different from the conventional example (a) is not due to the α single phase as shown in the following Examples 1 to 3.

[Example 1] By making a cooling rate 5 to 1000 K/sec, after cooling, a crystal structure in which it is an α+β phase, an areal ratio of the β phase is 20% or more, and average crystal grain sizes of α and β phases are 10 μm or less and an Sn concentration in the β phase is 1.5 wt% or more can be obtained. By ensuring the Sn concentration in the β phase, corrosion resistance of the β phase can be ensured and by ensuring an areal ratio of the β phase, machinability can be ensured.

[Example 2] By making a cooling rate 0.4 to 5 K/sec, after cooling, a crystal structure in which it is an α+γ phase, an areal ratio of the γ phase is 5 to 30%, an average crystal grain size of the α phase is 10 μm or

less, an average crystal grain size (short diameter) of a γ phase is 5 μm or less, an Sn concentration in the γ phase is 8 wt% or more, and the γ phase is dispersed in the grain boundary of the α phase can be obtained. By ensuring the Sn concentration in the γ phase, corrosion resistance of the γ phase can be ensured and by the difference in hardness at the grain boundary of the hard γ phase and the soft α phase, machinability can be ensured.

[Example 3] By making a cooling rate 0.4 to 10 K/sec, after cooling, a crystal structure in which it is an α+β+γ phase, an areal ratio of the α phase is 40 to 94%, areal ratios of β and γ phases are both 3 to 30%, an average crystal grain size of the α and β phase are 10 μm or less, an average crystal grain size (short diameter) of a γ phase is 5 μm or less, an Sn concentration in the γ phase is 8 wt% or more, and the β phase is surrounded by the γ phase can be obtained. By ensuring the Sn concentration in the γ phase, corrosion resistance of the γ phase can be ensured, and due to the presence of the β phase and the difference in hardness at the grain boundary of the hard γ phase and the soft α and β phases, machinability can be ensured.

As shown above, Examples 1 to 3 each show good characteristics in both of corrosion resistance and machinability. More specifically, firstly as good corrosion resistance, when a dezinking test according to Japan Brass Makers Association Technical Standard JBMA T-303 is carried out, it can satisfy the corrosion resistance of the maximum dezinking depth of 70 μm or less.

Also, as a good machinability, it satisfies a machining resistance index of 80 or more. With regard to this point, when it is explained in detail by referring to Fig. 5, in the cutting test, while cutting a circumferential surface of a round rod-like shaped sample A by a lathe with two different cutting rates of 100 [m/min] and 400 [m/min], a main dividing force Fv was measured. The machining resistance indexes of the examples are each a percentage of the main dividing force of the examples based on the main dividing force of the free-cutting brass bar which is said to be most excellent in machinability. (machining resistance indexes of respective cutting rates are averaged.)

According to the crystal structure of Examples 1 to 3, they show good characteristics also in SCC resistance. More specifically, when a cylindrical sample is exposed to an ammoniacal atmosphere above a 14% aqueous ammonia solution for 24 hours and then a load is applied, it satisfies a characteristic that a maximum stress at which a sample is not broken is 180 N/mm2 or more. This SCC resistance test is, as shown in Fig. 6, to examine occurrence of crack after exposing a cylindrical sample C in a NH3 vapor atmosphere for 24 hours under the condition of perpendicularly loading in a glass desiccator B.

Also, according to the crystal structures of Examples 1 to 3, good characteristics are shown in erosion-corrosion resistance. In the erosion-corrosion resistance test shown in Fig. 7, by using a cylindrical sample E having an orifice D inside thereof, and after flowing water through the orifice D with a flowing rate of 40 m/sec for a predetermined time, a clamping torque to a resin stopper F required for sealing the orifice D under a water pressure of 4.9x105 Pa (5 Kg/cm2) was measured.

Test results of Fig. 7 are as shown in Fig. 8, and the brass materials of the Examples 1 to 3 gave good results as compared with the conventional example. Incidentally, as the conventional example, that containing Sn amount of less than 0.5 wt% was used.

Returning to Fig. 46, in Example (b), subsequent to the fourth step (iv') as mentioned above, deburring in the fifth step (v'), acid washing in the sixth step (vi'), shot blast in the seventh step (vii') and annealing for making the crystal structure an α single phase in the eighth step (viii') are carried out. Thereafter, at the ninth step (ix), machining processing such as cutting, etc., is carried out.

That is, during cooling in the fourth step (iv), a crystal structure excellent in corrosion resistance has already been obtained so that an annealing of the eighth step (viii) of the conventional example becomes not necessary. In the machining of the eighth step (viii') of the present example, machinability is more improved as compared with the case where an α single phase of the conventional example (a) is to be subjected to machining processing.

Next, based on Fig. 47, forging step of an angle type valve body is explained.

In an angle type valve body 451, a raw material (not shown in the figure) having a rod shape is provided in a mold 476, and its outer shape is formed to a substantially T-letter shape in which three cylindrical portions 475, 476 and 477 are combined and three punches 477, 478 and 479 are inserted therein from an inlet 452 direction side, an operation direction side of an switch valve 454 and an outlet 453 direction side to form a first separating wall 459 at the position leaned to the inlet 452 side from the axis (y) center of the outlet 453 direction, and to form a second separating wall 480 at the position leaned to the outlet 453 side from the axis (z) center to the operation direction of the switch valve 454 whereby it is so subjected to plastic deformation that the inlet hole portion 463, the switch valve hole portion 471 and the outlet hole portion 465 are provided to open.

Incidentally, a body portion of the cylindrical portion 456 does not present at the position in the figure at the stage of a rod shape, and at the mold 476 forging or inserting punches 477 and 478, the rod shape material is elongated so that it is formed at the position of the drawing.

And after obtaining the crystal structures of Examples 1 to 3 by controlling the cooling rate as mentioned in the fourth step (iv'), through deburring in the fifth step (v'), acid washing in the sixth step (vi') and shot blast in the seventh step (vii'), it reaches the shape of Fig. 48, and when machining processing in the eighth step (viii') is applied to give the shape shown in Fig. 49.

That is, at the inlet side cylindrical portion 455, a female screw 462 is provided by carving at an inner peripheral of an inlet hole portion 463, and a male screw 467 is provided by carving at an outer peripheral of an outlet side cylindrical portion 456 as well as a water passing hole 481 is provided to open to the second separating wall 480 from an outlet hole portion 465 side to connect through the switch valve hole portion 471.

Also, at the inner peripheral of the switch valve hole portion 471 of the switch valve side cylindrical portion 457, a female screw 470 is provided by carving and at the outer peripheral is provided by carving a male screw 473.

At the first separating wall 459, a valve seat hole 458 is provided to open from an inlet hole portion 463 side or a switch valve hole portion 471 side and also processing of a valve sheet 482 is carried out from the switch valve hole portion 471 side.

Thus, since the body 451 is subjected to machining processing after forging, and further used at the portion which requires to have corrosion resistance, so that it is suitable to make a forged product excellent in machinability and corrosion resistance as in Examples 1 to 3.

Also, it is suitable to directly form a valve seat portion 482 at the first separating wall 459. This is because a flow rate is rapid at the valve sheet portion 482 and the portion is to accept an clamping force so that a material excellent in erosion-corrosion resistance as in the present embodiment.

Incidentally, in the present Example, punches are inserted from three directions at the time of forging, but at the time of forging, two punches are inserted from an inlet direction side and an operation direction of the switch valve to provide an opening between the inlet hole portion and a switch valve hole portion, and the outlet hole portion may be provided to open by machining processing after forging.

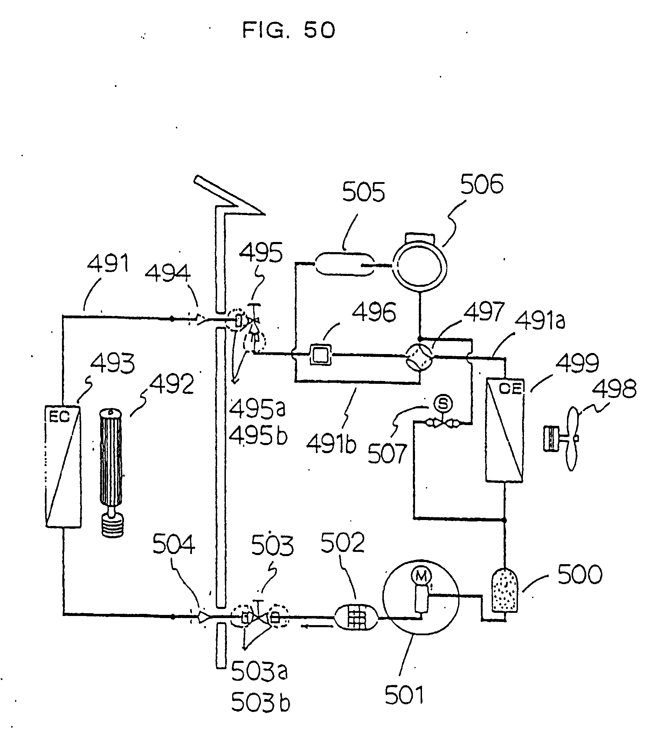

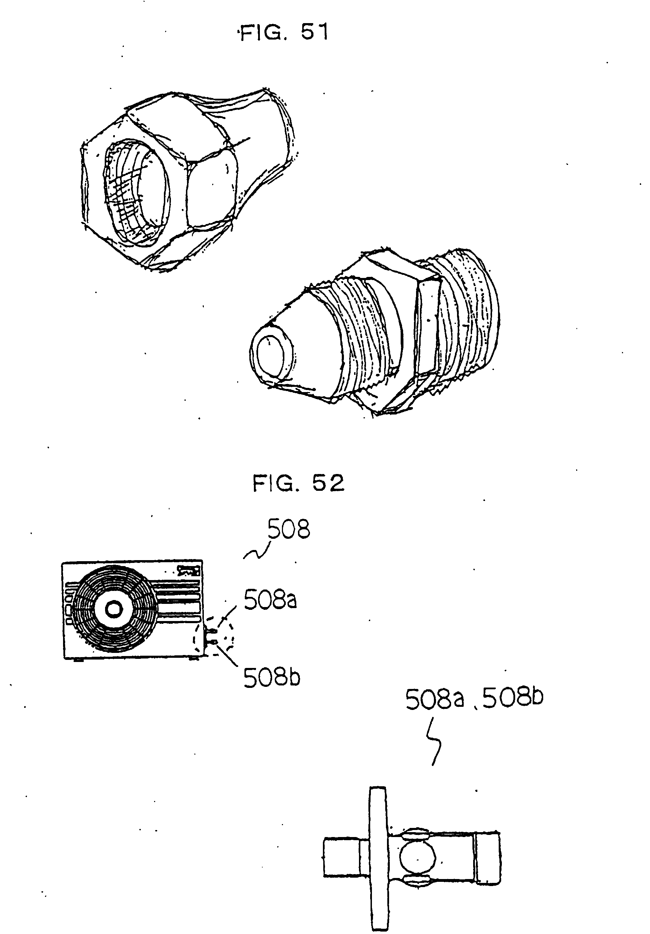

The embodiment of the present invention has characteristic features in the points that flare nuts 495a, 495b, 503a, 503b, service valves 508a and 508b shown in Figs. 50 to 52 have any of the crystal structure of the following (1) to (3), and molded by forging.

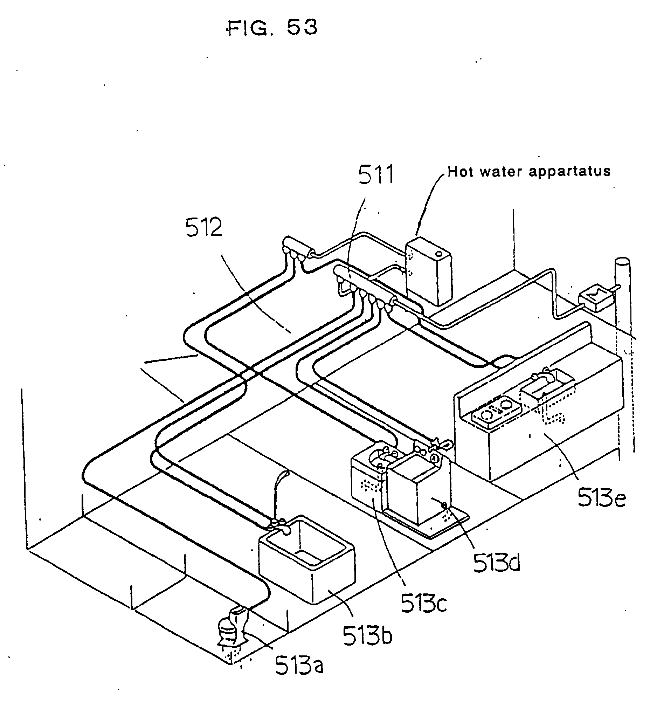

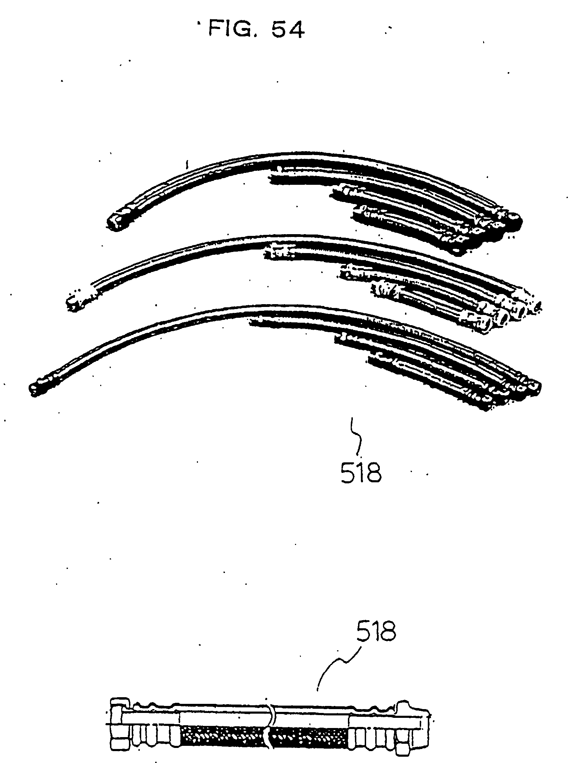

The embodiment of the present invention has characteristic features in the points that joints shown in Figs. 53 and 54 have any of the crystal structure of the following (1) to (3), and molded by forging.

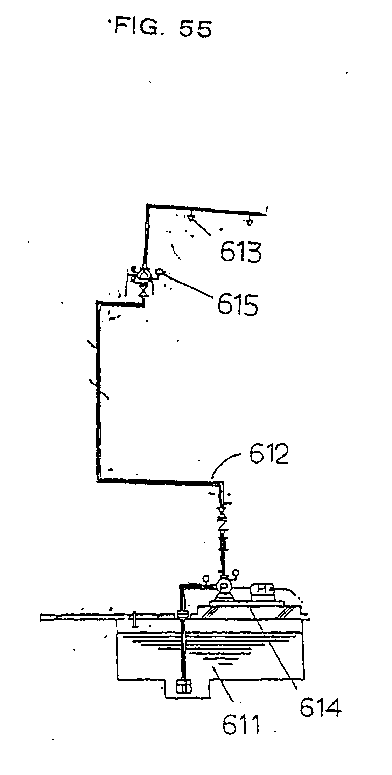

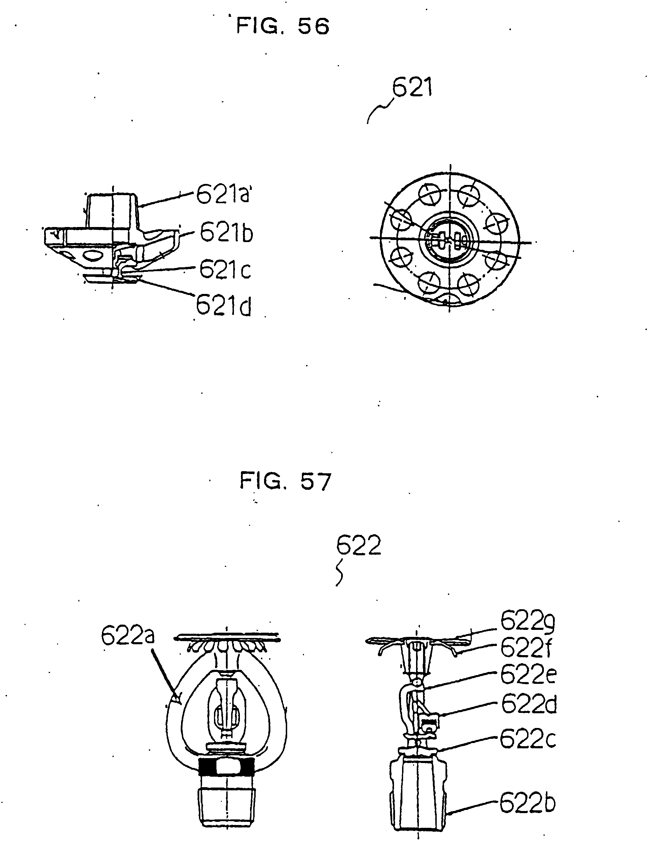

The embodiment of the present invention has characteristic features in the points that bodies 621a, 621b and a body 622a shown in Figs. 55 to 57 have any of the crystal structure of the following (1) to (3), and molded by forging.

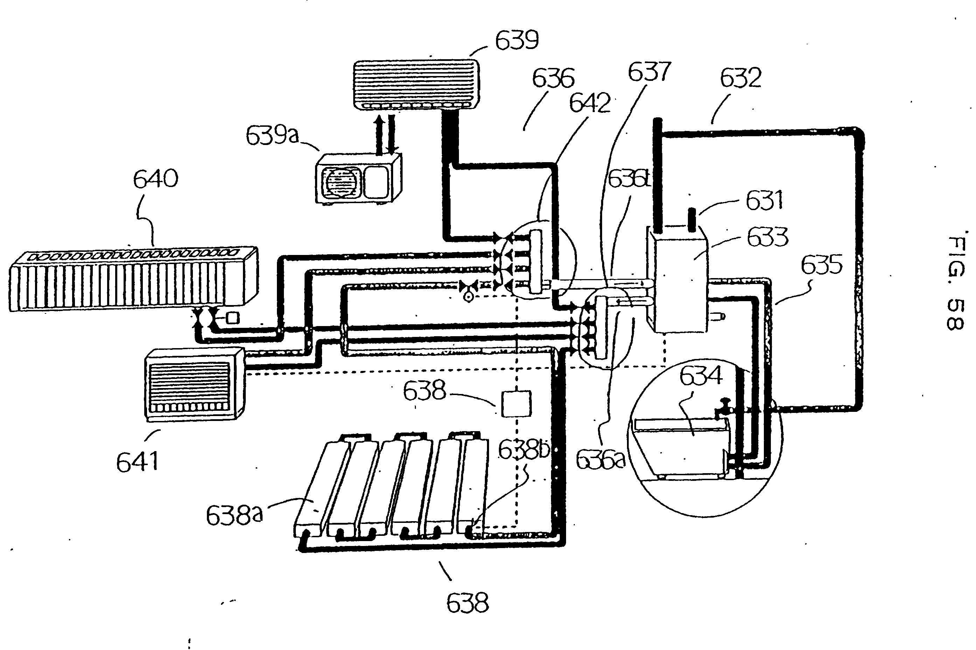

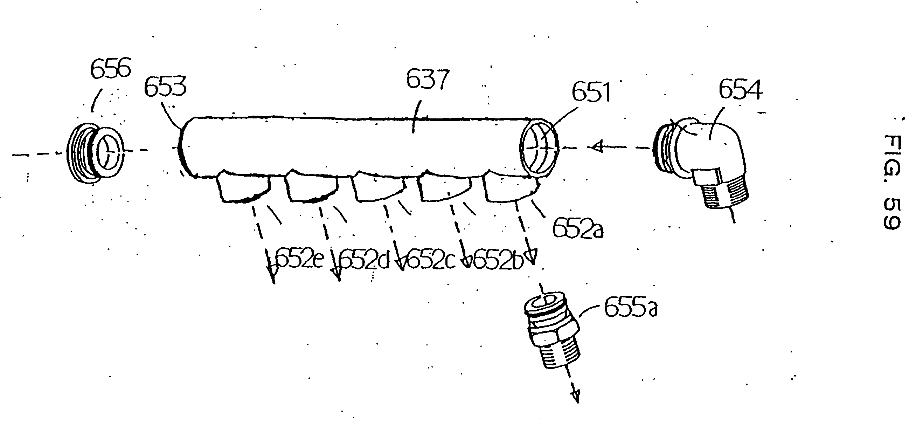

The embodiment of the present invention has characteristic features in the points that a header 637 and an elbow 654 of Figs. 58 and 59 have any of the crystal structure of the following (1) to (3), and molded by forging.

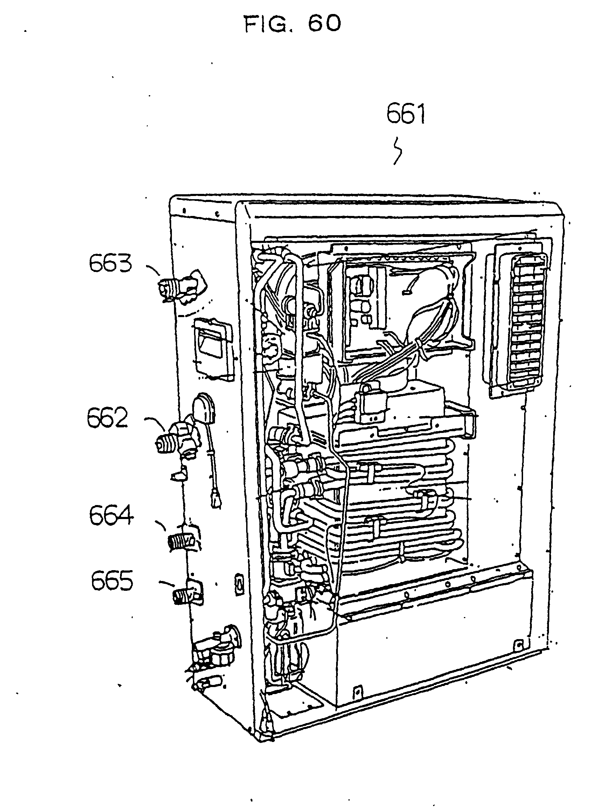

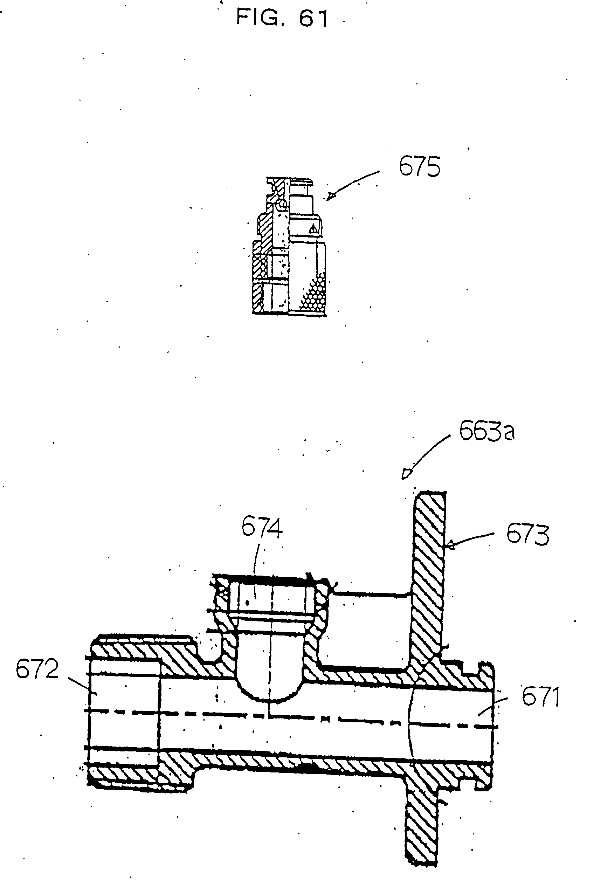

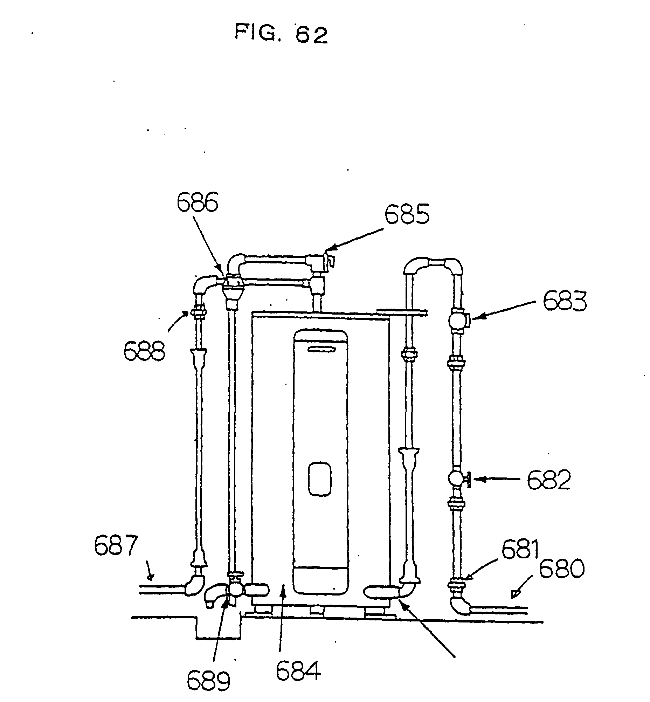

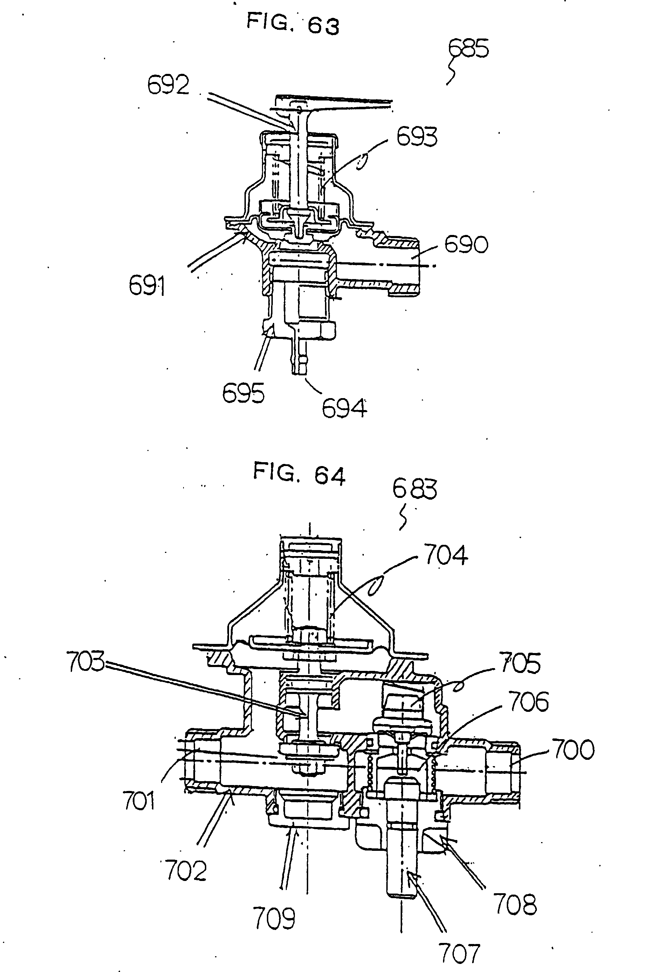

The embodiment of the present invention has characteristic features in the points that an escape valve 675, a valve box 691, a valve axis 692, a joint 695, a valve box 702, a valve rod 703, a push shaft 707, a strainer cap 708 and a valve body cap 709 shown in Figs. 60 to 64 have any of the crystal structure of the following (1) to (3), and molded by forging.

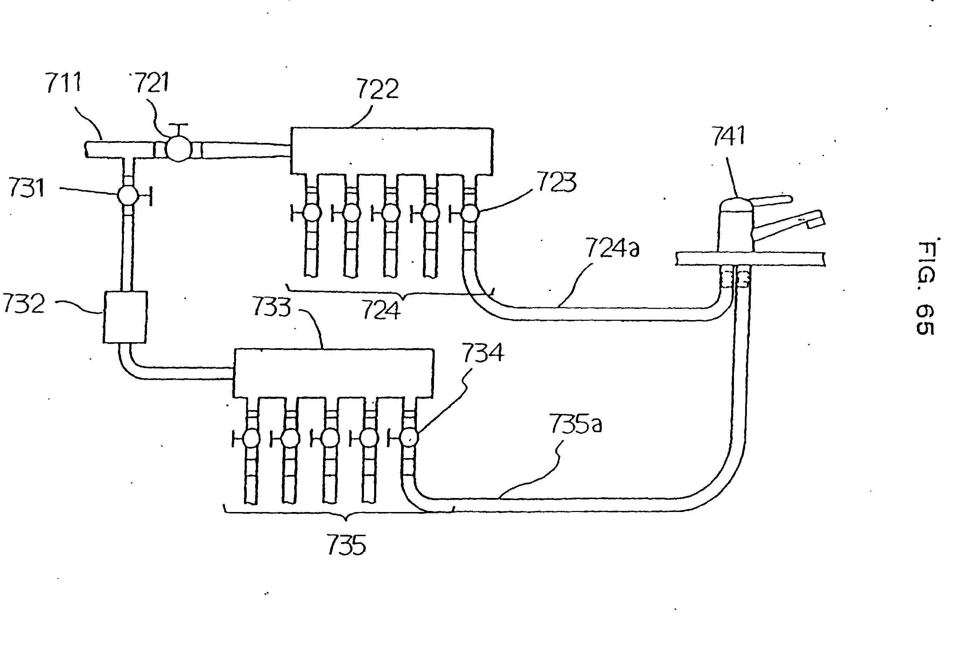

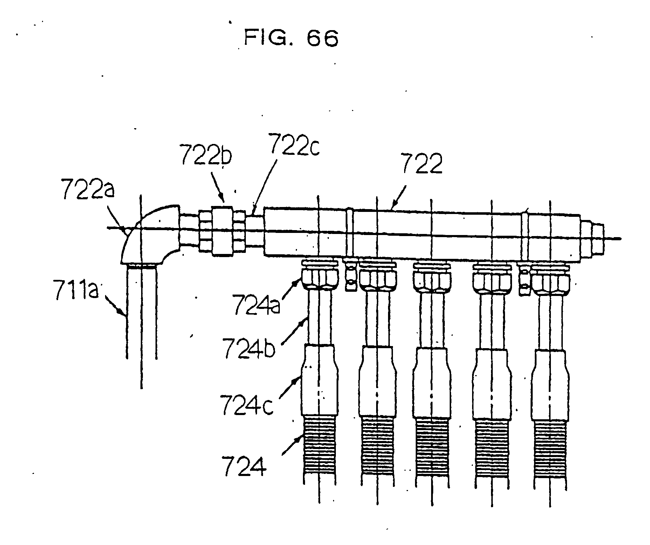

The embodiment of the present invention has characteristic features in the points that a water feeding header 722 and a hot water feeding header 733 shown in Fig. 65 and Fig. 66 have any of the crystal structure of the following (1) to (3), and molded by forging.

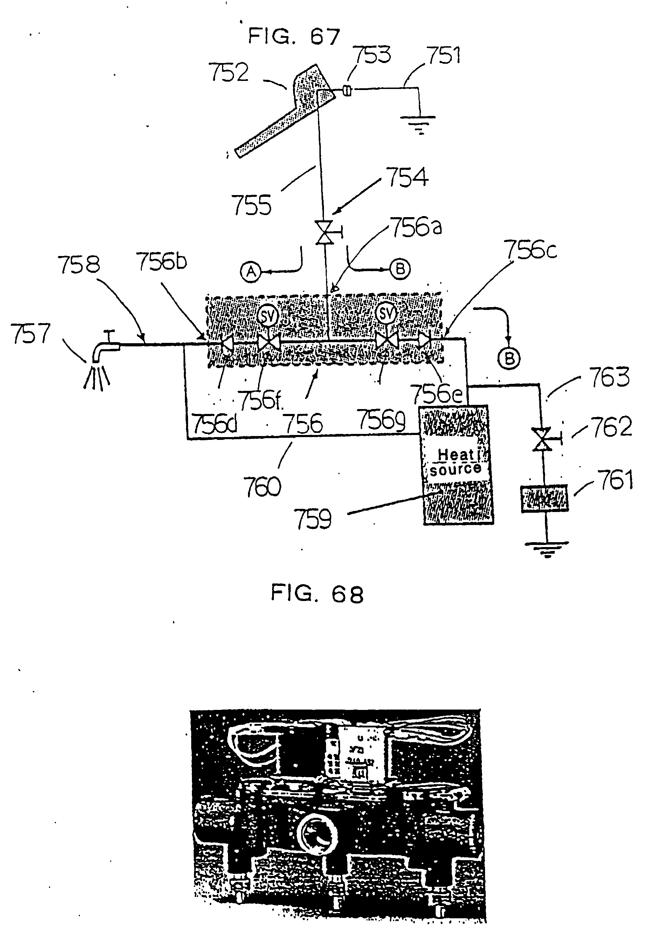

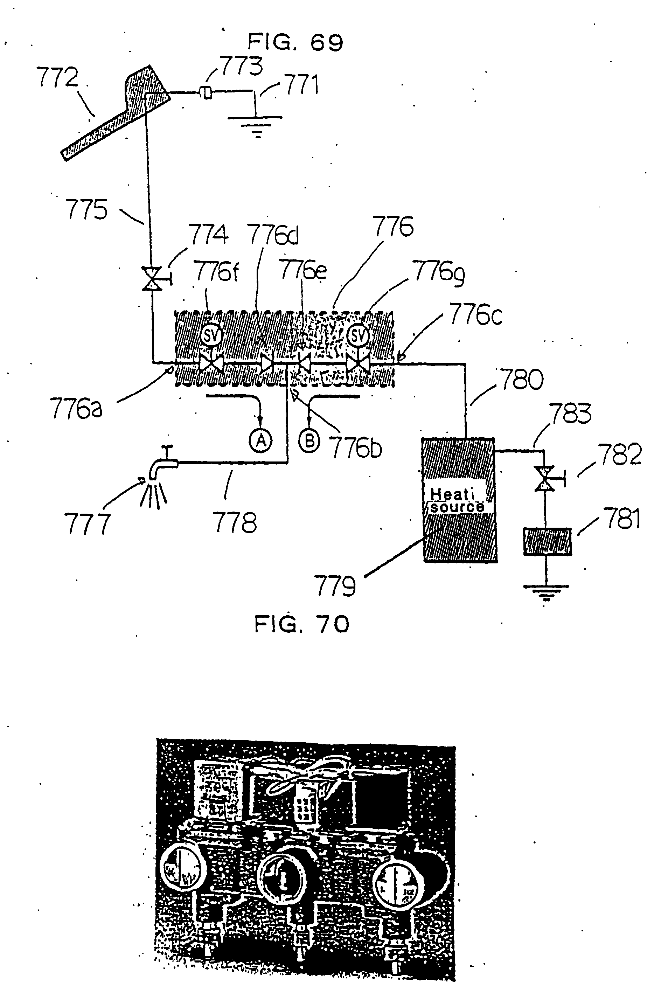

The embodiment of the present invention has characteristic features in the points that flow channel units 756 and 776 shown in Figs. 67 to 70 have any of the crystal structure of the following (1) to (3), and molded by forging.

(1) It is a two phase of an $\alpha+\beta$ phase, an areal ratio of a $\beta$ phase is 15% or more, average crystal grain sizes of $\alpha$ and $\beta$ phases are 15 $\mu$m or less, and an Sn concentration in the $\beta$ phase is 8 wt% or more.

(2) It is a two phase of an $\alpha+\gamma$ phase, an areal ratio of a $\gamma$ phase is 3 to 30%, an average crystal grain size of an $\alpha$ phase is 15 $\mu$m or less, an average crystal grain size (a short axis) of the $\gamma$ phase of 8 $\mu$m or less, the $\gamma$ phase is scattered in the grain boundary of the $\alpha$ phase, and an Sn concentration in the $\gamma$ phase is 8 wt% or more.

(3) It is a three phase of an $\alpha+\beta+\gamma$ phase, an areal ratio of an $\alpha$ phase is 44 to 65%, an areal ratio of a $\beta$ phase is 10 to 55%, an areal ratio of a $\gamma$ phase is 1 to 25%, an average crystal grain sizes of $\alpha$, $\beta$ and $\gamma$ phases are 15 $\mu$m or less, the $\alpha$, $\beta$ and $\gamma$ phases exist in dispersed states, an Sn concentration in the $\gamma$ phase is 8 wt% or more and the $\gamma$ phase surrounds the $\beta$ phase.

The crystal structures as mentioned above can be adjusted, under the composition of an apparent Zn content of 37 to 46 wt% and an Sn content of 0.5 to 7.0 wt%, by controlling a cooling rate after forging. Also, Sn concentrations in the $\beta$ and $\gamma$ phases can be adjusted by controlling the cooling rate.

Here, the term "an apparent Zn content" is used in the meaning of "$\{(B+t \cdot Q)/(A+B+t \cdot Q)\}x100$" wherein A is a Cu content [wt%], B is a Zn content [wt%], t is a Zn equivalent of the third element (e.g., Sn), and Q is a content of the third element [wt%].

According to these crystal structures (1) to (3), the following characteristics (A) to (C) can be obtained.

(A) A characteristic that a machining resistance index using a free-cutting brass bar as a standard measured according to Japanese Industrial Standard JIS C-3604 is 80 or more.

(B) When a dezinking test according to Japan Brass Makers Association Technical Standard JBMA T-303 is carried out, a characteristic satisfying the corrosion resistance of the maximum dezinking depth of 100 $\mu$m or less when the maximum dezinking depth direction is parallel to the processing direction, or the maximum dezinking depth of 70 $\mu$m or less when the maximum dezinking depth direction is perpendicular to the processing direction. Incidentally, in the case of forged product, it corresponds to the case where the maximum dezinking depth direction is perpendicular to the processing direction when a dezinking test according to Japan Brass Makers Association Technical Standard JBMA T-303 is carried out, and a characteristic satisfying corrosion resistance of the maximum dezinking depth of 70 $\mu$m or less.

(C) A characteristic that a maximum stress at which a sample is not broken is 180 N/mm2 or more when a cylindrical sample is exposed to an ammoniacal atmosphere above a 14% aqueous ammonia solution for 24 hours while applying a load.

When the machining resistance index of (A) is explained in detail by using Fig. 5. In the cutting test, while cutting a circumferential surface of a round rod-like shaped Sample 1 by a lathe with two different cutting rates of 100 [m/min] and 400 [m/min], a main dividing force Fv was measured. The machining resistance index is a percentage of the main dividing force based on the main dividing force of the free-cutting brass bar which is said to be most excellent in machinability. (machining resistance indexes of respective cutting rates are averaged.)

The SCC resistance test of (B) is, as shown in Fig. 6, to examine occurrence of crack after exposing a cylindrical sample 3 in a NH3 vapor atmosphere for 24 hours under the condition of perpendicularly loading in a glass desiccator 2.

Also, according to the crystal structures (1) to (3), good characteristic in erosion-corrosion resistance is shown. Fig. 7 shows the method of the erosion-corrosion resistance test. In the erosion-corrosion resistance test, as shown in Fig. 7, by using a cylindrical sample 5 having an orifice 4 inside thereof, and after flowing water through the orifice 4 with a flowing rate of 40 m/sec for a predetermined time, a clamping torque to a resin stopper 6 required for sealing the orifice 54 under a water pressure of 4.9x105 Pa (5 Kg/cm2) was measured.

Test results of Fig. 7 are as shown in Fig. 8, and the brass materials of the crystals structures (1) to (3) gave good results as compared with the conventional example. Incidentally, as the conventional example, that containing Sn amount of less than 0.5 wt% was used.

Also, according to the crystal structures (1) to (3) as mentioned above, at the time of forging, (4) at 480 to 650°C, a crystal structure in which an areal ratio of a β phase is 30 to 80%, and an average crystal grain size is 15 μm or less can be obtained, and ductility which can satisfy at least one of characteristics wherein there is no breakage even when a 160% strain is given with a strain rate of 0.00083/sec, there is no breakage even when a 50% strain is given with a strain rate of 0.0083/sec, or there is no breakage even when a 30% strain is given with a strain rate of 0.083/sec can be realized.

According to this, when forging is carried out at a temperature of 650°C or less, sufficient elongation can be ensured, and dezinking or attachment of an oxidation film which cause by a high temperature forging at 700°C or higher can be inhibited whereby a polishing step after forging can be omitted.

Moreover, by making an Sn content 1.5 to 4.0 wt%, (5) at 300 to 550°C, a crystal structure in which a ratio of an α phase is 44 to 65%, a ratio of a β phase is 10 to 55%, a ratio of a γ phase is 1 to 25%, and an average crystal grain size is 15 μm or less, and ductility which can satisfy at least one of characteristics wherein there is no breakage even when a 50% strain is given with a strain rate of 0.00083/sec, there is no breakage even when a 25% strain is given with a strain rate of 0.0083/sec, or there is no breakage even when a 30% strain is given with a strain rate of 0.083/sec can be realized.

According to this, even when the material is forged at the temperature of 550°C or lower, high ductility can be obtained, so that dezinking or attachment of an oxidized film can be further reduced.

A shape and a size (a distance between the marked points: 12 mm, outer diameter: ∅ 2.5 mm) of the test piece with regard to these characteristics are shown in Fig. 2, and the test conditions are shown in Fig. 3. Used tensile testing machine is a mechanical one, heating is carried out by an electric heater and an atmosphere is made in air.

Fig. 4 shows a relationship between the temperature and elongation, and it can be understood the crystal structure (5) shows high elongation as compared with the conventional example at 450°C. Here, as the conventional example, a material which has a crystal structure of an α+β and β <25%, average grain size> of 15 μm was used.

## Claims

1. A forged brass product excellent in corrosion resistance, etc., which is produced through

    a first step of preparing a brass material,
    a second step of subjecting the brass material to forging after heating, and
    a third step of controlling at least one of corrosion resistance, SCC resistance, erosion-corrosion resistance, machinability and strength after cooling by controlling cooling rate after forging.

2. The forged brass product excellent in corrosion resistance according to Claim 1, wherein the brass material prepared in the above-mentioned first step has an Sn content of 0.7 to 7 wt%.

3. A flow channel forming member comprising the forged brass product according to Claim 2, wherein a hollow portion is formed by forging in the above-mentioned second step, and

    a fourth step of penetrating said hollow portion by machining processing after the above-mentioned third step.

4. A forged brass product, which is produced through

    a first step of preparing a brass material having an apparent Zn content of 37 to 46 wt%, and
    a second step of heating the brass material, and then, applying to forging, preferably warm or hot forging, said forged brass product has a crystal structure in which it is an α+β phase, an areal ratio of a β phase is 15% or more, preferably 20% or more, and average crystal grain sizes of an α phase and a β phase are 15 μm or less, preferably 10μm or less.

5. A forged brass product, which is produced through

    a first step of preparing a brass material having an apparent Zn content of 37 to 46 wt% and an Sn content of 0.7 to 7 wt%, and
    a second step of heating the brass material, and then, applying to forging,
    and said forged brass product satisfies at least one of the crystal structure shown in the following (1) to (3):

    (1) a crystal structure wherein it is an α+β phase, an areal ratio of a β phase is 20% or more, average crystal grain sizes of an α phase and a β phase are 15 μm or less, and an Sn concentration in the β phase is 1.5 wt% or more,
    (2) a crystal structure wherein it is an α+γ phase, an areal ratio of a γ phase is 3 to 30%, an average crystal grain size of an α phase is 15 μm or less, an average crystal grain size (a short axis) of the γ phase is 8 μm or less, an Sn concentration in the γ phase is 8 wt% or more, and the γ phase is scattered in the grain boundary of the α phase; and

(3) a crystal structure wherein it is an α+β+γ phase, an areal ratio of an α phase is 40 to 94%, areal ratios of a β phase and a γ phase are both 3 to 30%, average crystal grain sizes of an α phase and a β phase are 15 µm or less, an average crystal grain size (a short axis) of the γ phase is 8 µm or less, an Sn concentration in the γ phase is 8 wt% or more and the γ phase surrounds the β phase.

6. A machined brass product excellent in corrosion resistance produced by

a first step of preparing a brass material having an apparent Zn content of 37 to 46 wt% and an Sn content of 1.7 to 2.2 wt%, and
a second step of applying machining processing to this brass material.

7. A machined brass product produced by

a first step of preparing a brass material satisfying at least one crystal structure among the crystal structures (1) to (3) shown below, and
a second step of applying machining processing to this brass material

(1) a crystal structure wherein it is an α+β phase, an areal ratio of a β phase is 15% or more, and average crystal grain sizes of an α phase and a β phase are 15 µm or less,
(2) a crystal structure wherein it is an α+γ phase, an areal ratio of a γ phase is 3 to 30%, an average crystal grain size of an α phase is 15 µm or less, an average crystal grain size (a short axis) of the γ phase is 8 µm or less, and the γ phase is scattered in the grain boundary of the α phase; and
(3) a crystal structure wherein it is an α+β+γ phase, an areal ratio of an α phase is 40 to 94%, areal ratios of a β and γ phases are both 3 to 30%, average crystal grain sizes of an α and β phase are 15 µm or less, and an average crystal grain size (a short axis) of the γ phase is 8 µm or less.

8. A machined brass product produced by

a first step of preparing a brass material satisfying at least one crystal structure among the crystal structures (1) to (3) shown below, and
a second step of applying machining processing to this brass material

(1) a crystal structure wherein areal ratios of an α+β phase and a β phase are 20% or more, average crystal grain sizes of an α phase and a β phase are 15 µm or less, and an Sn concentration in the β phase of 1.5 wt% or more,
(2) a crystal structure wherein areal ratios of an α+γ phase and a γ phase are 3 to 30%, an average crystal grain size of an α phase of 15 µm or less, an average crystal grain size (a short axis) of the γ phase is 8 µm or less, an Sn concentration in the γ phase is 8 wt% or more, and the γ phase is scattered in the grain boundary of the α phase; and
(3) a crystal structure wherein areal ratios of an α+β+γ phase and an α phase are 40 to 94%, areal ratios of a β and γ phases are both 3 to 30%, average crystal grain sizes of an α and β phase are 15 µm or less, an average crystal grain size (a short axis) of the γ phase is 8 µm or less, an Sn concentration in the γ phase is 8 wt% or more, and the β phase is surrounded by the γ phase.

9. A forged brass product excellent in corrosion resistance, wherein the forged brass product excellent in corrosion resistance according to any one of Claims 1, 2 and 5 is used as parts for a flow channel.

10. The forged brass product excellent in corrosion resistance according to Claim 9, which is used as parts for a water flowing channel.

11. A forged brass product excellent in corrosion resistance, wherein the forged brass product excellent in corrosion resistance according to any one of Claims 1, 2 and 5 is used as parts dipping in water.

12. The forged brass product excellent in corrosion resistance according to Claim 11, which is used as water temperature sensor protecting tube.

13. The forged brass product excellent in corrosion resistance according to Claim 9 or 10, which is used as a piping joint.

14. The forged brass product excellent in corrosion resistance according to Claim 13, which is a forged brass material having a screw portion and excellent in machining property and corrosion resistance.

15. The forged brass product excellent in corrosion resistance according to Claim 13 or 14, which is subjected to insert molding to a resin piping.

16. The forged brass product excellent in corrosion resistance according to Claim 9 or 10, which is used as parts for a flow meter.

**17.** The forged brass product excellent in corrosion resistance according to Claim 16, which is used as parts for a tap water meter.

**18.** The forged brass product excellent in corrosion resistance according to Claim 9 or 10, which is used as parts for a pump.

**19.** The forged brass product excellent in corrosion resistance according to Claim 9 or 10, which is used as parts for a valve.

**20.** The forged brass product excellent in corrosion resistance according to Claim 19, which is used for housing.

**21.** The forged brass product excellent in corrosion resistance according to Claim 19, wherein a forged brass product excellent in strength or SCC resistance and excellent in corrosion resistance is used as movable parts.

**22.** The forged brass product excellent in corrosion resistance according to Claim 21, wherein a forged brass product excellent in abrasion resistance and corrosion resistance is used as sliding parts.

**23.** The forged brass product excellent in corrosion resistance according to any one of Claims 19, 21 and 22, which is used as flow amount adjusting parts.

**24.** A forged brass product excellent in erosion-corrosion resistance and corrosion resistance, wherein the forged brass product excellent in corrosion resistance according to any one of Claims 19, 21 and 22 is used as a sheet member of switch valve.

**25.** The forged brass product excellent in corrosion resistance according to Claim 9 or 10, which is used as parts for a water sprayer.

**26.** The forged brass product excellent in corrosion resistance according to Claim 9 or 10, which is used as parts for a sprinkler.

**27.** The forged brass product excellent in corrosion resistance according to Claim 9, which is used as parts for a fuel flow channel.

**28.** The forged brass product excellent in corrosion resistance according to Claim 27, which is used as parts for a gaseous fuel flow channel.

**29.** The forged brass product excellent in corrosion resistance according to Claim 27, which is used as parts for a vaporized fuel flow channel.

**30.** The forged brass product excellent in corrosion resistance according to Claim 27, which is used as parts for a liquid fuel flow channel.

**31.** A forged brass product excellent in corrosion resistance in which oxidation of a fuel is reduced, wherein the forged brass product excellent in corrosion resistance according to any one of Claims 1, 2 and 5 is used as parts dipping in a liquid fuel.

**32.** A forged brass product excellent in strength and corrosion resistance, wherein the forged brass product excellent in corrosion resistance according to any one of Claims 1, 2 and 5 is used as patter for golf.

**33.** A forged brass product excellent in strength or SCC resistance and excellent in corrosion resistance, wherein the forged brass product excellent in corrosion resistance according to any one of Claims 1, 2 and 5 is used as a knob or handle for a door.

**34.** A forged brass product excellent in machining property or strength and excellent in corrosion resistance, wherein the forged brass product excellent in corrosion resistance according to any one of Claims 1, 2 and 5 is used as lock parts.

**35.** A forged brass product excellent in machining property or strength and excellent in corrosion resistance, wherein the forged brass product excellent in corrosion resistance according to any one of Claims 1, 2 and 5 is used as outer parts for a wrist watch.

**36.** A water contacting member wherein the forged brass product excellent in corrosion resistance or a forged brass product excellent in corrosion resistance and machining property according to any one of Claims 1, 2 and 5 is used for uses contacting with water.

**37.** The water contacting member according to Claim 36, wherein a hollow water-flowing channel is formed by forging or machining after forging.

**38.** The water contacting member according to Claim 37, which is a movable member.

**39.** The flow channel-constituting member made of brass according to Claim 3, wherein at least one of the above-mentioned hollow portions is formed at the portion elongated by the above-mentioned warm or hot forging in the above-mentioned second step.

**40.** The flow channel-constituting member made of brass according to Claim 3 or 39, wherein, in the above-mentioned fourth step, a plural number of hollow portions formed in the above-mentioned second step are penetrated.

**41.** The flow channel-constituting member made of brass according to Claim 3 or 39, wherein, in the above-mentioned fourth step, the portion between the hollow portion formed in the above-mentioned second step and the hollow portion formed by machining processing in the above-mentioned fourth step is penetrated.

**42.** The flow channel-constituting member made of brass according to any one of Claims 3, 39, 40 and 41, wherein the above-mentioned hollow portion after penetration comprises a flow channel inlet hole, and a switch valve inserting portion for inserting a switch valve for opening and shutting the flow channel from the flow channel inlet hole to a flow channel outlet hole.

**43.** The flow channel-constituting member made of brass according to Claim 42, wherein an axis of said flow channel inlet hole and an axis of said switch valve inserting hole are substantially coincide to each other, and an axis of said flow channel inlet hole and an axis of said flow channel outlet hole are substantially crossed.

**44.** The flow channel-constituting member made of brass according to Claim 42 or 43, wherein a valve seat to which the switch valve body is to be seated, which is to be inserted into the above-mentioned switch valve inserting hole is formed at an inner wall of the above-mentioned switch valve inserting hole.

**45.** A forged brass product excellent in strength or machining property, wherein it is a forged brass product excellent in corrosion resistance, etc. or a forged brass product according to Claim 1 or 4, which is used as writing implements.

**46.** A forged brass product excellent in strength, machining property, SCC resistance or abrasion resistance, wherein it is a forged brass product excellent in corrosion resistance, etc. or a forged brass product according to Claim 1 or 4, which is used as parts of a wrist watch.

**47.** A forged brass product excellent in strength, machining property, SCC resistance or abrasion resistance, wherein it is a forged brass product excellent in corrosion resistance, etc. or a forged brass product according to Claim 1 or 4, which is used as gear parts.

**48.** The machined brass product excellent in strength, wherein a machined brass product according to Claim 7 is used as a patter for golf.

**49.** A machined brass product excellent in strength or SCC resistance, wherein the machined brass product according to Claim 7 is used as a knob or a handle of a door.

**50.** A machined brass product excellent in strength, wherein the machined brass product according to Claim 7 is used as lock parts.

**51.** A machined brass product excellent in strength or SCC resistance or abrassion resistance, wherein the machined brass product according to Claim 7 is used as parts for a wrist watch.

**52.** A machined brass product excellent in strength, wherein the machined brass product according to Claim 7 is used as writing implements.

**53.** A machined brass product excellent in strength or abrasion resistance, wherein the machined brass product according to Claim 7 is used as gear parts.

**54.** A machined brass product excellent in corrosion resistance, wherein the machined brass product excellent in corrosion resistance, etc. according to Claim 6 or 8, which is used as parts for flow channel.

**55.** The machined brass product excellent in corrosion resistance according to Claim 54, which is used as parts for water flow channel.

**56.** The machined brass product excellent in corrosion resistance according to Claim 54, which is used as parts dipping in water.

**57.** The machined brass product excellent in corrosion resistance according to Claim 56, which is used as a protecting tube of a water temperature sensor.

**58.** The machined brass product excellent in corrosion resistance according to Claim 54 or 55, which is used as piping joint.

**59.** The machined brass product excellent in corrosion resistance according to Claim 58, which has a screw portion.

**60.** The machined brass product excellent in corrosion resistance according to Claim 58 or 59, which is subjected to insert molding to a resin piping.

**61.** The machined brass product excellent in corrosion resistance according to Claim 54 or 55, which is used as parts of a flow meter.

62. The machined brass product excellent in corrosion resistance according to Claim 61, which is used as parts of a tap water meter.

63. The machined brass product excellent in corrosion resistance according to Claim 54 or 55, which is used as parts of a pump.

64. The machined brass product excellent in corrosion resistance according to Claim 54 or 55, which is used as parts of a valve.

65. The machined brass product excellent in corrosion resistance according to Claim 64, which is used for housing.

66. A machined brass product excellent in SCC resistance or strength, and excellent in corrosion resistance, wherein the machined brass product excellent in corrosion resistance according to Claim 64, which is used as a movable member.

67. A machined brass product excellent in abrasion resistance and corrosion resistance, wherein the machined brass product excellent in corrosion resistance according to Claim 66, which is used for a sliding member.

68. The machined brass product excellent in corrosion resistance according to Claim 64, 66 or 67, which is used as feeding amount adjusting member.

69. A machined brass product excellent in erosion-corrosion resistance and corrosion resistance, wherein the machined brass product excellent in corrosion resistance according to Claim 64, 66 or 67, which is used a sheet member of a switch valve.

70. The machined brass product excellent in corrosion resistance according to Claim 54 or 55, which is used as parts for a water sprayer.

71. The machined brass product excellent in corrosion resistance according to Claim 54 or 55, which is used as parts for a sprinkler.

72. The machined brass product excellent in corrosion resistance according to Claim 54, which is used as parts for a fuel flowing channel.

73. The machined brass product excellent in corrosion resistance according to Claim 72, which is used as parts for a gaseous fuel flowing channel.

74. The machined brass product excellent in corrosion resistance according to Claim 72, which is used as parts for a vaporizing fuel flowing channel.

75. The machined brass product excellent in corrosion resistance according to Claim 72, which is used as parts for a liquid fuel flowing channel.

76. The machined brass product excellent in corrosion resistance according to Claim 54, which is used as parts for an air flowing channel.

77. A machined brass product excellent in strength and corrosion resistance, wherein the machined brass product excellent in corrosion resistance according to Claim 76, which is used as parts for tire valve.

78. A machined brass product excellent in erosion-corrosion resistance and corrosion resistance, wherein the machined brass product excellent in corrosion resistance according to Claim 76, which is used as parts for heat-exchange with air for cooling.

79. A machined brass product excellent in corrosion resistance, in which oxidation of a fuel is reduced, wherein the machined brass product excellent in corrosion resistance according to Claim 6 or 8, which is used as parts dipping in liquid fuel.

80. Water-contacting parts made of brass, which is molded by forging.

81. The water-contacting parts made of brass according to Claim 80, wherein an Sn content of said parts made of brass and contacting with water is 1.5 to 4.0 wt%.

82. A pipe joint comprising the parts made of brass and contacting with water according to Claim 80 or 81.

83. A header comprising the parts made of brass and contacting with water according to Claim 80 or 81.

84. In a solar water heating apparatus having a feeding water connecting portion to be connected to a water-feeding tube, a hot water feeding connecting portion to be connected to a hot water feeding tube, a water channel from said feeding water connecting portion to said hot water feeding connecting portion, and a heating portion by solar heat provided between the water channel, said flow channel of the solar water heating apparatus comprises the water-contacting parts made of brass according to Claim 80 or 81.

85. In a sprinkler apparatus having a water-feeding channel, a sprinkler head at the end of the water-feeding channel and a controlling means which controls spreading water from the sprinkler head, said water-feeding channel or the sprinkler head of the sprinkler apparatus comprises the water-contacting parts made of brass according to Claim 80 or 81.

86. In a hot water heating apparatus having a flow channel which circulates hot water, and heating is carried out by heat dissipation of hot water during the flow channel, said flow channel of the hot water heating apparatus comprises the water-contacting parts made of brass according to Claim 80 or 81.

87. In a hot water feeding apparatus having a feeding-water connecting portion to be connected to a water feeding tube, a hot water feeding connecting portion to be connected to a hot water feeding tube, a water channel which passes from said feeding-water connecting portion through the above hot water feeding connecting portion, and a heating portion provided during the water channel, said flow channel of the hot water feeding apparatus comprises the water-contacting parts made of brass according to Claim 80 or 81.

88. In a pressure reducing valve having a valve box having a water outlet and inlet port, a closing member for closing an opening portion of the valve box, a valve rod and a controlling spring, and a water passing pressure at said water outlet port is made constant by moving said valve rod using the controlling spring, at least one of said valve box, closing member and valve rod of the pressure reducing valve comprises the water-contacting parts made of brass according to Claim 80 or 81.

89. In an escape valve having a valve box having a water inlet port, a closing member for closing an opening portion of the valve box, a valve axis and a controlling spring, and increase in pressure of said water inlet port is escaped to outside by moving said valve axis against said controlling spring when an inner pressure is increased, at least one of said valve box, the closing member and the valve axis of the escape valve comprises the water-contacting parts made of brass according to Claim 80 or 81.

90. In a water feeding apparatus having a header to which water is fed, and a plural number of water feeding tubes for water-feeding to various places of a room by being connected to the header, said header of the water feeding apparatus comprises the water-contacting parts made of brass according to Claim 80 or 81.

91. In an air conditioning apparatus having a flow channel which transports a heating medium, and a heat exchanger during the flow channel, said flow channel of the air conditioning apparatus comprises the water-contacting parts made of brass according to Claim 80 or 81.

92. A flow channel member made of brass which is molded by forging.

93. The flow channel member made of brass according to Claim 92, wherein an Sn content of said flow channel member made of brass and contacting with water is 1.5 to 4.0 %.

94. A pipe joint comprising the flow channel member made of brass and contacting with water according to Claim 92 or 93.

95. A header comprising the flow channel member made of brass and contacting with water according to Claim 92 or 93.

96. In a solar water heating apparatus having a feeding water connecting portion to be connected to a water-feeding tube, a hot water feeding connecting portion to be connected to a hot water feeding tube, a water channel from said feeding water connecting portion to said hot water feeding connecting portion, and a heating portion by solar heat provided between the water channel, said flow channel of the solar water heating apparatus comprises the flow channel member made of brass according to Claim 92 or 93.

97. In a hot water heating apparatus having a flow channel which circulates hot water, and heating is carried out by heat dissipation of hot water during the flow channel, said flow channel of the hot water heating apparatus comprises the flow channel member made of brass according to Claim 92 or 93.

98. In a hot water feeding apparatus having a feeding-water connecting portion to be connected to a water feeding tube, a hot water feeding connecting portion to be connected to a hot water feeding tube, a water channel which passes from said feeding-water connecting portion through the above hot water feeding connecting portion, and a heating portion provided during the water channel, said flow channel of the hot water feeding apparatus comprises the flow channel member made of brass according to Claim 92 or 93.

99. In a pressure reducing valve having a valve box having a water outlet and inlet port, a closing member for closing an opening portion of the valve box, a valve rod and a controlling spring, and a water passing pressure at said water outlet port is made constant by moving said valve rod using the controlling spring, at least one of said valve box, closing member and valve rod of the pressure reducing valve comprises the flow channel member made of brass according to Claim 92 or 93.

100. In an escape valve having a valve box having a water inlet port, a closing member for closing an opening portion of the valve box, a valve axis and a controlling spring, and increase in pressure of said water inlet port is escaped to outside by moving said valve axis against said controlling spring when an inner pressure is increased, at least one of said valve box, the closing member and the valve axis of the escape valve comprises the flow channel member made of brass according to Claim 92 or 93.

101. In a water feeding apparatus having a heater to which water is fed, and a plural number of water feeding tubes for water-feeding to various places of a room by being connected to the header, said header of the water feeding apparatus comprises the flow channel member made of brass according to Claim 92 or 93.

102. In an air conditioning apparatus having a flow channel which transports a heating medium, and a heat exchanger during the flow channel, said flow channel of the air conditioning apparatus comprises the water-contacting parts made of brass according to Claim 92 or 93.

# FIG. 1

Step 1 | Preparing brass material

Step 2 | Hot or warm forging

Step 3 | Cooling rate control

Step 4 | Cutting processing

Step 5 | Assembling

FIG. 2

FIG. 3

| Temperature (°C) | Temperature raising time (min) | Retaining time (min) | Initial strain rate (sec⁻¹) |
|---|---|---|---|
| 400~650 | 10 | 5 | $8.3 \times 10^{-4}, 10^{-3}, 10^{-2}$ |

# FIG. 4

(1) $\dot{\varepsilon} = 8.3 \times 10^{-4}$

Crystal structure
Conventional example

(2) $\dot{\varepsilon} = 8.3 \times 10^{-3}$

(3) $\dot{\varepsilon} = 8.3 \times 10^{-2}$

High temperature tensile test

- Relationship between temperature and elongation

## FIG. 5

Fv  Main dividing force
Ff  Feed dividing force
Fp  Back dividing force
R   Combined force

## FIG. 6

Load

$NH_3$ 14% aqueous solution

## FIG. 7

Measure clamping torque

Flow rate 40m/sec

Water

Water

## FIG. 8

Clamping torque (N·m)

Water passing time (hr)

FIG. 9

FIG. 10

20

20

## FIG. 11

30

32

31

30

32

31

33

Forging

Cutting

Cutting

34

FIG. 12

50

51

Forging          Machining processing          51

# FIG. 13

Forging

Machining processing

FIG. 14

FIG. 15

FIG. 16

Forging

Machining processing

## FIG. 17

140

141

142

143

144

Forging

Machining processing

143

# FIG. 18

160

161

Forging    Machining processing    161

FIG. 19

## FIG. 20

180

181

182

181

Forging

Machining processing

FIG. 21

190

191

191

FIG. 22

FIG. 23

210

211

212

FIG. 24

220

221

222

223

224

225

FIG. 25

232

230

233

231

233

Joint

Recession

231

FIG. 26

240

241

FIG. 27

250

Forging    Machining processing    251

252

Unit insertion

# FIG. 28

Forging  Drilling  Slitting

FIG. 29

Hot forging·
Deburring

## FIG. 30

Manual transmission

280

281

Extrusion

Cutting

Forging

Cutting

FIG. 31

## FIG. 32

340

341

343

342

341

Soldering

341

341

Caulking

341

341

Soldering

343    342

FIG. 33

FIG. 34

(Base)

(Chuck)  Cutting  Drilling  Slitting  361

Drilling  Threading

Cutting

Cuttimg tool

361

FIG. 35

Drilling
Threading

Cutting

Cutting tool

## FIG. 36

(a)

```
┌───┬──────────────────┐
│ 1 │ Preparing        │
│   │ brass material   │
└───┴──────────────────┘
          ↓
┌───┬──────────────────┐
│ 2 │     Heating      │
└───┴──────────────────┘
          ↓
┌───┬──────────────────┐
│ 3 │     Forging      │
└───┴──────────────────┘
          ↓
┌───┬──────────────────┐
│ 4 │     Cooling      │
└───┴──────────────────┘
          ↓
┌───┬──────────────────┐
│ 5 │    Deburring     │
└───┴──────────────────┘
          ↓
┌───┬──────────────────┐
│ 6 │ Acid  washing    │
│   │ blast  shot      │
└───┴──────────────────┘
          ↓
┌───┬──────────────────┐
│ 7 │ Crystal control  │
│   │ by annealing     │
└───┴──────────────────┘
          ↓
┌───┬──────────────────┐
│ 8 │ Cutting          │
│   │ processing       │
└───┴──────────────────┘
```

(b)

```
┌───┬──────────────────┐
│ 1 │ Preparing        │
│   │ brass material   │
└───┴──────────────────┘
          ↓
┌───┬──────────────────┐
│ 2 │     Heating      │
└───┴──────────────────┘
          ↓
┌───┬──────────────────┐
│ 3 │     Forging      │
└───┴──────────────────┘
          ↓
┌───┬──────────────────┐
│ 4 │ Crystal control  │
│   │ by cooling rate  │
└───┴──────────────────┘
          ↓
┌───┬──────────────────┐
│ 5 │    Deburring     │
└───┴──────────────────┘
          ↓
┌───┬──────────────────┐
│ 6 │ Acid washing     │
│   │ blast shot       │
└───┴──────────────────┘
          ↓
┌───┬──────────────────┐
│ 8 │ Cutting          │
│   │ processing       │
└───┴──────────────────┘
```

FIG. 37

380

381

382

384

383

385

385

FIG. 38

(a)

(b)

(c)

(d)

FIG. 39

# FIG. 40

( a )

( b )

412      411

412

412

( c )

( d )

FIG. 41

420

428

427

421

426

424    422

425    423

423

# FIG. 42

( a )

( b )

431

432

( c )

( d )

FIG. 43

FIG. 44

(a)                    (b)

FIG. 45

450

466  464  y
465       453
471            467
474  469          456   458    463
475                                    x
z
454                                    461
470                        451
457      468      459  452  455  460
472  473                462

# FIG. 46

(a)

i — Preparing brass material

↓

ii — Heating

↓

iii — Forging

↓

iv — Cooling

↓

v — Deburring

↓

vi — Acid washing

↓

vii — Shot blast

↓

viii — Crystal control by annealing

↓

ix — Cutting processing

(b)

Preparing brass material — i'

↓

Heating — ii'

↓

Forging — iii'

↓

Crystal control by cooling rate — iv'

↓

Deburring — v'

↓

Acid washing — vi'

↓

Shot blast — vii'

↓

Cutting processing — viii'

FIG. 47

FIG. 48

FIG. 49

# FIG. 50

FIG. 51

FIG. 52

508

508a

508b

508a 508b

FIG. 53

511

Hot water appartatus

512

513a
513b
513c
513d
513e

FIG. 54

518

518

FIG. 55

FIG. 56

621

621a
621b
621c
621d

FIG. 57

622

622a

622g
622f
622e
622d
622c

622b

FIG. 58

FIG. 59

# FIG. 60

# FIG. 61

FIG. 62

FIG. 63

685

692

693

691

690

695        694

FIG. 64

683

704

703

705

706

700

701

702

709

708

707

FIG. 65

FIG. 66

722a  722b  722c  722

711a

724a
724b
724c
724

FIG. 67

752    753    751

755    754

756a

758    756b    756c

757    A    B

B

756f    756d    756    756g    756e    759

Heat source

763

762

761

760

FIG. 68

FIG. 69

FIG. 70

# INTERNATIONAL SEARCH REPORT

| International application No. |
|---|
| PCT/JP98/05021 |

**A. CLASSIFICATION OF SUBJECT MATTER**
Int.Cl⁶ C22F1/08, C22C9/04, B21J1/02

According to International Patent Classification (IPC) or to both national classification and IPC

**B. FIELDS SEARCHED**

Minimum documentation searched (classification system followed by classification symbols)
Int.Cl⁶ C22F1/08, C22C9/04, B21J1/02

Documentation searched other than minimum documentation to the extent that such documents are included in the fields searched

| | | | |
|---|---|---|---|
| Jitsuyo Shinan Koho | 1926-1996 | Jitsuyo Shinan Koho | 1994-1998 |
| Jitsuyo Shinan Koho | 1971-1998 | Jitsuyo Shinan Koho | 1996-1998 |

Electronic data base consulted during the international search (name of data base and, where practicable, search terms used)
JOIS Oudou &, Netsukan Tanzou &, Tanzou &, Reikyaku Sokudo &,
Sessakusei &, Hisakusei &, Datsuaen &

**C. DOCUMENTS CONSIDERED TO BE RELEVANT**

| Category* | Citation of document, with indication, where appropriate, of the relevant passages | Relevant to claim No. |
|---|---|---|
| Y | "Blank (in Japanese)", Vol. 28, No. 5, PP.23-31 (1996), Page 24, left column, line 18 to page 26, left column, line 6 ; page 26, right column, line 6 to page 29, right column, line 3 | 1-102 |
| Y | JP, 55-141552, A (The Furukawa Electric Co., Ltd.), 5 November, 1980 (05. 11. 80), Claims ; column 1, line 18 to column 3, line 7 (Family: none) | 1-102 |
| A | JP, 3-110042, A (Japan Energy Corp.), 10 May, 1991 (10. 05. 91) (Family: none) | 1-102 |
| A | JP, 60-56037, A (Dowa Mining Co., Ltd.), 1 April, 1985 (01. 04. 85) (Family: none) | 1-102 |
| A | JP, 57-51233, A (Kitazawa Valve K.K.), 26 March, 1982 (26. 03. 82) (Family: none) | 1-102 |
| A | JP, 54-160560, A (Fuji Shindo K.K.), 19 December, 1979 (29. 12. 79) (Family: none) | 1-102 |

☐ Further documents are listed in the continuation of Box C.    ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
|---|---|
| 2 February, 1999 (02. 02. 99) | 16 February, 1999 (16. 02. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)